(19) Europäisches Patentamt / European Patent Office / Office européen des brevets

(11) **EP 4 262 114 A1**

(12) **EUROPEAN PATENT APPLICATION**
published in accordance with Art. 153(4) EPC

(43) Date of publication:
**18.10.2023 Bulletin 2023/42**

(21) Application number: **20967922.4**

(22) Date of filing: **31.12.2020**

(51) International Patent Classification (IPC):
**H04L 1/00** (2006.01)

(52) Cooperative Patent Classification (CPC):
**H04L 1/00**

(86) International application number:
**PCT/CN2020/142532**

(87) International publication number:
**WO 2022/141584 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **FU, Kai**
  **Shenzhen, Guangdong 518129 (CN)**
• **LI, Zhiping**
  **Shenzhen, Guangdong 518129 (CN)**
• **YU, Zhan**
  **Shenzhen, Guangdong 518129 (CN)**

(74) Representative: **Maiwald GmbH
Engineering
Elisenhof
Elisenstrasse 3
80335 München (DE)**

(54) **BLUETOOTH COMMUNICATION METHOD AND APPARATUS**

(57) This application relates to the wireless communication field, and discloses a Bluetooth communication method and an apparatus. Before a first data field in a first Bluetooth data frame, a first synchronization code whose at least one of autocorrelation or cross-correlation is better than that of a first access code is inserted, so that a success rate of synchronization detection at a receive end can be improved, and a success rate of data receiving can be further improved.

FIG. 3

FIG. 4

## Description

## TECHNICAL FIELD

This application relates to the wireless communication field, and in particular, to a Bluetooth (Bluetooth) communication method and an apparatus.

## BACKGROUND

Bluetooth is a short-distance wireless transmission technology, and can be widely applied to a plurality of terminals, for example, a smartphone, a wireless headset, or a wearable device. Currently, a plurality of Bluetooth modes and rates are defined in a Bluetooth standard. For example, a Bluetooth basic rate (basic rate, BR) mode and a Bluetooth low energy (Bluetooth low energy, BLE) 1 Mbps mode use a Gaussian frequency-shift (Gaussian frequency shift keying, GFSK) modulation manner, occupy a 1 MHz signal bandwidth, and can provide a rate of 1 Mbps; a Bluetooth enhanced rate (enhanced data rate, EDR) mode uses a differential phase shift (differential phase shift keying, DPSK) modulation manner, occupies a 1 MHz signal bandwidth, and can provide rates of 2 Mbps and 3 Mbps; and a BLE 2 Mbps mode uses a modulation manner the same as that used by the BLE 1 Mbps mode, and can reach a rate of 2 Mbps.

In a Bluetooth communication system, when a terminal transmits data in any Bluetooth mode, a data frame includes a preamble (preamble), an access code (access code, AC), and a payload (payload). The preamble is used for automatic gain control (automatic gain control, AGC) adjustment and signal processing. The payload includes data to be transmitted. The AC is used for synchronization detection. For example, after successfully receiving the AC, a receive end is synchronized successfully, and continues to receive subsequent information (for example, a payload). If the receive end does not detect the AC until the end of a current frame, the receive end fails to be synchronized and the current frame is lost. Therefore, how to improve a success rate of synchronization detection at the receive end is crucial to avoid a frame loss and improve a success rate of data receiving.

This application provides a Bluetooth communication method and an apparatus, so that a success rate of synchronization detection at a receive end can be improved, and a success rate of data receiving can be further improved.

To achieve the foregoing objectives, the following technical solutions are used in embodiments of this application.

According to a first aspect, an embodiment of this application provides a Bluetooth communication method. The method includes: A Bluetooth sending apparatus generates a first Bluetooth data frame, and the Bluetooth sending apparatus sends the first Bluetooth data frame to a Bluetooth receiving apparatus. The first Bluetooth data frame includes a first access code, a first synchronization code, and a first data field, where the first synchronization code is located before the first data field, and at least one of autocorrelation or cross-correlation of the first synchronization code is better than that of the first access code.

According to the method provided in the first aspect, the first synchronization code may be inserted into the first Bluetooth data frame. In this case, the Bluetooth receiving apparatus may perform synchronization detection based on the first synchronization code. Because at least one of the autocorrelation or the cross-correlation of the first synchronization code is better than that of the first access code, a success rate of synchronization detection can be improved, and a success rate of data receiving can be further improved. In addition, according to the method provided in the first aspect, when success rates of receiving data by the Bluetooth receiving apparatus are the same, a transmit power used by the Bluetooth sending apparatus to send the first Bluetooth data frame may be further reduced, and use duration of the Bluetooth sending apparatus may be further prolonged. Because when the Bluetooth sending apparatus sends the first Bluetooth data frame by using a lower transmit power, a success rate of receiving data by the Bluetooth receiving apparatus may reach a success rate of receiving data by the Bluetooth receiving apparatus when the Bluetooth sending apparatus sends the first Bluetooth data frame by using a normal transmit power.

In a possible implementation, the first synchronization code is a pseudo-random sequence. It may be understood that both autocorrelation and cross-correlation of the pseudo-random sequence are excellent. Therefore, using the pseudo-random sequence as the first synchronization code can improve a success rate of synchronization detection, and further can improve a success rate of data receiving.

In a possible implementation, the first synchronization code is an m-sequence, a gold sequence, or a kasami sequence, so that flexibility of using the first synchronization code can be improved.

In a possible implementation, the method further includes: The Bluetooth sending apparatus obtains a first parameter, and the Bluetooth sending apparatus determines a length of the first synchronization code based on the first parameter, where the length of the first synchronization code is related to the autocorrelation or the cross-correlation of the first synchronization code. The first parameter indicates at least one of a requirement of a Bluetooth service or a communication parameter of Bluetooth communication. According to the foregoing method, the length of the first synchronization code may be determined based on at least one of the requirement of the Bluetooth service or the communication parameter of the Bluetooth communication.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by the service, a transmission distance of the first Bluetooth data frame, or signal strength of an interference signal received by the Bluetooth receiving apparatus. According to the foregoing method, when the data retransmission rate is high, the Bluetooth service requires high reliability, the transmission distance of the first Bluetooth data frame is long, or the signal strength of the interference signal received by the Bluetooth receiving apparatus is strong, the length of the first synchronization code may be appropriately increased, to improve a success rate of synchronization detection. When the data retransmission rate is low, there is no high requirement on the reliability of the Bluetooth service, the transmission distance of the first Bluetooth data frame is short, or the signal strength of the interference signal received by the Bluetooth receiving apparatus is weak, the length of the first synchronization code may be appropriately reduced, so as to reduce power consumption of the Bluetooth sending apparatus and the Bluetooth receiving apparatus while ensuring a success rate of synchronization detection.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame. According to the foregoing method, when the data delay required by the service is short, the transmit power used by the Bluetooth sending apparatus to send the first Bluetooth data frame is low, or the signal-to-noise ratio of the channel for transmitting the first Bluetooth data frame is low, the length of the first synchronization code may be appropriately increased, to improve a success rate of synchronization detection. When a long delay can be tolerated, the transmit power used by the Bluetooth sending apparatus to send the first Bluetooth data frame is high, or the signal-to-noise ratio of the channel for transmitting the first Bluetooth data frame is high, the length of the first synchronization code may be appropriately reduced, so that power consumption of the Bluetooth sending apparatus and the Bluetooth receiving apparatus is reduced while a success rate of synchronization detection is ensured.

In a possible implementation, before generating the first Bluetooth data frame, the method further includes: The Bluetooth sending apparatus negotiates a first random number with the Bluetooth receiving apparatus, where the first random number is used for determining the first synchronization code in a first synchronization code set, and the first synchronization code set includes at least one synchronization code. According to the foregoing method, the Bluetooth sending apparatus and the Bluetooth receiving apparatus may negotiate the first random number for determining the first synchronization code, so as to determine the first synchronization code.

In a possible implementation, that the Bluetooth sending apparatus negotiates a first random number with the Bluetooth receiving apparatus includes: The Bluetooth sending apparatus receives third information from the Bluetooth receiving apparatus, where the third information is used for negotiating the first random number; and the Bluetooth sending apparatus sends fourth information to the Bluetooth receiving apparatus, where the fourth information indicates the first random number. According to the foregoing method, the Bluetooth receiving apparatus may trigger synchronization code negotiation with the Bluetooth sending apparatus, and dynamically adjust the synchronization code in the Bluetooth data frame transmitted between the Bluetooth receiving apparatus and the Bluetooth sending apparatus. In a multi-user scenario, incorrect synchronization is avoided, a success rate of synchronization detection is improved, and power consumption and signaling overheads are reduced.

In a possible implementation, that the Bluetooth sending apparatus negotiates a first random number with the Bluetooth receiving apparatus includes: The Bluetooth sending apparatus sends third information to the Bluetooth receiving apparatus, where the third information is used for negotiating the first random number; and the Bluetooth sending apparatus receives fourth information from the Bluetooth receiving apparatus, where the fourth information indicates the first random number. According to the foregoing method, the Bluetooth sending apparatus may trigger synchronization code negotiation with the Bluetooth receiving apparatus, and dynamically adjust the synchronization code in the Bluetooth data frame transmitted between the Bluetooth receiving apparatus and the Bluetooth sending apparatus. In a multi-user scenario, incorrect synchronization is avoided, a success rate of synchronization detection is improved, and power consumption and signaling overheads are reduced.

In a possible implementation, a quantity of Bluetooth apparatuses around the Bluetooth receiving apparatus and/or the Bluetooth sending apparatus is greater than or equal to a preset first value, and a quantity of synchronization codes in the first synchronization code set is greater than or equal to a preset second value. According to the foregoing method, the Bluetooth sending apparatus and the Bluetooth receiving apparatus may further dynamically adjust a size of the first synchronization code set, to ensure a success rate of synchronization detection and reduce power consumption and signaling overheads in different scenarios.

In a possible implementation, before the Bluetooth sending apparatus generates the first Bluetooth data frame, the method further includes: The Bluetooth sending apparatus negotiates a second random number with the Bluetooth receiving apparatus, where the second random number is used for determining a first time interval, and the first time interval is a time interval for updating a synchronization code in a Bluetooth data frame transmitted between the Bluetooth receiving apparatus and the Bluetooth sending apparatus. According to the foregoing method, the Bluetooth sending apparatus and the Bluetooth receiving apparatus may negotiate the second random number for determining and updating the time interval of the synchronization code in the Bluetooth data frame transmitted between the Bluetooth receiving apparatus and the Bluetooth sending apparatus, so that the synchronization code in the Bluetooth data frame transmitted between the Bluetooth receiving apparatus and the Bluetooth sending apparatus can be periodically updated. Therefore, in a multi-user scenario, incorrect synchronization is avoided, a success rate of synchronization detection is effectively improved, and power consumption and signaling overheads are reduced.

In a possible implementation, the first Bluetooth data frame further includes N first pilots, the first pilot is a pilot with a known phase, and N is a positive integer. According to the foregoing method, the N first pilots whose phases are known may be inserted into the first Bluetooth data frame. In this case, the Bluetooth receiving apparatus may detect, based on the first pilot, at least one of a channel phase or a channel amplitude of the channel for transmitting the first Bluetooth data frame. Receiving performance of the Bluetooth receiving apparatus can be improved. In addition, a process of detecting the channel phase and/or the channel amplitude of the channel for transmitting the first Bluetooth data frame can be further simplified.

In a possible implementation, in the first Bluetooth data frame, the first pilot is inserted into at least one of the following: the first access code, the first synchronization code, or the first data field. According to the foregoing method, receiving performance of the Bluetooth receiving apparatus can be improved, and the process of detecting the channel phase and/or the channel amplitude of the channel for transmitting the first Bluetooth data frame can be simplified.

In a possible implementation, the method further includes: The Bluetooth sending apparatus obtains a second parameter, and the Bluetooth sending apparatus determines a proportion of the first pilot in the first Bluetooth data frame based on the second parameter. The second parameter indicates at least one of a requirement of the Bluetooth service or a communication parameter of the Bluetooth communication. According to the foregoing method, the proportion of the first pilot in the first Bluetooth data frame may be determined based on at least one of the requirement of the Bluetooth service or the communication parameter of the Bluetooth communication.

In a possible implementation, if the second parameter is greater than or equal to a preset fifth threshold, the proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus. According to the foregoing method, when a channel phase of the channel for transmitting the first Bluetooth data frame changes quickly, the data retransmission rate is high, the Bluetooth service requires high reliability, the transmission distance of the first Bluetooth data frame is long, or the signal strength of the interference signal received by the Bluetooth receiving apparatus is strong, the proportion of the first pilot in the first Bluetooth data frame may be appropriately increased, to improve receiving performance of the Bluetooth receiving apparatus. When a channel phase of the channel for transmitting the first Bluetooth data frame changes slowly, the data retransmission rate is low, there is no high requirement on the reliability of the Bluetooth service, the transmission distance of the first Bluetooth data frame is short, or the signal strength of the interference signal received by the Bluetooth receiving apparatus is weak, the proportion of the first pilot in the first Bluetooth data frame may be appropriately reduced, so that receiving performance of the Bluetooth receiving apparatus is ensured, and signaling overheads are reduced.

In a possible implementation, if the second parameter is less than or equal to a preset fifth threshold, the proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame. According to the foregoing method, when the data delay required by the service is short, the transmit power used by the Bluetooth sending apparatus to send the first Bluetooth data frame is low, the signal-to-noise ratio of the channel for transmitting the first Bluetooth data frame is low, or the error correction capability of the coding scheme of the first Bluetooth data frame is weak, the proportion of the first pilot in the first Bluetooth data frame may be appropriately increased, to improve receiving performance of the Bluetooth receiving apparatus. When a long delay can be tolerated, the transmit power used by the Bluetooth sending apparatus to send the first Bluetooth data frame is high, the signal-to-noise ratio of the channel for transmitting the first Bluetooth data frame is high, or the error correction capability of the coding scheme of the first Bluetooth data frame is strong, the proportion of the first pilot in the first Bluetooth data frame may be appropriately reduced, so that receiving performance of the Bluetooth receiving apparatus is ensured, and signaling overheads are reduced.

In a possible implementation, the N first pilots are the same or different. According to the foregoing method, the first pilot may be flexibly set.

In a possible implementation, before the Bluetooth sending apparatus determines the first Bluetooth data frame, the method further includes: The Bluetooth sending apparatus sends a second Bluetooth data frame to the Bluetooth receiving apparatus, where the second Bluetooth data frame is different from the first Bluetooth data frame; and the Bluetooth sending apparatus negotiates, with the Bluetooth receiving apparatus based on a third parameter, a frame format of the Bluetooth data frame transmitted between the Bluetooth receiving apparatus and the Bluetooth sending apparatus, where the third parameter indicates signal quality of the second Bluetooth data frame or signal strength of an interference signal of the second Bluetooth data frame. According to the foregoing method, the Bluetooth receiving apparatus may negotiate the frame format with the Bluetooth sending apparatus based on the signal quality of the second Bluetooth data frame or the signal strength of the interference signal of the second Bluetooth data frame, to dynamically adjust the frame format of the Bluetooth data frame transmitted between the Bluetooth receiving apparatus and the Bluetooth sending apparatus.

In a possible implementation, that the Bluetooth sending apparatus negotiates, with the Bluetooth receiving apparatus based on a third parameter, a frame format of the Bluetooth data frame transmitted between the Bluetooth receiving apparatus and the Bluetooth sending apparatus includes: The Bluetooth sending apparatus receives first information from the Bluetooth receiving apparatus, where the first information is used for requesting to switch the frame format of the Bluetooth data frame transmitted between the Bluetooth receiving apparatus and the Bluetooth sending apparatus; and the Bluetooth sending apparatus sends second information to the Bluetooth receiving apparatus, where the second information indicates to switch the frame format of the Bluetooth data frame transmitted between the Bluetooth receiving apparatus and the Bluetooth sending apparatus to a frame format of the first Bluetooth data frame. According to the foregoing method, the Bluetooth receiving apparatus may trigger the frame format negotiation with the Bluetooth sending apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves a success rate of receiving data by the Bluetooth receiving apparatus, and reduces power consumption of the Bluetooth sending apparatus and the Bluetooth receiving apparatus, to prolong use duration of the Bluetooth sending apparatus and the Bluetooth receiving apparatus.

In a possible implementation, the second Bluetooth data frame includes a second access code, a second synchronization code, and a second data field, and the third parameter indicates the signal quality of the second Bluetooth data frame; and if the third parameter is greater than or equal to a preset third threshold, the first information is used for requesting to reduce a length of the synchronization code in the Bluetooth data frame transmitted between the Bluetooth receiving apparatus and the Bluetooth sending apparatus; or if the third parameter is less than a preset third threshold, the first information is used for requesting to increase a length of the synchronization code in the Bluetooth data frame transmitted between the Bluetooth receiving apparatus and the Bluetooth sending apparatus. According to the foregoing method, when the signal quality of the second Bluetooth data frame is good, the length of the synchronization code in the Bluetooth data frame transmitted between the Bluetooth receiving apparatus and the Bluetooth sending apparatus can be reduced, so that power consumption of the Bluetooth sending apparatus and the Bluetooth receiving apparatus can be reduced, to prolong use duration of the Bluetooth sending apparatus and the Bluetooth receiving apparatus. When the signal quality of the second Bluetooth data frame is poor, the length of the synchronization code in the Bluetooth data frame transmitted between the Bluetooth receiving apparatus and the Bluetooth sending apparatus can be increased, to improve a success rate of receiving data by the Bluetooth receiving apparatus.

In a possible implementation, that negotiating, with the Bluetooth receiving apparatus based on a third parameter, a frame format of the Bluetooth data frame transmitted between the Bluetooth receiving apparatus and the Bluetooth sending apparatus includes: sending first information to the Bluetooth receiving apparatus, where the first information is used for requesting to switch the frame format of the Bluetooth data frame transmitted between the Bluetooth receiving apparatus and the Bluetooth sending apparatus; and receiving second information from the Bluetooth receiving apparatus, where the second information indicates to switch the frame format of the Bluetooth data frame transmitted between the Bluetooth receiving apparatus and the Bluetooth sending apparatus to a frame format of the first Bluetooth data frame. According to the foregoing method, the Bluetooth sending apparatus may trigger the frame format negotiation with the Bluetooth receiving apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves a success rate of receiving data by the Bluetooth receiving apparatus, and reduces power consumption of the Bluetooth sending apparatus and the Bluetooth receiving apparatus, to prolong use duration of the Bluetooth sending apparatus and the Bluetooth receiving apparatus.

In a possible implementation, the third parameter indicates the signal strength of the interference signal; and if the third parameter is greater than or equal to a preset fourth threshold, the first information is used for requesting to increase a length of the synchronization code in the Bluetooth data frame transmitted between the Bluetooth receiving apparatus and the Bluetooth sending apparatus; or if the third parameter is less than a preset fourth threshold, the first information is used for requesting to decrease a length of the synchronization code in the Bluetooth data frame transmitted between the Bluetooth receiving apparatus and the Bluetooth sending apparatus. According to the foregoing method, when the signal strength of the interference signal is weak, the length of the synchronization code in the Bluetooth data frame transmitted between the Bluetooth receiving apparatus and the Bluetooth sending apparatus can be reduced, so that power consumption of the Bluetooth sending apparatus and the Bluetooth receiving apparatus can be reduced, to prolong use duration of the Bluetooth sending apparatus and the Bluetooth receiving apparatus. When the signal strength of the interference signal is strong, the length of the synchronization code in the Bluetooth data frame transmitted between the Bluetooth receiving apparatus and the Bluetooth sending apparatus can be increased, to improve a success rate of receiving data by the Bluetooth receiving apparatus.

According to a second aspect, an embodiment of this application provides a Bluetooth communication method. The method includes: A Bluetooth receiving apparatus receives a first Bluetooth data frame from a Bluetooth sending apparatus, where the first Bluetooth data frame includes a first access code, a first synchronization code, and a first data field, where the first synchronization code is located before the first data field, and at least one of autocorrelation or cross-correlation of the first synchronization code is better than that of the first access code; and the Bluetooth receiving apparatus performs synchronization detection based on the first synchronization code.

According to the method provided in the second aspect, the first synchronization code may be inserted into the first Bluetooth data frame. In this case, the Bluetooth receiving apparatus may perform synchronization detection based on the first synchronization code. Because at least one of the autocorrelation or the cross-correlation of the first synchronization code is better than that of the first access code, a success rate of synchronization detection can be improved, and a success rate of data receiving can be further improved. In addition, according to the method provided in the first aspect, when success rates of receiving data by the Bluetooth receiving apparatus are the same, a transmit power used by the Bluetooth sending apparatus to send the first Bluetooth data frame may be further reduced, and use duration of the Bluetooth sending apparatus may be further prolonged. Because when the Bluetooth sending apparatus sends the first Bluetooth data frame by using a lower transmit power, a success rate of receiving data by the Bluetooth receiving apparatus may reach a success rate of receiving data by the Bluetooth receiving apparatus when the Bluetooth sending apparatus sends the first Bluetooth data frame by using a normal transmit power.

In a possible implementation, the first synchronization code is a pseudo-random sequence. It may be understood that both autocorrelation and cross-correlation of the pseudo-random sequence are excellent. Therefore, using the pseudo-random sequence as the first synchronization code can improve a success rate of synchronization detection, and further can improve a success rate of data receiving.

In a possible implementation, the first synchronization code is an m-sequence, a gold sequence, or a kasami sequence, so that flexibility of using the first synchronization code can be improved.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by a service, a transmission distance of the first Bluetooth data frame, or signal strength of an interference signal received by the Bluetooth receiving apparatus. According to the foregoing method, when the data retransmission rate is high, the Bluetooth service requires high reliability, the transmission distance of the first Bluetooth data frame is long, or the signal strength of the interference signal received by the Bluetooth receiving apparatus is strong, the length of the first synchronization code may be appropriately increased, to improve a success rate of synchronization detection. When the data retransmission rate is low, there is no high requirement on the reliability of the Bluetooth service, the transmission distance of the first Bluetooth data frame is short, or the signal strength of the interference signal received by the Bluetooth receiving apparatus is weak, the length of the first synchronization code may be appropriately reduced, so as to reduce power consumption of the Bluetooth sending apparatus and the Bluetooth receiving apparatus while ensuring a success rate of synchronization detection.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame. According to the foregoing method, when the data delay required by the service is short, the transmit power used by the Bluetooth sending apparatus to send the first Bluetooth data frame is low, or the signal-to-noise ratio of the channel for transmitting the first Bluetooth data frame is low, the length of the first synchronization code may be appropriately increased, to improve a success rate of synchronization detection. When a long delay can be tolerated, the transmit power used by the Bluetooth sending apparatus to send the first Bluetooth data frame is high, or the signal-to-noise ratio of the channel for transmitting the first Bluetooth data frame is high, the length of the first synchronization code may be appropriately reduced, so that power consumption of the Bluetooth sending apparatus and the Bluetooth receiving apparatus is reduced while a success rate of synchronization detection is ensured.

In a possible implementation, before the Bluetooth receiving apparatus receives the first Bluetooth data frame from the Bluetooth sending apparatus, the method further includes: The Bluetooth receiving apparatus negotiates a first random number with the Bluetooth sending apparatus, where the first random number is used for determining a first synchronization code from a first synchronization code set, and the first synchronization code set includes at least one synchronization code. According to the foregoing method, the Bluetooth sending apparatus and the Bluetooth receiving apparatus may negotiate the first random number for determining the first synchronization code, so as to determine the first synchronization code.

In a possible implementation, that the Bluetooth receiving apparatus negotiates a first random number with the Bluetooth sending apparatus includes: The Bluetooth receiving apparatus sends third information to the Bluetooth sending apparatus, where the third information is used for negotiating the first random number; and the Bluetooth receiving apparatus receives fourth information from the Bluetooth sending apparatus, where the fourth information indicates the first random number. According to the foregoing method, the Bluetooth receiving apparatus may trigger synchronization code negotiation with the Bluetooth sending apparatus, and dynamically adjust the synchronization code in the Bluetooth data frame transmitted between the Bluetooth receiving apparatus and the Bluetooth sending apparatus. In a multi-user scenario, incorrect synchronization is avoided, a success rate of synchronization detection is improved, and power consumption and signaling overheads are reduced.

In a possible implementation, that the Bluetooth receiving apparatus negotiates a first random number with the Bluetooth sending apparatus includes: The Bluetooth receiving apparatus receives third information sent by the Bluetooth sending apparatus, where the third information is used for negotiating the first random number; and the Bluetooth receiving apparatus sends fourth information to the Bluetooth sending apparatus, where the fourth information indicates the first random number. According to the foregoing method, the Bluetooth sending apparatus may trigger synchronization code negotiation with the Bluetooth receiving apparatus, and dynamically adjust the synchronization code in the Bluetooth data frame transmitted between the Bluetooth receiving apparatus and the Bluetooth sending apparatus. In a multi-user scenario, incorrect synchronization is avoided, a success rate of synchronization detection is improved, and power consumption and signaling overheads are reduced.

In a possible implementation, a quantity of Bluetooth apparatuses around the Bluetooth receiving apparatus and/or the Bluetooth sending apparatus is greater than or equal to a preset first value, and a quantity of synchronization codes in the first synchronization code set is greater than or equal to a preset second value. According to the foregoing method, the Bluetooth sending apparatus and the Bluetooth receiving apparatus may further dynamically adjust a size of the first synchronization code set, to ensure a success rate of synchronization detection and reduce power consumption and signaling overheads in different scenarios.

In a possible implementation, before the Bluetooth receiving apparatus receives the first Bluetooth data frame from the Bluetooth sending apparatus, the method further includes: The Bluetooth receiving apparatus negotiates a second random number with the Bluetooth sending apparatus, where the second random number is used for determining a first time interval, and the first time interval is a time interval for updating a synchronization code in a Bluetooth data frame transmitted between the Bluetooth receiving apparatus and the Bluetooth sending apparatus. According to the foregoing method, the Bluetooth sending apparatus and the Bluetooth receiving apparatus may further negotiate the first time interval, so that the synchronization code in the Bluetooth data frame transmitted between the Bluetooth receiving apparatus and the Bluetooth sending apparatus can be periodically updated. Therefore, in a multi-user scenario, incorrect synchronization is avoided, a success rate of synchronization detection is effectively improved, and power consumption and signaling overheads are reduced.

In a possible implementation, the first Bluetooth data frame further includes N first pilots, the first pilot is a pilot with a known phase, and N is a positive integer.

According to the foregoing method, the N first pilots whose phases are known may be inserted into the first Bluetooth data frame. In this case, the Bluetooth receiving apparatus may detect, based on the first pilot, a channel phase and/or a channel amplitude of the channel for transmitting the first Bluetooth data frame. Receiving performance of the Bluetooth receiving apparatus can be improved. In addition, a process of detecting the channel phase and/or the channel amplitude of the channel for transmitting the first Bluetooth data frame can be further simplified.

In a possible implementation, in the first Bluetooth data frame, the first pilot is inserted into at least one of the following: the first access code, the first synchronization code, or the first data field. According to the foregoing method, the first pilot may be inserted into at least one of the first access code, the first synchronization code, or the first data field, so as to improve receiving performance of the Bluetooth receiving apparatus, and simplify the process of detecting the channel phase and/or the channel amplitude of the channel for transmitting the first Bluetooth data frame.

In a possible implementation, if the second parameter is greater than or equal to a preset fifth threshold, a proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus. According to the foregoing method, when a channel phase of the channel for transmitting the first Bluetooth data frame changes quickly, the data retransmission rate is high, the Bluetooth service requires high reliability, the transmission distance of the first Bluetooth data frame is long, or the signal strength of the interference signal received by the Bluetooth receiving apparatus is strong, the proportion of the first pilot in the first Bluetooth data frame may be appropriately increased, to improve receiving performance of the Bluetooth receiving apparatus. When a channel phase of the channel for transmitting the first Bluetooth data frame changes slowly, the data retransmission rate is low, there is no high requirement on the reliability of the Bluetooth service, the transmission distance of the first Bluetooth data frame is short, or the signal strength of the interference signal received by the Bluetooth receiving apparatus is weak, the proportion of the first pilot in the first Bluetooth data frame may be appropriately reduced, so that receiving performance of the Bluetooth receiving apparatus is ensured, and signaling overheads are reduced.

In a possible implementation, if the second parameter is less than or equal to a preset fifth threshold, a proportion of the first pilot in the first Bluetooth data frame is greater than or equal to a third proportion; and if the second parameter is greater than or equal to a preset sixth threshold, a proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame. According to the foregoing method, when the data delay required by the service is short, the transmit power used by the Bluetooth sending apparatus to send the first Bluetooth data frame is low, the signal-to-noise ratio of the channel for transmitting the first Bluetooth data frame is low, or the error correction capability of the coding scheme of the first Bluetooth data frame is weak, the proportion of the first pilot in the first Bluetooth data frame may be appropriately increased, to improve receiving performance of the Bluetooth receiving apparatus. When a long delay can be tolerated, the transmit power used by the Bluetooth sending apparatus to send the first Bluetooth data frame is high, the signal-to-noise ratio of the channel for transmitting the first Bluetooth data frame is high, or the error correction capability of the coding scheme of the first Bluetooth data frame is strong, the proportion of the first pilot in the first Bluetooth data frame may be appropriately reduced, so that receiving performance of the Bluetooth receiving apparatus is ensured, and signaling overheads are reduced.

In a possible implementation, the N first pilots are the same or different. According to the foregoing method, the first pilot may be flexibly set.

In a possible implementation, before the Bluetooth receiving apparatus receives the first Bluetooth data frame from the Bluetooth sending apparatus, the method further includes: The Bluetooth receiving apparatus receives a second Bluetooth data frame from the Bluetooth sending apparatus, where the second Bluetooth data frame is different from the first Bluetooth data frame; and the Bluetooth receiving apparatus negotiates, with the Bluetooth sending apparatus based on a third parameter, a frame format of the Bluetooth data frame between the Bluetooth receiving apparatus and the Bluetooth sending apparatus, where the third parameter indicates signal quality of the second Bluetooth data frame or signal strength of an interference signal of the second Bluetooth data frame. According to the foregoing method, the Bluetooth receiving apparatus may negotiate the frame format with the Bluetooth sending apparatus based on the signal quality of the second Bluetooth data frame or the signal strength of the interference signal of the second Bluetooth data frame, to dynamically adjust the frame format of the Bluetooth data frame transmitted between the Bluetooth receiving apparatus and the Bluetooth sending apparatus.

In a possible implementation, that the Bluetooth receiving apparatus negotiates, with the Bluetooth sending apparatus based on a third parameter, a frame format of the Bluetooth data frame between the Bluetooth receiving apparatus and the Bluetooth sending apparatus includes: The Bluetooth receiving apparatus sends first information to the Bluetooth sending apparatus, where the first information is used for requesting to switch the frame format of the Bluetooth data frame transmitted between the Bluetooth receiving apparatus and the Bluetooth sending apparatus; and the Bluetooth receiving apparatus receives second information from the Bluetooth sending apparatus, where the second information indicates to switch the frame format of the Bluetooth data frame transmitted between the Bluetooth receiving apparatus and the Bluetooth sending apparatus to a frame format of the first Bluetooth data frame. According to the foregoing method, the Bluetooth receiving apparatus may trigger the frame format negotiation with the Bluetooth sending apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves a success rate of receiving data by the Bluetooth receiving apparatus, and reduces power consumption of the Bluetooth sending apparatus and the Bluetooth receiving apparatus, to prolong use duration of the Bluetooth sending apparatus and the Bluetooth receiving apparatus.

In a possible implementation, the second Bluetooth data frame includes a second preamble, a second access code, a second synchronization code, and a second data field, and the third parameter indicates the signal quality of the second Bluetooth data frame; and if the third parameter is greater than or equal to a preset third threshold, the first information is used for requesting to reduce a length of the synchronization code in the Bluetooth data frame transmitted between the Bluetooth receiving apparatus and the Bluetooth sending apparatus; or if the third parameter is less than a preset third threshold, the first information is used for requesting to increase a length of the synchronization code in the Bluetooth data frame transmitted between the Bluetooth receiving apparatus and the Bluetooth sending apparatus. According to the foregoing method, when the signal quality of the second Bluetooth data frame is good, the length of the synchronization code in the Bluetooth data frame transmitted between the Bluetooth receiving apparatus and the Bluetooth sending apparatus can be reduced, so that power consumption of the Bluetooth sending apparatus and the Bluetooth receiving apparatus can be reduced, to prolong use duration of the Bluetooth sending apparatus and the Bluetooth receiving apparatus. When the signal quality of the second Bluetooth data frame is poor, the length of the synchronization code in the Bluetooth data frame transmitted between the Bluetooth receiving apparatus and the Bluetooth sending apparatus can be increased, to improve a success rate of receiving data by the Bluetooth receiving apparatus.

In a possible implementation, that the Bluetooth receiving apparatus negotiates, with the Bluetooth sending apparatus based on a third parameter, a frame format of the Bluetooth data frame between the Bluetooth receiving apparatus and the Bluetooth sending apparatus includes: The Bluetooth receiving apparatus receives first information from the Bluetooth sending apparatus, where the first information is used for requesting to switch the frame format of the Bluetooth data frame transmitted between the Bluetooth receiving apparatus and the Bluetooth sending apparatus; and the Bluetooth receiving apparatus sends second information to the Bluetooth sending apparatus, where the second information indicates to switch the frame format of the Bluetooth data frame transmitted between the Bluetooth receiving apparatus and the Bluetooth sending apparatus to a frame format of the first Bluetooth data frame. According to the foregoing method, the Bluetooth sending apparatus may trigger the frame format negotiation with the Bluetooth receiving apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves a success rate of receiving data by the Bluetooth receiving apparatus, and reduces power consumption of the Bluetooth sending apparatus and the Bluetooth receiving apparatus, to prolong use duration of the Bluetooth sending apparatus and the Bluetooth receiving apparatus.

In a possible implementation, the third parameter indicates the signal strength of the interference signal; and if the third parameter is greater than or equal to a preset fourth threshold, the first information is used for requesting to increase a length of the synchronization code in the Bluetooth data frame transmitted between the Bluetooth receiving apparatus and the Bluetooth sending apparatus; or if the third parameter is less than a preset fourth threshold, the first information is used for requesting to decrease a length of the synchronization code in the Bluetooth data frame transmitted between the Bluetooth receiving apparatus and the Bluetooth sending apparatus. According to the foregoing method, when the signal strength of the interference signal is weak, the length of the synchronization code in the Bluetooth data frame transmitted between the Bluetooth receiving apparatus and the Bluetooth sending apparatus can be reduced, so that power consumption of the Bluetooth sending apparatus and the Bluetooth receiving apparatus can be reduced, to prolong use duration of the Bluetooth sending apparatus and the Bluetooth receiving apparatus. When the signal strength of the interference signal is strong, the length of the synchronization code in the Bluetooth data frame transmitted between the Bluetooth receiving apparatus and the Bluetooth sending apparatus can be increased, to improve a success rate of receiving data by the Bluetooth receiving apparatus.

According to a third aspect, an embodiment of this application provides a Bluetooth sending apparatus. The apparatus includes a processing module and a transceiver module. The processing module is configured to generate a first Bluetooth data frame, where the first Bluetooth data frame includes a first access code, a first synchronization code, and a first data field, where the first synchronization code is located before the first data field, and at least one of autocorrelation or cross-correlation of the first synchronization code is better than that of the first access code. The transceiver module is configured to send the first Bluetooth data frame to a Bluetooth receiving apparatus.

In a possible implementation, the first synchronization code is a pseudo-random sequence.

In a possible implementation, the first synchronization code is an m-sequence, a gold sequence, or a kasami sequence.

In a possible implementation, the processing module is further configured to obtain a first parameter, where the first parameter indicates at least one of a requirement of a Bluetooth service or a communication parameter of Bluetooth communication; and the processing module is further configured to determine a length of the first synchronization code based on the first parameter, where the length of the first synchronization code is related to the autocorrelation or the cross-correlation of the first synchronization code.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by the service, a transmission distance of the first Bluetooth data frame, or signal strength of an interference signal received by the Bluetooth receiving apparatus.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame.

In a possible implementation, the processing module is further configured to negotiate a first random number with the Bluetooth receiving apparatus, where the first random number is used for determining the first synchronization code in a first synchronization code set, and the first synchronization code set includes at least one synchronization code.

In a possible implementation, the processing module is specifically configured to receive third information from the Bluetooth receiving apparatus through the transceiver module, where the third information is used for negotiating the first random number; and the processing module is further specifically configured to send fourth information to the Bluetooth receiving apparatus through the transceiver module, where the fourth information indicates the first random number.

In a possible implementation, the processing module is specifically configured to send third information to the Bluetooth receiving apparatus through the transceiver module, where the third information is used for negotiating the first random number; and the processing module is further specifically configured to receive fourth information from the Bluetooth receiving apparatus through the transceiver module, where the fourth information indicates the first random number.

In a possible implementation, a quantity of Bluetooth apparatuses around the Bluetooth receiving apparatus and/or the Bluetooth sending apparatus is greater than or equal to a preset first value, and a quantity of synchronization codes in the first synchronization code set is greater than or equal to a preset second value.

In a possible implementation, the processing module is further configured to negotiate a second random number with the Bluetooth receiving apparatus, where the second random number is used for determining a first time interval, and the first time interval is a time interval for updating a synchronization code in a Bluetooth data frame transmitted between the Bluetooth receiving apparatus and the Bluetooth sending apparatus.

In a possible implementation, the first Bluetooth data frame further includes N first pilots, the first pilot is a pilot with a known phase, and N is a positive integer.

In a possible implementation, in the first Bluetooth data frame, the first pilot is inserted into at least one of the following: the first access code, the first synchronization code, or the first data field.

In a possible implementation, the processing module is further configured to obtain a second parameter, where the second parameter indicates at least one of a requirement of the Bluetooth service or a communication parameter of the Bluetooth communication; and the processing module is further configured to determine a proportion of the first pilot in the first Bluetooth data frame based on the second parameter.

In a possible implementation, if the second parameter is greater than or equal to a preset fifth threshold, the proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the third parameter is less than or equal to a preset fifth threshold, the proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

In a possible implementation, the transceiver module is further configured to send a second Bluetooth data frame to the Bluetooth receiving apparatus, where the second Bluetooth data frame is different from the first Bluetooth data frame; and the processing module is further configured to negotiate, with the Bluetooth receiving apparatus based on a third parameter, a frame format of the Bluetooth data frame transmitted between the Bluetooth receiving apparatus and the Bluetooth sending apparatus, where the third parameter indicates signal quality of the second Bluetooth data frame or signal strength of an interference signal of the second Bluetooth data frame.

In a possible implementation, the processing module is specifically configured to receive first information from the Bluetooth receiving apparatus through the transceiver module, where the first information is used for requesting to switch the frame format of the Bluetooth data frame transmitted between the Bluetooth receiving apparatus and the Bluetooth sending apparatus; and the processing module is further specifically configured to send second information to the Bluetooth receiving apparatus through the transceiver module, where the second information indicates to switch the frame format of the Bluetooth data frame transmitted between the Bluetooth receiving apparatus and the Bluetooth sending apparatus to a frame format of the first Bluetooth data frame.

In a possible implementation, the second Bluetooth data frame includes a second access code, a second synchronization code, and a second data field, and the third parameter indicates the signal quality of the second Bluetooth data frame; and if the third parameter is greater than or equal to a preset third threshold, the first information is used for requesting to reduce a length of the synchronization code in the Bluetooth data frame transmitted between the Bluetooth receiving apparatus and the Bluetooth sending apparatus; or if the third parameter is less than a preset third threshold, the first information is used for requesting to increase a length of the synchronization code in the Bluetooth data frame transmitted between the Bluetooth receiving apparatus and the Bluetooth sending apparatus.

In a possible implementation, the processing module is specifically configured to send first information to the Bluetooth receiving apparatus through the transceiver module, where the first information is used for requesting to switch the frame format of the Bluetooth data frame transmitted between the Bluetooth receiving apparatus and the Bluetooth sending apparatus; and the processing module is further specifically configured to receive second information from the Bluetooth receiving apparatus through the transceiver module, where the second information indicates to switch the frame format of the Bluetooth data frame transmitted between the Bluetooth receiving apparatus and the Bluetooth sending apparatus to a frame format of the first Bluetooth data frame.

In a possible implementation, the third parameter indicates the signal strength of the interference signal; and if the third parameter is greater than or equal to a preset fourth threshold, the first information is used for requesting to increase a length of the synchronization code in the Bluetooth data frame transmitted between the Bluetooth receiving apparatus and the Bluetooth sending apparatus; or if the third parameter is less than a preset fourth threshold, the first information is used for requesting to decrease a length of the synchronization code in the Bluetooth data frame transmitted between the Bluetooth receiving apparatus and the Bluetooth sending apparatus.

According to a fourth aspect, an embodiment of this application provides a Bluetooth receiving apparatus. The apparatus includes a transceiver module and a processing module. The transceiver module is configured to receive a first Bluetooth data frame from a Bluetooth sending apparatus, where the first Bluetooth data frame includes a first access code, a first synchronization code, and a first data field, where the first synchronization code is located before the first data field, and at least one of autocorrelation or cross-correlation of the first synchronization code is better than that of the first access code. The processing module is configured to perform synchronization detection based on the first synchronization code.

In a possible implementation, the first synchronization code is a pseudo-random sequence.

In a possible implementation, the first synchronization code is an m-sequence, a gold sequence, or a kasami sequence.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by a service, a transmission distance of the first Bluetooth data frame, or signal strength of an interference signal received by the Bluetooth receiving apparatus.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame.

In a possible implementation, the processing module is further configured to negotiate a first random number with the Bluetooth sending apparatus, where the first random number is used for determining the first synchronization code in a first synchronization code set, and the first synchronization code set includes at least one synchronization code.

In a possible implementation, the processing module is specifically configured to send third information to the Bluetooth sending apparatus through the transceiver module, where the third information is used for negotiating the first random number; and the processing module is further specifically configured to receive fourth information from the Bluetooth sending apparatus through the transceiver module, where the fourth information indicates the first random number.

In a possible implementation, the processing module is specifically configured to receive third information from the Bluetooth sending apparatus through the transceiver module, where the third information is used for negotiating the first random number; and the processing module is further specifically configured to send fourth information to the Bluetooth sending apparatus through the transceiver module, where the fourth information indicates the first random number.

In a possible implementation, a quantity of Bluetooth apparatuses around the Bluetooth receiving apparatus and/or the Bluetooth sending apparatus is greater than or equal to a preset first value, and a quantity of synchronization codes in the first synchronization code set is greater than or equal to a preset second value.

In a possible implementation, the processing module is further configured to negotiate a second random number with the Bluetooth sending apparatus, where the second random number is used for determining a first time interval, and the first time interval is a time interval for updating a synchronization code in a Bluetooth data frame transmitted between the Bluetooth receiving apparatus and the Bluetooth sending apparatus.

In a possible implementation, the first Bluetooth data frame further includes N first pilots, the first pilot is a pilot with a known phase, and N is a positive integer.

In a possible implementation, in the first Bluetooth data frame, the first pilot is inserted into at least one of the following: the first access code, the first synchronization code, or the first data field.

In a possible implementation, if the second parameter is greater than or equal to a preset fifth threshold, a proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the second parameter is less than or equal to a preset fifth threshold, a proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

In a possible implementation, the transceiver module is further configured to receive a second Bluetooth data frame from the Bluetooth sending apparatus, where the second Bluetooth data frame is different from the first Bluetooth data frame; and the processing module is further configured to negotiate, with the Bluetooth sending apparatus based on a third parameter, a frame format of the Bluetooth data frame between the Bluetooth receiving apparatus and the Bluetooth sending apparatus, where the third parameter indicates signal quality of the second Bluetooth data frame or signal strength of an interference signal of the second Bluetooth data frame.

In a possible implementation, the processing module is specifically configured to send first information to the Bluetooth sending apparatus through the transceiver module, where the first information is used for requesting to switch the frame format of the Bluetooth data frame transmitted between the Bluetooth receiving apparatus and the Bluetooth sending apparatus; and the processing module is further specifically configured to receive second information from the Bluetooth sending apparatus through the transceiver module, where the second information indicates to switch the frame format of the Bluetooth data frame transmitted between the Bluetooth receiving apparatus and the Bluetooth sending apparatus to a frame format of the first Bluetooth data frame.

In a possible implementation, the second Bluetooth data frame includes a second preamble, a second access code, a second synchronization code, and a second data field, and the third parameter indicates the signal quality of the second Bluetooth data frame; and if the third parameter is greater than or equal to a preset third threshold, the first information is used for requesting to reduce a length of the synchronization code in the Bluetooth data frame transmitted between the Bluetooth receiving apparatus and the Bluetooth sending apparatus; or if the third parameter is less than a preset third threshold, the first information is used for requesting to increase a length of the synchronization code in the Bluetooth data frame transmitted between the Bluetooth receiving apparatus and the Bluetooth sending apparatus.

In a possible implementation, the processing module is specifically configured to receive first information from the Bluetooth sending apparatus through the transceiver module, where the first information is used for requesting to switch the frame format of the Bluetooth data frame transmitted between the Bluetooth receiving apparatus and the Bluetooth sending apparatus; and the processing module is further specifically configured to send second information to the Bluetooth sending apparatus through the transceiver module, where the second information indicates to switch the frame format of the Bluetooth data frame transmitted between the Bluetooth receiving apparatus and the Bluetooth sending apparatus to a frame format of the first Bluetooth data frame.

In a possible implementation, the third parameter indicates the signal strength of the interference signal; and if the third parameter is greater than or equal to a preset fourth threshold, the first information is used for requesting to increase a length of the synchronization code in the Bluetooth data frame transmitted between the Bluetooth receiving apparatus and the Bluetooth sending apparatus; or if the third parameter is less than a preset fourth threshold, the first information is used for requesting to decrease a length of the synchronization code in the Bluetooth data frame transmitted between the Bluetooth receiving apparatus and the Bluetooth sending apparatus. According to the foregoing method, when the signal strength of the interference signal is weak, the length of the synchronization code in the Bluetooth data frame transmitted between the Bluetooth receiving apparatus and the Bluetooth sending apparatus can be reduced, so that power consumption of the Bluetooth sending apparatus and the Bluetooth receiving apparatus can be reduced, to prolong use duration of the Bluetooth sending apparatus and the Bluetooth receiving apparatus. When the signal strength of the interference signal is strong, the length of the synchronization code in the Bluetooth data frame transmitted between the Bluetooth receiving apparatus and the Bluetooth sending apparatus can be increased, to improve a success rate of receiving data by the Bluetooth receiving apparatus.

According to a fifth aspect, an embodiment of this application provides a Bluetooth sending apparatus. The apparatus includes a processor and a transceiver. The processor is configured to generate a first Bluetooth data frame, where the first Bluetooth data frame includes a first access code, a first synchronization code, and a first data field, where the first synchronization code is located before the first data field, and at least one of autocorrelation or cross-correlation of the first synchronization code is better than that of the first access code. The transceiver is configured to send the first Bluetooth data frame to a Bluetooth receiving apparatus.

In a possible implementation, the first synchronization code is a pseudo-random sequence.

In a possible implementation, the first synchronization code is an m-sequence, a gold sequence, or a kasami sequence.

In a possible implementation, the processor is further configured to obtain a first parameter, where the first parameter indicates at least one of a requirement of a Bluetooth service or a communication parameter of Bluetooth communication; and the processor is further configured to determine a length of the first synchronization code based on the first parameter, where the length of the first synchronization code is related to the autocorrelation or the cross-correlation of the first synchronization code.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by the service, a transmission distance of the first Bluetooth data frame, or signal strength of an interference signal received by the Bluetooth receiving apparatus.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame.

In a possible implementation, the processor is further configured to negotiate a first random number with the Bluetooth receiving apparatus, where the first random number is used for determining the first synchronization code in a first synchronization code set, and the first synchronization code set includes at least one synchronization code.

In a possible implementation, the processor is specifically configured to receive third information from the Bluetooth receiving apparatus through the transceiver, where the third information is used for negotiating the first random number; and the processor is further specifically configured to send fourth information to the Bluetooth receiving apparatus through the transceiver, where the fourth information indicates the first random number.

In a possible implementation, the processor is specifically configured to send third information to the Bluetooth receiving apparatus through the transceiver, where the third information is used for negotiating the first random number; and the processor is further specifically configured to receive fourth information from the Bluetooth receiving apparatus through the transceiver, where the fourth information indicates the first random number.

In a possible implementation, a quantity of Bluetooth apparatuses around the Bluetooth receiving apparatus and/or the Bluetooth sending apparatus is greater than or equal to a preset first value, and a quantity of synchronization codes in the first synchronization code set is greater than or equal to a preset second value.

In a possible implementation, the processor is further configured to negotiate a second random number with the Bluetooth receiving apparatus, where the second random number is used for determining a first time interval, and the first time interval is a time interval for updating a synchronization code in a Bluetooth data frame transmitted between the Bluetooth receiving apparatus and the Bluetooth sending apparatus.

In a possible implementation, the first Bluetooth data frame further includes N first pilots, the first pilot is a pilot with a known phase, and N is a positive integer.

In a possible implementation, in the first Bluetooth data frame, the first pilot is inserted into at least one of the following: the first access code, the first synchronization code, or the first data field.

In a possible implementation, the processor is further configured to obtain a second parameter, where the second parameter indicates at least one of a requirement of the Bluetooth service or a communication parameter of the Bluetooth communication; and the processor is further configured to determine a proportion of the first pilot in the first Bluetooth data frame based on the second parameter.

In a possible implementation, if the second parameter is greater than or equal to a preset fifth threshold, the proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the third parameter is less than or equal to a preset fifth threshold, the proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

In a possible implementation, the transceiver is further configured to send a second Bluetooth data frame to the Bluetooth receiving apparatus, where the second Bluetooth data frame is different from the first Bluetooth data frame; and the processor is further configured to negotiate, with the Bluetooth receiving apparatus based on a third parameter, a frame format of the Bluetooth data frame transmitted between the Bluetooth receiving apparatus and the Bluetooth sending apparatus, where the third parameter indicates signal quality of the second Bluetooth data frame or signal strength of an interference signal of the second Bluetooth data frame.

In a possible implementation, the processor is specifically configured to receive first information from the Bluetooth receiving apparatus through the transceiver, where the first information is used for requesting to switch the frame format of the Bluetooth data frame transmitted between the Bluetooth receiving apparatus and the Bluetooth sending apparatus; and the processor is further specifically configured to send second information to the Bluetooth receiving apparatus through the transceiver, where the second information indicates to switch the frame format of the Bluetooth data frame transmitted between the Bluetooth receiving apparatus and the Bluetooth sending apparatus to a frame format of the first Bluetooth data frame.

In a possible implementation, the second Bluetooth data frame includes a second access code, a second synchronization code, and a second data field, and the third parameter indicates the signal quality of the second Bluetooth data frame; and if the third parameter is greater than or equal to a preset third threshold, the first information is used for requesting to reduce a length of the synchronization code in the Bluetooth data frame transmitted between the Bluetooth receiving apparatus and the Bluetooth sending apparatus; or if the third parameter is less than a preset third threshold, the first information is used for requesting to increase a length of the synchronization code in the Bluetooth data frame transmitted between the Bluetooth receiving apparatus and the Bluetooth sending apparatus.

In a possible implementation, the processor is specifically configured to send first information to the Bluetooth receiving apparatus through the transceiver, where the first information is used for requesting to switch the frame format of the Bluetooth data frame transmitted between the Bluetooth receiving apparatus and the Bluetooth sending apparatus; and the processor is further specifically configured to receive second information from the Bluetooth receiving apparatus through the transceiver, where the second information indicates to switch the frame format of the Bluetooth data frame transmitted between the Bluetooth receiving apparatus and the Bluetooth sending apparatus to a frame format of the first Bluetooth data frame.

In a possible implementation, the third parameter indicates the signal strength of the interference signal; and if the third parameter is greater than or equal to a preset fourth threshold, the first information is used for requesting to increase a length of the synchronization code in the Bluetooth data frame transmitted between the Bluetooth receiving apparatus and the Bluetooth sending apparatus; or if the third parameter is less than a preset fourth threshold, the first information is used for requesting to decrease a length of the synchronization code in the Bluetooth data frame transmitted between the Bluetooth receiving apparatus and the Bluetooth sending apparatus.

According to a sixth aspect, an embodiment of this application provides a Bluetooth receiving apparatus. The apparatus includes a transceiver and a processor. The transceiver is configured to receive a first Bluetooth data frame from a Bluetooth sending apparatus, where the first Bluetooth data frame includes a first access code, a first synchronization code, and a first data field, where the first synchronization code is located before the first data field, and at least one of autocorrelation or cross-correlation of the first synchronization code is better than that of the first access code. The processor is configured to perform synchronization detection based on the first synchronization code.

In a possible implementation, the first synchronization code is a pseudo-random sequence.

In a possible implementation, the first synchronization code is an m-sequence, a gold sequence, or a kasami sequence.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by a service, a transmission distance of the first Bluetooth data frame, or signal strength of an interference signal received by the Bluetooth receiving apparatus.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame.

In a possible implementation, the processor is further configured to negotiate a first random number with the Bluetooth sending apparatus, where the first random number is used for determining the first synchronization code in a first synchronization code set, and the first synchronization code set includes at least one synchronization code.

In a possible implementation, the processor is specifically configured to send third information to the Bluetooth sending apparatus through the transceiver, where the third information is used for negotiating the first random number; and the processor is further specifically configured to receive fourth information from the Bluetooth sending apparatus through the transceiver, where the fourth information indicates the first random number.

In a possible implementation, the processor is specifically configured to receive third information from the Bluetooth sending apparatus through the transceiver, where the third information is used for negotiating the first random number; and the processor is further specifically configured to send fourth information to the Bluetooth sending apparatus through the transceiver, where the fourth information indicates the first random number.

In a possible implementation, a quantity of Bluetooth apparatuses around the Bluetooth receiving apparatus and/or the Bluetooth sending apparatus is greater than or equal to a preset first value, and a quantity of synchronization codes in the first synchronization code set is greater than or equal to a preset second value.

In a possible implementation, the processor is further configured to negotiate a second random number with the Bluetooth sending apparatus, where the second random number is used for determining a first time interval, and the first time interval is a time interval for updating a synchronization code in a Bluetooth data frame transmitted between the Bluetooth receiving apparatus and the Bluetooth sending apparatus.

In a possible implementation, the first Bluetooth data frame further includes N first pilots, the first pilot is a pilot with a known phase, and N is a positive integer.

In a possible implementation, in the first Bluetooth data frame, the first pilot is inserted into at least one of the following: the first access code, the first synchronization code, or the first data field.

In a possible implementation, if the second parameter is greater than or equal to a preset fifth threshold, the proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the second parameter is less than or equal to a preset fifth threshold, the proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

In a possible implementation, the transceiver is further configured to receive a second Bluetooth data frame from the Bluetooth sending apparatus, where the second Bluetooth data frame is different from the first Bluetooth data frame; and the processor is further configured to negotiate, with the Bluetooth sending apparatus based on a third parameter, a frame format of the Bluetooth data frame between the Bluetooth receiving apparatus and the Bluetooth sending apparatus, where the third parameter indicates signal quality of the second Bluetooth data frame or signal strength of an interference signal of the second Bluetooth data frame.

In a possible implementation, the processor is specifically configured to send first information to the Bluetooth sending apparatus through the transceiver, where the first information is used for requesting to switch the frame format of the Bluetooth data frame transmitted between the Bluetooth receiving apparatus and the Bluetooth sending apparatus; and the processor is further specifically configured to receive second information from the Bluetooth sending apparatus through the transceiver, where the second information indicates to switch the frame format of the Bluetooth data frame transmitted between the Bluetooth receiving apparatus and the Bluetooth sending apparatus to a frame format of the first Bluetooth data frame.

In a possible implementation, the second Bluetooth data frame includes a second preamble, a second access code, a second synchronization code, and a second data field, and the third parameter indicates the signal quality of the second Bluetooth data frame; and if the third parameter is greater than or equal to a preset third threshold, the first information is used for requesting to reduce a length of the synchronization code in the Bluetooth data frame transmitted between the Bluetooth receiving apparatus and the Bluetooth sending apparatus; or if the third parameter is less than a preset third threshold, the first information is used for requesting to increase a length of the synchronization code in the Bluetooth data frame transmitted between the Bluetooth receiving apparatus and the Bluetooth sending apparatus.

In a possible implementation, the processor is specifically configured to receive first information from the Bluetooth sending apparatus through the transceiver, where the first information is used for requesting to switch the frame format of the Bluetooth data frame transmitted between the Bluetooth receiving apparatus and the Bluetooth sending apparatus; and the processor is further specifically configured to send second information to the Bluetooth sending apparatus through the transceiver, where the second information indicates to switch the frame format of the Bluetooth data frame transmitted between the Bluetooth receiving apparatus and the Bluetooth sending apparatus to a frame format of the first Bluetooth data frame.

In a possible implementation, the third parameter indicates the signal strength of the interference signal; and if the third parameter is greater than or equal to a preset fourth threshold, the first information is used for requesting to increase a length of the synchronization code in the Bluetooth data frame transmitted between the Bluetooth receiving apparatus and the Bluetooth sending apparatus; or if the third parameter is less than a preset fourth threshold, the first information is used for requesting to decrease a length of the synchronization code in the Bluetooth data frame transmitted between the Bluetooth receiving apparatus and the Bluetooth sending apparatus. According to the foregoing method, when the signal strength of the interference signal is weak, the length of the synchronization code in the Bluetooth data frame transmitted between the Bluetooth receiving apparatus and the Bluetooth sending apparatus can be reduced, so that power consumption of the Bluetooth sending apparatus and the Bluetooth receiving apparatus can be reduced, to prolong use duration of the Bluetooth sending apparatus and the Bluetooth receiving apparatus. When the signal strength of the interference signal is strong, the length of the synchronization code in the Bluetooth data frame transmitted between the Bluetooth receiving apparatus and the Bluetooth sending apparatus can be increased, to improve a success rate of receiving data by the Bluetooth receiving apparatus.

According to a seventh aspect, an embodiment of this application provides a Bluetooth sending apparatus, including a processor. The processor is coupled to a memory, and the memory is configured to store a program or instructions. When the program is executed or the instructions are executed by the processor, the apparatus is enabled to implement the method according to any one of the first aspect or the possible implementations of the first aspect.

According to an eighth aspect, an embodiment of this application provides a Bluetooth receiving apparatus, including a processor. The processor is coupled to a memory, and the memory is configured to store a program or instructions. When the program is executed or the instructions are executed by the processor, the apparatus is enabled to implement the method according to any one of the second aspect or the possible implementations of the second aspect.

According to a ninth aspect, an embodiment of this application provides a computer-readable medium. The computer-readable medium stores a computer program or instructions. When the computer program is executed or the instructions are executed, a computer is enabled to perform the method according to any one of the first aspect or the possible implementations of the first aspect.

According to a tenth aspect, an embodiment of this application provides a computer-readable medium. The computer-readable medium stores a computer program or instructions. When the computer program is executed or the instructions are executed, a computer is enabled to perform the method according to any one of the second aspect or the possible implementations of the second aspect.

According to an eleventh aspect, an embodiment of this application provides a computer program product. The computer program product includes computer program code. When the computer program code is run on a computer, the computer is enabled to perform the method according to any one of the first aspect or the possible implementations of the first aspect.

According to a twelfth aspect, an embodiment of this application provides a computer program product. The computer program product includes computer program code. When the computer program code is run on a computer, the computer is enabled to perform the method in any one of the second aspect or the possible implementations of the second aspect.

According to a thirteenth aspect, an embodiment of this application provides a chip, including a processor. The processor is coupled to a memory, the memory is configured to store a program or instructions. When the program is executed or the instructions are executed by the processor, the chip is enabled to implement the method according to any one of the first aspect or the possible implementations of the first aspect.

According to a fourteenth aspect, an embodiment of this application provides a chip, including a processor. The processor is coupled to a memory, and the memory is configured to store a program or instructions. When the program is executed or the instructions are executed by the processor, the chip is enabled to implement the method according to any one of the second aspect or the possible implementations of the second aspect.

According to a fifteenth aspect, an embodiment of this application provides a communication system. The system includes the apparatus in the third aspect and/or the apparatus in the fourth aspect, the system includes the apparatus in the fifth aspect and/or the apparatus in the sixth aspect, the system includes the apparatus in the seventh aspect and/or the apparatus in the eighth aspect, or the system includes the chip in the thirteenth aspect and/or the chip in the fourteenth aspect.

It may be understood that any Bluetooth sending apparatus, Bluetooth receiving apparatus, chip, computer-readable medium, computer program product, communication system, or the like provided above is configured to perform the corresponding method provided above. Therefore, for beneficial effects that can be achieved by the Bluetooth sending apparatus, Bluetooth receiving apparatus, chip, computer-readable medium, computer program product, communication system, or the like, refer to beneficial effects in the corresponding method. Details are not described herein again.

According to a sixteenth aspect, an embodiment of this application provides a Bluetooth communication method. The method includes: A Bluetooth sending apparatus generates a first Bluetooth data frame, and the Bluetooth sending apparatus sends the first Bluetooth data frame to a Bluetooth receiving apparatus. The first Bluetooth data frame includes a first access code, a first data field, and N first pilots, the first pilot is a pilot with a known phase, N is a positive integer, and the first pilot is used for detecting at least one of a channel phase or a channel amplitude of a channel for transmitting the first Bluetooth data frame.

According to the method provided in the sixteenth aspect, the N first pilots whose phases are known may be inserted into the first Bluetooth data frame. In this case, the Bluetooth receiving apparatus may detect, based on the first pilot, the channel phase and/or the channel amplitude of the channel for transmitting the first Bluetooth data frame. Receiving performance of the Bluetooth receiving apparatus can be improved. In addition, a process of detecting the channel phase and/or the channel amplitude of the channel for transmitting the first Bluetooth data frame can be further simplified.

In a possible implementation, in the first Bluetooth data frame, the first pilot is inserted into at least one of the first access code or the first data field. According to the foregoing method, receiving performance of the Bluetooth receiving apparatus can be improved, and the process of detecting the channel phase and/or the channel amplitude of the channel for transmitting the first Bluetooth data frame can be simplified.

In a possible implementation, the method further includes: The Bluetooth sending apparatus obtains a first parameter, and the Bluetooth sending apparatus determines a proportion of the first pilot in the first Bluetooth data frame based on the first parameter. The first parameter indicates at least one of a requirement of a Bluetooth service or a communication parameter of Bluetooth communication. According to the foregoing method, the proportion of the first pilot in the first Bluetooth data frame may be determined based on at least one of the requirement of the Bluetooth service or the communication parameter of the Bluetooth communication, to generate the first Bluetooth data frame.

In a possible implementation, if the first parameter is greater than or equal to a first threshold, the proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus. According to the foregoing method, when a channel phase of the channel for transmitting the first Bluetooth data frame changes quickly, the data retransmission rate is high, the Bluetooth service requires high reliability, the transmission distance of the first Bluetooth data frame is long, or the signal strength of the interference signal received by the Bluetooth receiving apparatus is strong, the proportion of the first pilot in the first Bluetooth data frame may be appropriately increased, to improve receiving performance of the Bluetooth receiving apparatus. When a channel phase of the channel for transmitting the first Bluetooth data frame changes slowly, the data retransmission rate is low, there is no high requirement on the reliability of the Bluetooth service, the transmission distance of the first Bluetooth data frame is short, or the signal strength of the interference signal received by the Bluetooth receiving apparatus is weak, the proportion of the first pilot in the first Bluetooth data frame may be appropriately reduced, so that receiving performance of the Bluetooth receiving apparatus is ensured, and signaling overheads are reduced.

In a possible implementation, if the first parameter is less than or equal to a first threshold, the proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame. According to the foregoing method, when the data delay required by the service is short, the transmit power used by the Bluetooth sending apparatus to send the first Bluetooth data frame is low, the signal-to-noise ratio of the channel for transmitting the first Bluetooth data frame is low, or the error correction capability of the coding scheme of the first Bluetooth data frame is weak, the proportion of the first pilot in the first Bluetooth data frame may be appropriately increased, to improve receiving performance of the Bluetooth receiving apparatus. When a long delay can be tolerated, the transmit power used by the Bluetooth sending apparatus to send the first Bluetooth data frame is high, the signal-to-noise ratio of the channel for transmitting the first Bluetooth data frame is high, or the error correction capability of the coding scheme of the first Bluetooth data frame is strong, the proportion of the first pilot in the first Bluetooth data frame may be appropriately reduced, so that receiving performance of the Bluetooth receiving apparatus is ensured, and signaling overheads are reduced.

In a possible implementation, the N first pilots are the same or different. According to the foregoing method, the first pilot may be flexibly set.

According to a seventeenth aspect, an embodiment of this application provides a Bluetooth communication method. The method includes: A Bluetooth receiving apparatus receives a first Bluetooth data frame from a Bluetooth sending apparatus, where the first Bluetooth data frame includes a first access code, a first data field, and N first pilots, the first pilot is a pilot with a known phase, and N is a positive integer; and the Bluetooth receiving apparatus detects, based on the first pilot, at least one of a channel phase or a channel amplitude of a channel for transmitting the first Bluetooth data frame.

According to the method provided in the seventeenth aspect, the N first pilots whose phases are known may be inserted into the first Bluetooth data frame. In this case, the Bluetooth receiving apparatus may detect, based on the first pilot, the channel phase and/or the channel amplitude of the channel for transmitting the first Bluetooth data frame. Receiving performance of the Bluetooth receiving apparatus can be improved. In addition, a process of detecting the channel phase and/or the channel amplitude of the channel for transmitting the first Bluetooth data frame can be further simplified.

In a possible implementation, in the first Bluetooth data frame, the first pilot is inserted into at least one of the following: the first access code or the first data field. According to the foregoing method, receiving performance of the Bluetooth receiving apparatus can be improved, and the process of detecting the channel phase and/or the channel amplitude of the channel for transmitting the first Bluetooth data frame can be simplified.

In a possible implementation, if the first parameter is greater than or equal to a first threshold, a proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by a service, a transmission distance of the first Bluetooth data frame, or signal strength of an interference signal received by the Bluetooth receiving apparatus. According to the foregoing method, when a channel phase of the channel for transmitting the first Bluetooth data frame changes quickly, the data retransmission rate is high, the Bluetooth service requires high reliability, the transmission distance of the first Bluetooth data frame is long, or the signal strength of the interference signal received by the Bluetooth receiving apparatus is strong, the proportion of the first pilot in the first Bluetooth data frame may be appropriately increased, to improve receiving performance of the Bluetooth receiving apparatus. When a channel phase of the channel for transmitting the first Bluetooth data frame changes slowly, the data retransmission rate is low, there is no high requirement on the reliability of the Bluetooth service, the transmission distance of the first Bluetooth data frame is short, or the signal strength of the interference signal received by the Bluetooth receiving apparatus is strong, the proportion of the first pilot in the first Bluetooth data frame may be appropriately reduced, so that receiving performance of the Bluetooth receiving apparatus is ensured, and signaling overheads are reduced.

In a possible implementation, if the first parameter is less than or equal to a first threshold, a proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame. According to the foregoing method, when the data delay required by the service is short, the transmit power used by the Bluetooth sending apparatus to send the first Bluetooth data frame is low, the signal-to-noise ratio of the channel for transmitting the first Bluetooth data frame is low, or the error correction capability of the coding scheme of the first Bluetooth data frame is weak, the proportion of the first pilot in the first Bluetooth data frame may be appropriately increased, to improve receiving performance of the Bluetooth receiving apparatus. When a long delay can be tolerated, the transmit power used by the Bluetooth sending apparatus to send the first Bluetooth data frame is high, the signal-to-noise ratio of the channel for transmitting the first Bluetooth data frame is high, or the error correction capability of the coding scheme of the first Bluetooth data frame is strong, the proportion of the first pilot in the first Bluetooth data frame may be appropriately reduced, so that receiving performance of the Bluetooth receiving apparatus is ensured, and signaling overheads are reduced.

In a possible implementation, the N first pilots are the same or different. According to the foregoing method, the first pilot may be flexibly set.

According to an eighteenth aspect, an embodiment of this application provides a Bluetooth sending apparatus. The Bluetooth sending apparatus includes a processing module and a transceiver module. The processing module is configured to determine a first Bluetooth data frame, where the first Bluetooth data frame includes a first access code, a first data field, and N first pilots, the first pilot is a pilot with a known phase, N is a positive integer, and the first pilot is used for detecting a channel phase and/or a channel amplitude of a channel for transmitting the first Bluetooth data frame. The transceiver module is configured to send the first Bluetooth data frame to a Bluetooth receiving apparatus.

In a possible implementation, in the first Bluetooth data frame, the first pilot is inserted into at least one of the following: the first access code or the first data field.

In a possible implementation, the processing module is further configured to obtain a first parameter, where the first parameter indicates at least one of a requirement of a Bluetooth service or a communication parameter of Bluetooth communication; and the processing module is further configured to determine a proportion of the first pilot in the first Bluetooth data frame based on the first parameter.

In a possible implementation, if the first parameter is greater than or equal to a first threshold, the proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the first parameter is less than or equal to a first threshold, the proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth communication apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

According to a nineteenth aspect, an embodiment of this application provides a Bluetooth receiving apparatus. The Bluetooth receiving apparatus includes a transceiver module and a processing module. The transceiver module is configured to receive a first Bluetooth data frame from a Bluetooth sending apparatus, where the first Bluetooth data frame includes a first access code, a first data field, and N first pilots, the first pilot is a pilot with a known phase, and N is a positive integer. The processing module is configured to detect, based on the first pilot, at least one of a channel phase or a channel amplitude of a channel for transmitting the first Bluetooth data frame.

In a possible implementation, in the first Bluetooth data frame, the first pilot is inserted into at least one of the following: the first access code or the first data field.

In a possible implementation, if a first parameter is greater than or equal to a first threshold, a proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by a service, a transmission distance of the first Bluetooth data frame, or signal strength of an interference signal received by the Bluetooth communication apparatus.

In a possible implementation, if a first parameter is less than or equal to a first threshold, a proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

According to a twentieth aspect, an embodiment of this application provides a Bluetooth sending apparatus. The Bluetooth sending apparatus includes a processor and a transceiver. The processor is configured to determine a first Bluetooth data frame, where the first Bluetooth data frame includes a first access code, a first data field, and N first pilots, the first pilot is a pilot with a known phase, N is a positive integer, and the first pilot is used for detecting at least one of a channel phase or a channel amplitude of a channel for transmitting the first Bluetooth data frame. The transceiver is coupled to the processor and is configured to send the first Bluetooth data frame to a Bluetooth receiving apparatus.

In a possible implementation, in the first Bluetooth data frame, the first pilot is inserted into at least one of the following: the first access code or the first data field.

In a possible implementation, the processor is further configured to obtain a first parameter, where the first parameter indicates at least one of a requirement of a Bluetooth service or a communication parameter of Bluetooth communication; and the processor is further configured to determine a proportion of the first pilot in the first Bluetooth data frame based on the first parameter.

In a possible implementation, if the first parameter is greater than or equal to a first threshold, the proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the first parameter is less than or equal to a first threshold, the proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth communication apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

According to a twenty-first aspect, an embodiment of this application provides a Bluetooth receiving apparatus. The Bluetooth receiving apparatus includes a transceiver and a processor. The transceiver is configured to receive a first Bluetooth data frame from a Bluetooth sending apparatus, where the first Bluetooth data frame includes a first access code, a first data field, and N first pilots, the first pilot is a pilot with a known phase, and N is a positive integer. The processor is configured to detect, based on the first pilot, at least one of a channel phase or a channel amplitude of a channel for transmitting the first Bluetooth data frame.

In a possible implementation, in the first Bluetooth data frame, the first pilot is inserted into at least one of the following: the first access code or the first data field.

In a possible implementation, if a first parameter is greater than or equal to a first threshold, a proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by a service, a transmission distance of the first Bluetooth data frame, or signal strength of an interference signal received by the Bluetooth communication apparatus.

In a possible implementation, if a first parameter is less than or equal to a first threshold, a proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

According to a twenty-second aspect, an embodiment of this application provides a Bluetooth sending apparatus, including a processor. The processor is coupled to a memory, and the memory is configured to store a program or instructions. When the program is executed or the instructions are executed by the processor, the apparatus is enabled to implement the method according to any one of the sixteenth aspect or the possible implementations of the sixteenth aspect.

According to a twenty-third aspect, an embodiment of this application provides a Bluetooth receiving apparatus, including a processor. The processor is coupled to a memory, and the memory is configured to store a program or instructions. When the program is executed or the instructions are executed by the processor, the apparatus is enabled to implement the method according to any one of the seventeenth aspect or the possible implementations of the seventeenth aspect.

According to a twenty-fourth aspect, an embodiment of this application provides a computer-readable medium. The computer-readable medium stores a computer program or instructions. When the computer program is executed or the instructions are executed, a computer is enabled to perform the method according to any one of the sixteenth aspect or the possible implementations of the sixteenth aspect.

According to a twenty-fifth aspect, an embodiment of this application provides a computer-readable medium. The computer-readable medium stores a computer program or instructions. When the computer program is executed or the instructions are executed, a computer is enabled to perform the method according to any one of the seventeenth aspect or the possible implementations of the seventeenth aspect.

According to a twenty-sixth aspect, an embodiment of this application provides a computer program product. The computer program product includes computer program code. When the computer program code is run on a computer, the computer is enabled to perform the method according to any one of the sixteenth aspect or the possible implementations of the sixteenth aspect.

According to a twenty-seventh aspect, an embodiment of this application provides a computer program product. The computer program product includes computer program code. When the computer program code is run on a computer, the computer is enabled to perform the method according to any one of the seventeenth aspect or the possible implementations of the seventeenth aspect.

According to a twenty-eighth aspect, an embodiment of this application provides a chip, including a processor. The processor is coupled to a memory, and the memory is configured to store a program or instructions. When the program is executed or the instructions are executed by the processor, the chip is enabled to implement the method according to any one of the sixteenth aspect or the possible implementations of the sixteenth aspect.

According to a twenty-ninth aspect, an embodiment of this application provides a chip, including a processor. The processor is coupled to a memory, and the memory is configured to store a program or instructions. When the program is executed or the instructions are executed by the processor, the chip is enabled to implement the method according to any one of the seventeenth aspect or the possible implementations of the seventeenth aspect.

According to a thirtieth aspect, an embodiment of this application provides a communication system. The system includes the apparatus according to the eighteenth aspect and/or the apparatus according to the nineteenth aspect, the system includes the apparatus according to the twentieth aspect and/or the apparatus according to the twenty-first aspect, the system includes the apparatus according to the twenty-second aspect and/or the apparatus according to the twenty-third aspect, or the system includes the chip according to the twenty-eighth aspect and/or the chip according to the twenty-ninth aspect.

It may be understood that any Bluetooth sending apparatus, Bluetooth receiving apparatus, chip, computer-readable medium, computer program product, communication system, or the like provided above is configured to perform the corresponding method provided above. Therefore, for beneficial effects that can be achieved by the Bluetooth sending apparatus, Bluetooth receiving apparatus, chip, computer-readable medium, computer program product, communication system, or the like, refer to beneficial effects in the corresponding method. Details are not described herein again.

## BRIEF DESCRIPTION OF DRAWINGS

FIG. 1 is a schematic diagram of an architecture of a communication system according to an embodiment of this application;

FIG. 2 is a schematic diagram of an autocorrelation curve of an AC and a cross-correlation curve of an AC and noise according to an embodiment of this application;

FIG. 3 is a schematic diagram of a structure of hardware of a Bluetooth communication apparatus according to an embodiment of this application;

FIG. 4 is a schematic flowchart of a Bluetooth communication method according to an embodiment of this application;

FIG. 5 is a schematic diagram of a format of a first Bluetooth data frame according to an embodiment of this application;

FIG. 6 is a schematic diagram of an autocorrelation curve of a first synchronization code and a cross-correlation curve of a first synchronization code and noise according to an embodiment of this application;

FIG. 7 to FIG. 11 is a schematic flowchart of another Bluetooth communication method according to an embodiment of this application;

FIG. 12 is a schematic diagram of a format of another first Bluetooth data frame according to an embodiment of this application;

FIG. 13 to FIG. 15 is a schematic flowchart of another Bluetooth communication method according to an embodiment of this application;

FIG. 16 is a schematic diagram of a format of another first Bluetooth data frame according to an embodiment of this application;

FIG. 17 is a schematic diagram of a structure of a Bluetooth communication apparatus according to an embodiment of this application; and

FIG. 18 is a schematic diagram of a structure of another Bluetooth communication apparatus according-

ing to an embodiment of this application.

## DESCRIPTION OF EMBODIMENTS

The following describes implementations of embodiments of this application in detail with reference to the accompanying drawings.

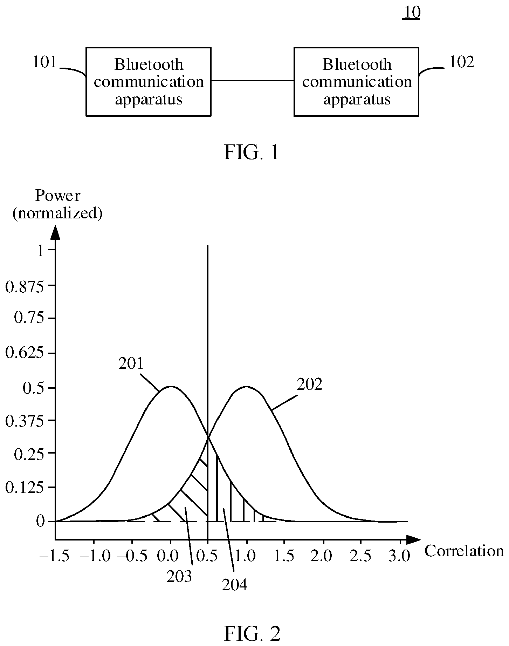

A method provided in embodiments of this application may be applied to various Bluetooth communication systems. The following uses a communication system 10 shown in FIG. 1 as an example to describe the method provided in embodiments of this application.

FIG. 1 is a schematic diagram of an architecture of the communication system 10 according to an embodiment of this application. In FIG. 1, the communication system 10 may include a Bluetooth communication apparatus 101 and a Bluetooth communication apparatus 102 that may communicate with the Bluetooth communication apparatus 101 through Bluetooth. FIG. 1 is merely a schematic diagram, and does not constitute a limitation on an applicable scenario of technical solutions provided in this application.

The Bluetooth communication apparatus in FIG. 1, for example, the Bluetooth communication apparatus 101 or the Bluetooth communication apparatus 102, is a device having a Bluetooth wireless transceiver function. The Bluetooth communication apparatus may be user equipment (user equipment, UE). The UE includes a handheld device, a vehicle-mounted device, a wearable device, or a computing device that has a Bluetooth wireless communication function. For example, the UE may be a mobile phone (mobile phone), a tablet computer, or a computer having a Bluetooth wireless transceiver function. The Bluetooth communication apparatus may alternatively be a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), or the like.

By way of example, and not limitation, the Bluetooth communication apparatus in this application may be a wearable device. The wearable device may also be referred to as a wearable intelligent device, and is a general term of wearable devices, such as glasses, a Bluetooth headset, gloves, watches, clothes, and shoes, that are developed by applying wearable technologies to intelligent designs of daily wear. The wearable device is a portable device that is directly worn or integrated into clothes or an accessory of a user. For example, the wearable device is not merely a hardware device, and is also a device that implements a powerful function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with other devices such as smartphones, for example, various smart bands or smart jewelry for monitoring physical signs.

In this application, the Bluetooth communication apparatus may be a terminal in an internet of things (internet of things, IoT) system. An IoT is an important component of future information technology development. A main technical feature of the IoT is connecting an object to a network by using a communication technology, to implement an intelligent network of human-machine interconnection and thing-thing interconnection. The Bluetooth communication apparatus in this application may be a terminal in machine type communication (machine type communication, MTC). The terminal in this application may be a vehicle-mounted module, a vehicle-mounted module assembly, an onboard component, an automotive chip, or an on board unit that is built in a vehicle as one or more components or units. The vehicle may implement the method in this application by using the vehicle-mounted module, the vehicle-mounted module assembly, the onboard component, the automotive chip, or the on board unit that is built in the vehicle.

In the communication system 10 shown in FIG. 1, when the Bluetooth communication apparatus 101 intends to send data 1 to the Bluetooth communication apparatus 102, the Bluetooth communication apparatus 101 sends a Bluetooth data frame 1 to the Bluetooth communication apparatus 102. The Bluetooth data frame 1 includes a preamble, an AC, and the data 1. The Bluetooth communication apparatus 102 performs synchronization detection, and continues to receive the data 1 after successfully detecting the AC. If the Bluetooth communication apparatus 102 does not detect the AC until transmission of the Bluetooth data frame 1 ends, the Bluetooth communication apparatus 102 fails to be synchronized, and the Bluetooth data frame 1 is lost. In this case, the Bluetooth communication apparatus 102 cannot receive the data 1.

It can be learned from the foregoing descriptions that, how to improve a success rate of synchronization detection performed by the Bluetooth communication apparatus 102 is crucial to avoid a frame loss and improve a success rate of data receiving. In the foregoing process, the synchronization detection is performing a correlation operation on the Bluetooth data frame 1 and the locally stored AC; and when an operation result is greater than or equal to a threshold, it is considered that the AC is successfully detected. However, currently, an AC is an identifier generated by a user according to a particular rule, and therefore different users have different ACs. Due to a limitation of a generation rule, autocorrelation performance of some ACs is poor. In a condition of a low signal-to-noise ratio or strong interference, false detection and missing detection are likely to occur, to cause a frame loss. The success rate of synchronization detection performed by the Bluetooth communication apparatus 102 is reduced, and the success rate of data receiving is affected. The false detection means that the Bluetooth communication apparatus 102 incorrectly detects the AC and performs incorrect synchronization when a signal does not arrive. The missing detection means that a real signal has arrived, but the Bluetooth communication apparatus 102 does not detect an AC, and cannot complete synchronization.

For example, FIG. 2 is a schematic diagram of an autocorrelation curve of an AC and a cross-correlation curve of an AC and noise. In FIG. 2, a curve 201 is a cross-correlation curve of an AC and pure noise, and a curve 202 is a distribution curve of autocorrelation peaks of an AC in a noise scenario. A slash line area 203 is a probability of missing detection, and a vertical line area 204 is a probability of false detection. It can be learned from FIG. 2 that, as a power of a signal carrying the AC decreases, areas of the slash line area and the vertical line area become larger, the success rate of synchronization detection performed by the Bluetooth communication apparatus 102 decreases, and the success rate of data receiving also decreases.

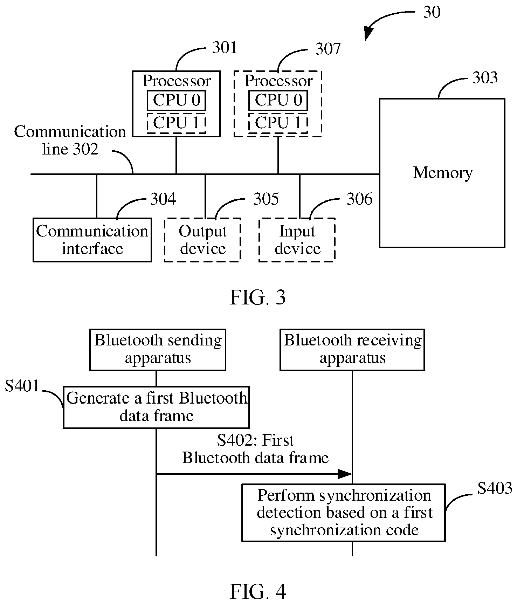

To improve the success rate of data receiving, embodiments of this application provide a Bluetooth communication method. A synchronization code may be inserted into a Bluetooth data frame. At least one of autocorrelation or cross-correlation of the synchronization code is better than that of an AC. Therefore, the success rate of synchronization detection performed by the Bluetooth communication apparatus 102 can be improved, and the success rate of data receiving can be improved. Specific descriptions of the method are described in the following embodiments shown in FIG. 4 and FIG. 7 to FIG. 10.

It may be understood that the Bluetooth communication apparatus 101 modulates the Bluetooth data frame 1 to a to-be-sent signal, and after being transmitted through a channel, the sent signal arrives at the Bluetooth communication apparatus 102. The sent signal is affected by a plurality of distortions in a process in which the sent signal is transmitted through the channel. As a result, a signal received by the Bluetooth communication apparatus 102 is different from the sent signal. Therefore, in a process in which the Bluetooth communication apparatus 102 receives a signal, the Bluetooth communication apparatus 102 detects channel information such as a channel phase and a channel amplitude, and performs compensation and demodulation on the received signal by using the channel information, to obtain correct demodulation information, namely, the Bluetooth data frame 1.

For example, a sent signal is s(t), a received signal is $r(t)$, and s(t) is affected by noise n(t), amplitude suppression a, and a phase distortion $\phi(t)$ on a channel. The received signal satisfies the following relationship: $r(t) = as(t)e^{j\phi(t)} + n(t)$. In this case, if s(t) needs to be obtained, $\phi(t)$ and a may be obtained through channel detection, and the phase distortion and the amplitude suppression may be removed through compensation. Then, a compensated signal is demodulated to obtain

$$s(t) = \frac{1}{a}r(t)e^{-j\phi(t)} - \frac{1}{a}n(t)e^{-j\phi(t)}$$

$s(t)$, where .

It can be learned from the foregoing descriptions that if the Bluetooth communication apparatus 102 intends to obtain correct demodulation information, the Bluetooth communication apparatus 102 first needs to obtain accurate channel information. A current method for detecting channel information has a large defect. As a result, an error between information modulated to a to-be-sent signal and demodulation information that is obtained by the Bluetooth communication apparatus 102 by compensating for and demodulating a received signal by using channel information is also large. This affects receiving performance of the Bluetooth communication apparatus 102.

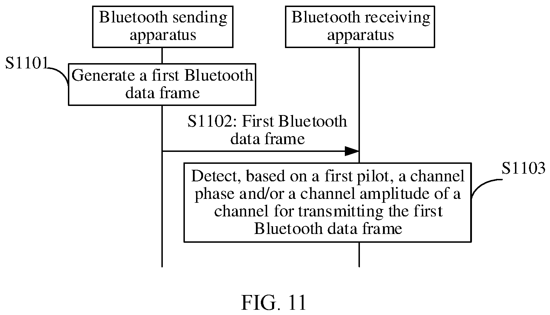

To improve receiving performance of a receive end, embodiments of this application provide a Bluetooth communication method. A pilot with a known phase may be inserted into a Bluetooth data frame, so that the receive end can accurately estimate channel information based on the pilot with the known phase, and then compensate for and demodulate a received signal by using the estimated channel information, to obtain correct demodulation information, so that receiving performance of the receive end can be improved. Specific descriptions of the method are described in the following embodiments shown in FIG. 11, FIG. 13, and FIG. 14.

The communication system 10 shown in FIG. 1 is merely used as an example, but is not intended to limit the technical solutions in this application. A person skilled in the art should understand that, in a specific implementation process, the communication system 10 may further include another device, and a quantity of Bluetooth communication apparatuses may be determined based on a specific requirement. This is not limited.

Optionally, in this embodiment of this application, the network elements in FIG. 1, for example, the Bluetooth communication apparatus 101 or the Bluetooth communication apparatus 102, may be a functional module in an apparatus. It may be understood that the functional module may be an element in a hardware device, for example, a communication chip or a communication component in a terminal, or may be a software functional module running on hardware or a virtualized function instantiated on a platform (for example, a cloud platform).

For example, each network element in FIG. 1 may be implemented by a Bluetooth communication apparatus 30 in FIG. 3. FIG. 3 is a schematic diagram of a structure of hardware of a Bluetooth communication apparatus that can be used in an embodiment of this application. The Bluetooth communication apparatus 30 includes at least one processor 301 and at least one communication interface 304, to implement the method provided in embodiments of this application. The Bluetooth communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 302 may include a path, for example, a bus, for transferring information among the foregoing components.

The communication interface 304 is configured to communicate with another device or a communication network. The communication interface 304 may be any apparatus such as a transceiver, for example, may be an Ethernet interface, a radio access network (radio access network, RAN) interface, a wireless local area network (wireless local area networks, WLAN) interface, a transceiver, a pin, a bus, or a transceiver circuit.

The memory 303 may be a read-only memory (read-only memory, ROM) or another type of static storage device that can store static information and instructions, or a random access memory (random access memory, RAM) or another type of dynamic storage device that can store information and instructions. The memory 303 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used for carrying or storing expected program code in a form of instructions or a data structure and that is accessible by a computer, but is not limited thereto. The memory may exist independently, and may be coupled to the processor 301 through the communication line 302. The memory 303 may alternatively be integrated with the processor 301. The memory provided in embodiments of this application may be usually non-volatile. The memory 303 is configured to store computer-executable instructions for performing the solutions provided in embodiments of this application, and the processor 301 controls execution of the computer-executable instructions. The processor 301 is configured to execute the computer-executable instructions stored in the memory 303, to implement the method provided in embodiments of this application.

The computer-executable instructions in embodiments of this application may also be referred to as application code. This is not specifically limited in embodiments of this application.

The coupling in this embodiment of this application is indirect coupling or a communication connection between apparatuses, units, or modules, may be in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the Bluetooth communication apparatus 30 may include a plurality of processors, for example, the processor 301 and a processor 307 shown in FIG. 3. Each of the processors may be a single-core (single-CPU) processor, or may be a multi-core (multi-CPU) processor. Herein, the processor may be one or more devices, circuits, and/or processing cores configured to process data (for example, computer program instructions).

In an embodiment, the Bluetooth communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive an input of a user in a plurality of manners. For example, the input device 306 may be a mouse, a keyboard, a touchscreen device, or a sensing device.

The Bluetooth communication apparatus 30 may be a general-purpose device or a special-purpose device. During specific implementation, the Bluetooth communication apparatus 30 may be a desktop computer, a portable computer, a palmtop computer (personal digital assistant, PDA), a mobile phone, a tablet computer, a wireless terminal device, an embedded device, a wearable device, or a device having a structure similar to that in FIG. 3. A type of the Bluetooth communication apparatus 30 is not limited in embodiments of this application.

The following describes in detail the Bluetooth communication method provided in embodiments of this application with reference to FIG. 1 to FIG. 3.

It should be noted that names of messages between network elements, names of parameters in the messages, or the like in the following embodiments of this application are merely examples, and there may be other names in a specific implementation. This is not specifically limited in embodiments of this application.

It should be noted that, in embodiments of this application, "/" may represent an "or" relationship between associated objects. For example, A/B may represent A or B. "and/or" may be used for describing a case in which three relationships exist between associated objects. For example, A and/or B may represent the following three cases: Only A exists, both A and B exist, and only B exists. A and B may be singular or plural.

To facilitate descriptions of the technical solutions in embodiments of this application, in embodiments of this application, terms such as "first" and "second" may be used for distinguishing between technical features with same or similar functions. The terms such as "first" and "second" do not limit a quantity and an execution sequence, and the terms such as "first" and "second" do not indicate a definite difference. In embodiments of this application, the term such as "example" or "for example" is used for representing an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

It should be noted that in embodiments of this application, for a technical feature, "first", "second", "third", "A", "B", "C", and "D" are used for distinguishing between technical features in the technical feature, and there is no sequential order or size order between the technical features described by "first", "second", "third", "A", "B", "C", and "D".

It may be understood that a same step or a step or a technical feature having a same function in embodiments of this application may be mutually referenced in different embodiments.

It should be understood that, in embodiments of this application, a Bluetooth sending apparatus and/or a Bluetooth receiving apparatus may perform some or all of steps in embodiments of this application. These steps are merely examples. In embodiments of this application, other steps or variations of the steps may be further performed. In addition, the steps may be performed in a sequence different from a sequence presented in embodiments of this application, and not all the steps in embodiments of this application need to be performed.

In embodiments of this application, a specific structure of an execution body of the Bluetooth communication method is not particularly limited in embodiments of this application, provided that the Bluetooth communication method in embodiments of this application can be implemented. For example, the Bluetooth communication method provided in embodiments of this application may be performed by a Bluetooth sending apparatus; or a component, for example, a chip, used in a Bluetooth sending apparatus. This is not limited in this application. Alternatively, the Bluetooth communication method provided in embodiments of this application may be performed by a Bluetooth receiving apparatus; or a component, for example, a chip, used in a Bluetooth receiving apparatus. This is not limited in this application. The following embodiments are described by using examples in which execution bodies of the Bluetooth communication method are a Bluetooth sending apparatus and a Bluetooth receiving apparatus respectively.

FIG. 4 shows a Bluetooth communication method according to an embodiment of this application. The Bluetooth communication method includes steps S401 to S403.

S401: A Bluetooth sending apparatus generates a first Bluetooth data frame.

In this embodiment of this application, the Bluetooth sending apparatus has a Bluetooth communication capability. For example, the Bluetooth sending apparatus may be the Bluetooth communication apparatus 101 or the Bluetooth communication apparatus 102 in FIG. 1.

In S401, the first Bluetooth data frame may include a first AC, a first synchronization code, and a first data field. Further, the first Bluetooth data frame may include a first preamble. The first preamble may be used for performing AGC adjustment and signal processing. The first AC and the first synchronization code may be used for synchronization detection. A length of the first AC may be the same as or different from a length of the first synchronization code. The first AC may be further used by a Bluetooth receiving apparatus for determining whether the Bluetooth data frame is a Bluetooth data frame sent by the Bluetooth sending apparatus; and if the Bluetooth data frame is the Bluetooth data frame sent by the Bluetooth sending apparatus, the Bluetooth receiving apparatus receives the Bluetooth data frame; or if the Bluetooth data frame is not the Bluetooth data frame sent by the Bluetooth sending apparatus, the Bluetooth receiving apparatus discards the Bluetooth data frame. The first data field is used for carrying first data, and the first data field may also be referred to as a first payload. The first data is data to be sent by the Bluetooth sending apparatus to the Bluetooth receiving apparatus. The Bluetooth receiving apparatus also has the Bluetooth communication capability. For example, if the Bluetooth sending apparatus is the Bluetooth communication apparatus 101 in FIG. 1, the Bluetooth receiving apparatus is the Bluetooth communication apparatus 102 in FIG. 1; or if the Bluetooth sending apparatus is the Bluetooth communication apparatus 102 in FIG. 1, the Bluetooth receiving apparatus is the Bluetooth communication apparatus 101 in FIG. 1.

Further, in the first Bluetooth data frame, the first synchronization code is located before the first data field. In this way, the Bluetooth receiving apparatus may first perform synchronization detection, and after the synchronization detection succeeds, continue to receive the first data.

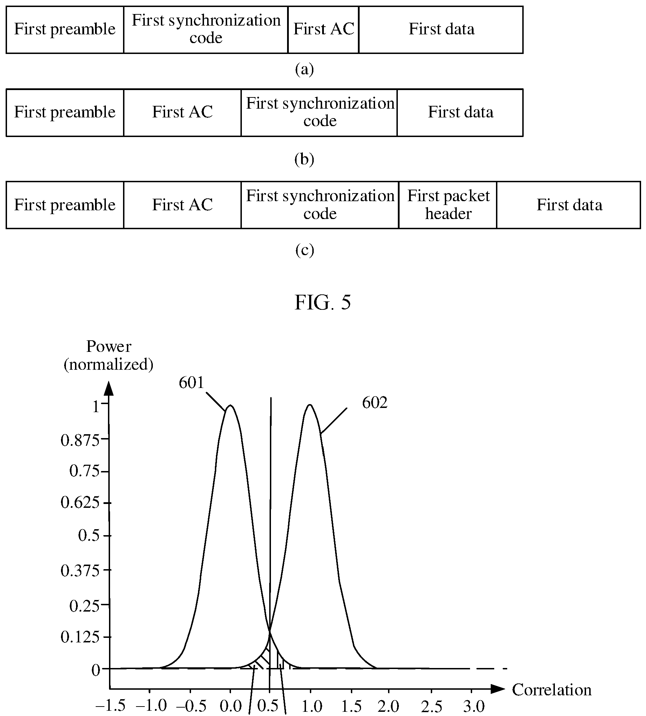

For example, a format of the first Bluetooth data frame may be shown in FIG. 5. In (a) in FIG. 5, the first synchronization code is located between the first preamble and the first AC. In (b) in FIG. 5, the first synchronization code is located between the first AC and the first data field. It may be understood that the first Bluetooth data frame may further include other content. For example, in (c) in FIG. 5, the first Bluetooth data frame further includes a first packet header, and the first packet header may indicate a protocol type, a format, and the like of the first data. The first synchronization code is located between the first AC and the first packet header.

It may be understood that the format of the Bluetooth data frame shown in FIG. 5 is merely an example of the format of the first Bluetooth data frame. In a specific application, the first Bluetooth data frame may include more or less content than the Bluetooth data frame shown in FIG. 5. This is not limited in embodiments of this application.

In a possible implementation, at least one of autocorrelation or cross-correlation of the first synchronization code is better than that of the first AC. In other words, the autocorrelation of the first synchronization code is better than the autocorrelation of the first AC, the cross-correlation of the first synchronization code is better than the cross-correlation of the first AC, or the autocorrelation and the cross-correlation of the first synchronization code are better than the autocorrelation and the cross-correlation of the first AC.

Further, the first synchronization code may be any sequence with excellent correlation performance, for example, a pseudo-random sequence. In a possible implementation, the first synchronization code may be an m-sequence, a gold sequence, or a kasami sequence. For descriptions of the m-sequence, the gold sequence, and the kasami sequence, refer to descriptions in the conventional technology. Details are not described herein.

It may be understood that, when the autocorrelation and/or the cross-correlation of the first synchronization code are/is better than the autocorrelation and/or the cross-correlation of the first AC, the Bluetooth receiving apparatus may perform synchronization detection by using the first synchronization code, so that a success rate of synchronization detection can be improved, and a success rate of data receiving can be improved.

In a possible implementation, before S401, the Bluetooth sending apparatus obtains a first parameter, and determines a length of the first synchronization code based on the first parameter. The length of the first synchronization code is related to the autocorrelation or the cross-correlation of the first synchronization code. Further, the length of the first synchronization code is positively correlated with the autocorrelation or the cross-correlation of the first synchronization code, to be specific, a longer length of the first synchronization code indicates better autocorrelation or cross-correlation of the first synchronization code, and a shorter length of the first synchronization code indicates poorer autocorrelation or cross-correlation of the first synchronization code. The first parameter may indicate a requirement of a Bluetooth service and/or a communication parameter of Bluetooth communication. Further, the requirement of the Bluetooth service may indicate one of the following parameters: a data retransmission rate, data reliability required by the service, a data delay required by the service, or another parameter or requirement for measuring signal quality. The communication parameter of the Bluetooth communication may indicate one of the following parameters: a transmission distance of the first Bluetooth data frame, signal strength of an interference signal received by the Bluetooth receiving apparatus, a transmit power used by the Bluetooth sending apparatus to send the first Bluetooth data frame, a signal-to-noise ratio of a channel for transmitting the first Bluetooth data frame, or another parameter or requirement for measuring signal quality. In this case, the length of the first synchronization code may be dynamically adjusted based on the first parameter. Flexibility is high.

The following specifically describes a process in which the Bluetooth sending apparatus determines the length of the first synchronization code based on the first parameter. That the Bluetooth sending apparatus determines the length of the first synchronization code based on the first parameter may include but is not limited to the following two cases:

Case 1: The first parameter indicates the data retransmission rate, the data reliability required by the service, the transmission distance of the first Bluetooth data frame, or the signal strength of the interference signal received by the Bluetooth receiving apparatus. If the first parameter is greater than or equal to a first threshold, the length of the first synchronization code is greater than or equal to a first length. If the first parameter is less than or equal to a preset second threshold, the length of the first synchronization code is less than or equal to a second length. The first threshold and the preset second threshold may be the same or different, and the first length and the second length may be the same or different.

To be specific, when the data retransmission rate is high, the Bluetooth service requires high reliability (for example, in a scenario in which a Bluetooth headset is connected to a mobile phone to play a game), the transmission distance of the first Bluetooth data frame is long (for example, in a scenario in which a vehicle location is searched for through Bluetooth positioning in a garage, a long distance needs to be covered), or the signal strength of the interference signal received by the Bluetooth receiving apparatus is strong (for example, when Bluetooth communication is performed in a place with dense people and devices such as an airport or a railway station, strength of an interference signal is generally strong), the length of the first synchronization code may be appropriately increased, so as to improve a success rate of synchronization detection. When the data retransmission rate is low, there is no high requirement on the reliability of the Bluetooth service (for example, in a scenario in which a common file is transmitted between two Bluetooth mobile phones), the transmission distance of the first Bluetooth data frame is short (for example, in a scenario in which Bluetooth apparatuses in a bedroom communicate with each other), or the signal strength of the interference signal received by the Bluetooth receiving apparatus is weak (for example, when Bluetooth communication is performed at home, there is a small quantity of interference sources and signal strength of an interference signal is also weak), the length of the first synchronization code may be appropriately reduced, so that power consumption of the Bluetooth sending apparatus and the Bluetooth receiving apparatus is reduced while a success rate of synchronization detection is ensured.

For example, the first parameter includes the data retransmission rate, the first threshold is 40%, the preset second threshold is 20%, the first length is 64 bits, and the second length is 32 bits. If the data retransmission rate is 50%, the length of the first synchronization code may be 64 bits, 128 bits, or the like. If the data retransmission rate is 15%, the length of the first synchronization code may be 32 bits, 16 bits, or the like; or the first Bluetooth data frame may not include the first synchronization code.

For example, the first parameter includes a level of a data reliability requirement, where a higher level of the data reliability requirement indicates higher data reliability required by the service, and a lower level of the data reliability requirement indicates lower data reliability required by the service; the first threshold is 4; the preset second threshold is 2; the first length is 64 bits; and the second length is 32 bits. If the level of the data reliability requirement is 5, the length of the first synchronization code may be 64 bits, 128 bits, or the like. If the level of the data reliability requirement is 2, the length of the first synchronization code may be 32 bits, 16 bits, or the like; or the first Bluetooth data frame may not include the first synchronization code.

For example, the first parameter includes the transmission distance of the first Bluetooth data frame, both the first threshold and the preset second threshold are 15 meters, the first length is 128 bits, and the second length is 64 bits. If the transmission distance of the first Bluetooth data frame is 25 meters, the length of the first synchronization code may be 128 bits, or the like. If the transmission distance of the first Bluetooth data frame is 8 meters, the length of the first synchronization code may be 64 bits, 32 bits, 16 bits, or the like; or the first Bluetooth data frame may not include the first synchronization code.

For example, the first parameter includes the signal strength of the interference signal received by the Bluetooth receiving apparatus, the first threshold is -50 decibel-milliwatts (dBm), the preset second threshold is -80 dBm, and both the first length and the second length are 64 bits. If the signal strength of the interference signal received by the Bluetooth receiving apparatus is - 45 dBm, the length of the first synchronization code may be 64 bits, 128 bits, or the like. If the signal strength of the interference signal received by the Bluetooth receiving apparatus is -90 dBm, the length of the first synchronization code may be 32 bits, 16 bits, or the like; or the first Bluetooth data frame may not include the first synchronization code.

It may be understood that the foregoing examples are merely examples of the first parameter. In a specific application, the first parameter may alternatively indicate another parameter, for example, a quantity of users around the Bluetooth sending apparatus and/or the Bluetooth receiving apparatus, a quantity of Bluetooth apparatuses around the Bluetooth sending apparatus and/or the Bluetooth receiving apparatus, and complexity of a channel between the Bluetooth sending apparatus and the Bluetooth receiving apparatus. This is not limited.

Case 2: The first parameter indicates the data delay required by the service, the transmit power used by the Bluetooth sending apparatus to send the first Bluetooth data frame, or the signal-to-noise ratio of the channel for transmitting the first Bluetooth data frame. If the first parameter is less than or equal to a first threshold, the length of the first synchronization code is greater than or equal to a first length. If the first parameter is greater than or equal to a preset second threshold, the length of the first synchronization code is less than or equal to a second length. The first threshold and the preset second threshold may be the same or different, and the first length and the second length may be the same or different.

To be specific, when the data delay required by the service is short (for example, in a scenario in which a Bluetooth headset is connected to a mobile phone to play a game), the transmit power used by the Bluetooth sending apparatus to send the first Bluetooth data frame is low (for example, in a scenario in which a wearable Bluetooth apparatus needs to reduce a transmit power to reduce power consumption), or the signal-to-noise ratio of the channel for transmitting the first Bluetooth data frame is low, the length of the first synchronization code may be appropriately increased, to improve a success rate of synchronization detection. When a long delay can be tolerated (for example, in a scenario in which a common file is transmitted between two Bluetooth mobile phones), the transmit power used by the Bluetooth sending apparatus to send the first Bluetooth data frame is high (for example, in a scenario in which Bluetooth communication between desktop computers is insensitive to power consumption), or the signal-to-noise ratio of the channel for transmitting the first Bluetooth data frame is high, the length of the first synchronization code may be appropriately reduced, and power consumption of the Bluetooth sending apparatus and the Bluetooth receiving apparatus is reduced while a success rate of synchronization detection is ensured.

For example, the first parameter includes the data delay required by the service, the first threshold is 5 milliseconds (ms), the preset second threshold is 10 ms, the first length is 64 bits, and the second length is 32 bits. If the data delay required by the service is 1 ms, the length of the first synchronization code may be 64 bits, 128 bits, or the like. If the data delay required by the service is 12 ms, the length of the first synchronization code may be 32 bits, 16 bits, or the like; or the first Bluetooth data frame may not include the first synchronization code.

For example, the first parameter includes the transmit power used by the Bluetooth sending apparatus to send the first Bluetooth data frame, both the first threshold and the preset second threshold are -90 dBm, the first length is 64 bits, and the second length is 32 bits. If the transmit power used by the Bluetooth sending apparatus to send the first Bluetooth data frame is -1000 dBm, the length of the first synchronization code may be 64 bits, 128 bits, or the like. If the transmit power used by the Bluetooth sending apparatus to send the first Bluetooth data frame is -25 dBm, the length of the first synchronization code may be 32 bits, 16 bits, or the like; or the first Bluetooth data frame may not include the first synchronization code.

For example, the first parameter includes the signal-to-noise ratio of the channel for transmitting the first Bluetooth data frame, the first threshold is 20 dBm, the preset second threshold is 30 dBm, and both the first length and the second length are 64 bits. If the signal-to-noise ratio of the channel for transmitting the first Bluetooth data frame is 10 dBm, the length of the first synchronization code may be 64 bits, 128 bits, or the like. If the signal-to-noise ratio of the channel for transmitting the first Bluetooth data frame is 40 dBm, the length of the first synchronization code may be 32 bits, 16 bits, or the like; or the first Bluetooth data frame may not include the first synchronization code.

It may be understood that, in a specific application, the Bluetooth sending apparatus may alternatively determine the length of the first synchronization code by combining a plurality of parameters in the foregoing parameters.

S402: The Bluetooth sending apparatus sends the first Bluetooth data frame to the Bluetooth receiving apparatus.

In a possible implementation, the Bluetooth sending apparatus sends the first Bluetooth data frame to the Bluetooth receiving apparatus through Bluetooth.

Correspondingly, the Bluetooth receiving apparatus receives the first Bluetooth data frame from the Bluetooth sending apparatus. Further, the Bluetooth receiving apparatus receives the first Bluetooth data frame from the Bluetooth sending apparatus through Bluetooth.

S403: The Bluetooth receiving apparatus performs synchronization detection based on the first synchronization code.

In a possible implementation, the Bluetooth receiving apparatus performs synchronization detection based on the first synchronization code. When the synchronization detection succeeds, the Bluetooth receiving apparatus receives the first data.

Further, that the Bluetooth receiving apparatus performs synchronization detection based on the first synchronization code includes: The Bluetooth receiving apparatus performs a correlation operation on a local synchronization code and the first synchronization code; and when an operation result is greater than or equal to a preset seventh threshold, determines that the synchronization detection succeeds; or when an operation result is less than a preset seventh threshold, determines that the synchronization detection fails. If the synchronization detection performed by the Bluetooth receiving apparatus fails, the first Bluetooth data frame is lost.

It may be understood that the Bluetooth receiving apparatus may further determine, based on the first AC, whether the first Bluetooth data frame is sent by the Bluetooth sending apparatus. If the first Bluetooth data frame is a Bluetooth data frame sent by the Bluetooth sending apparatus, the Bluetooth receiving apparatus receives the first Bluetooth data frame. If the first Bluetooth data frame is not a Bluetooth data frame sent by the Bluetooth sending apparatus, the Bluetooth receiving apparatus discards the first Bluetooth data frame.

According to the method shown in FIG. 4, the first synchronization code may be inserted into the first Bluetooth data frame, and the Bluetooth receiving apparatus may perform synchronization detection based on the first synchronization code. Because at least one of the autocorrelation or the cross-correlation of the first synchronization code is better than that of the first AC, a success rate of synchronization detection can be improved, and a success rate of data receiving can be improved. For example, FIG. 6 is a schematic diagram of an autocorrelation curve of the first synchronization code and a cross-correlation curve of the first synchronization code and noise. In FIG. 6, a curve 601 is a cross-correlation curve between the first synchronization code and pure noise, and a curve 602 is a distribution curve of autocorrelation peaks of the first synchronization code in a noise scenario. A slash line area 603 is a probability of missing detection, and a vertical line area 604 is a probability of false detection. In comparison with FIG. 2, because the autocorrelation and/or the cross-correlation of the first synchronization code are/is better than the autocorrelation and/or the cross-correlation of the first AC, the curve 602 is higher and steeper than the curve 202, an overlapping area between the curve 601 and the curve 602 is smaller, and probabilities of false detection and missing detection are smaller. Therefore, a success rate of synchronization detection performed by the Bluetooth receiving apparatus can be improved, so as to improve a success rate of data receiving. In addition, according to the method shown in FIG. 4, when success rates of receiving data by the Bluetooth receiving apparatus are the same, the transmit power used by the Bluetooth sending apparatus to send the first Bluetooth data frame may be further reduced, and use duration of the Bluetooth sending apparatus may be further prolonged. Because when the Bluetooth sending apparatus sends the first Bluetooth data frame by using a lower transmit power, a success rate of receiving data by the Bluetooth receiving apparatus may reach a success rate of receiving data by the Bluetooth receiving apparatus when the Bluetooth sending apparatus sends the first Bluetooth data frame by using a normal transmit power.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S401 to S403. This is not limited in this embodiment.

That the first synchronization code may be inserted into the first Bluetooth data frame is described in the method shown in FIG. 4. In a specific application, the Bluetooth sending apparatus and the Bluetooth receiving apparatus may further negotiate a frame format, and perform Bluetooth communication by using the negotiated frame format at a subsequent Bluetooth data frame transmission moment. For example, the Bluetooth sending apparatus may negotiate, with the Bluetooth receiving apparatus based on a third parameter, a frame format of the Bluetooth data frame transmitted between the Bluetooth receiving apparatus and the Bluetooth sending apparatus. The third parameter indicates signal quality of a second Bluetooth data frame or signal strength of an interference signal of the second Bluetooth data frame.

Further, the negotiating a frame format of the Bluetooth data frame transmitted between the Bluetooth receiving apparatus and the Bluetooth sending apparatus may be triggered by the Bluetooth receiving apparatus, or may be triggered by the Bluetooth sending apparatus. The following separately describes a specific process in which the Bluetooth receiving apparatus triggers the frame format negotiation and a specific process in which the Bluetooth sending apparatus triggers the frame format negotiation.

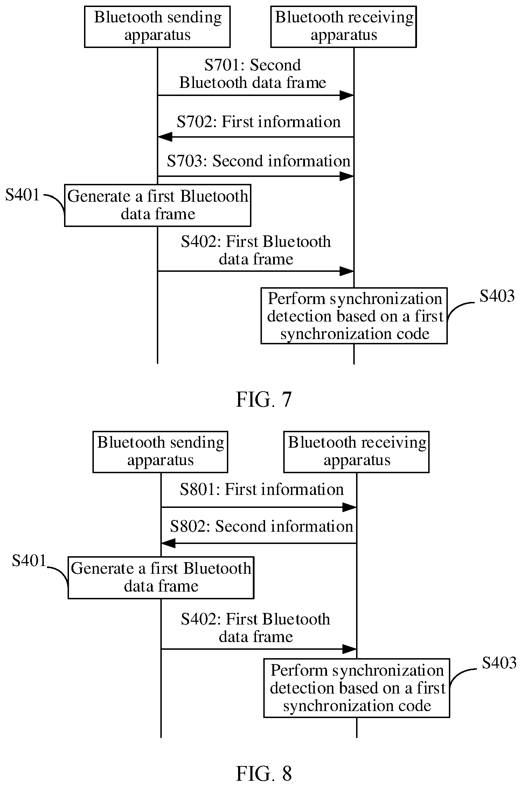

Optionally, in a possible implementation of the method shown in FIG. 4, the Bluetooth receiving apparatus may trigger the frame format negotiation. For details, refer to a method shown in FIG. 7. The method shown in FIG. 4 may further include S701 to S703.

S701: The Bluetooth sending apparatus sends the second Bluetooth data frame to the Bluetooth receiving apparatus.

The second Bluetooth data frame is different from the first Bluetooth data frame. The second Bluetooth data frame includes a second AC, a second synchronization code, and a second data field; or the second Bluetooth data frame includes a second AC and a second data field. The second Bluetooth data frame may further include a second preamble. For descriptions of the second preamble, the second AC, the second synchronization code, and the second data field, refer to the descriptions corresponding to the first preamble, the first AC, the first synchronization code, and the first data field. Details are not described herein again.

In this embodiment of this application, that the second Bluetooth data frame is different from the first Bluetooth data frame may be understood as that content included in the second Bluetooth data frame is different from content included in the first Bluetooth data frame. For example, the second Bluetooth data frame does not include a synchronization code, and the first Bluetooth data frame includes a synchronization code. For another example, a length of a synchronization code included in the second Bluetooth data frame is different from a length of a synchronization code included in the first Bluetooth data frame.

In a possible implementation, the Bluetooth sending apparatus sends the second Bluetooth data frame to the Bluetooth receiving apparatus through Bluetooth.

Correspondingly, the Bluetooth receiving apparatus receives the second Bluetooth data frame from the Bluetooth sending apparatus.

S702: The Bluetooth receiving apparatus sends first information to the Bluetooth sending apparatus.

The first information may request to switch the frame format of the Bluetooth data frame transmitted between the Bluetooth receiving apparatus and the Bluetooth sending apparatus. For example, the first information may request to reduce a length of a synchronization code in the Bluetooth data frame transmitted between the Bluetooth receiving apparatus and the Bluetooth sending apparatus; or the first information may request to increase a length of a synchronization code in the Bluetooth data frame transmitted between the Bluetooth receiving apparatus and the Bluetooth sending apparatus. It may be understood that, if the first information requests to reduce the length of the synchronization code in the Bluetooth data frame transmitted between the Bluetooth receiving apparatus and the Bluetooth sending apparatus, the length of the first synchronization code is less than a length of the second synchronization code; or if the first information requests to increase the length of the synchronization code in the Bluetooth data frame transmitted between the Bluetooth receiving apparatus and the Bluetooth sending apparatus, the length of the first synchronization code is greater than a length of the second synchronization code.

For example, the first information may include an identifier of at least one frame format supported by the Bluetooth receiving apparatus. Alternatively, the first information may include 1-bit indication information, and the 1-bit indication information indicates to switch the frame format of the Bluetooth data frame transmitted between the Bluetooth receiving apparatus and the Bluetooth sending apparatus. Alternatively, the first information may include an identifier of at least one frame format to which the Bluetooth receiving apparatus expects to switch. It may be understood that, in this embodiment of this application, the frame format supported by the Bluetooth receiving apparatus includes a frame format of the first Bluetooth data frame, and the frame format to which the Bluetooth receiving apparatus expects to switch also includes the frame format of the first Bluetooth data frame.

It may be understood that, if the Bluetooth receiving apparatus determines that communication quality is deteriorated or improved, the Bluetooth receiving apparatus may trigger frame format switching, that is, the Bluetooth receiving apparatus may send the first information to the Bluetooth sending apparatus. Further, the Bluetooth receiving apparatus may determine the communication quality based on the third parameter. The third parameter may indicate the signal quality of the second Bluetooth data frame. For a process in which the Bluetooth receiving apparatus determines the communication quality based on the third parameter, refer to the following examples:

Example 1: For example, the third parameter is a received signal strength indicator (received signal strength indicator, RSSI), a cyclic redundancy check (cyclic redundancy check, CRC) success rate, a frame synchronization success rate, a throughput rate, a signal-to-noise ratio, or the like. If the third parameter is greater than or equal to a preset third threshold, that is, the Bluetooth receiving apparatus determines that the communication quality is improved, the first information requests to reduce the length of the synchronization code in the Bluetooth data frame transmitted between the Bluetooth receiving apparatus and the Bluetooth sending apparatus. If the third parameter is less than a preset third threshold, that is, the Bluetooth receiving apparatus determines that the communication quality is deteriorated, the first information requests to increase the length of the synchronization code in the Bluetooth data frame transmitted between the Bluetooth receiving apparatus and the Bluetooth sending apparatus.

Example 2: For example, the third parameter is interference strength or the like. If the third parameter is greater than or equal to a preset seventh threshold, that is, the Bluetooth receiving apparatus determines that the communication quality is deteriorated, the first information requests to increase the length of the synchronization code in the Bluetooth data frame transmitted between the Bluetooth receiving apparatus and the Bluetooth sending apparatus. If the third parameter is less than a preset seventh threshold, that is, the Bluetooth receiving apparatus determines that the communication quality is improved, the first information requests to decrease the length of the synchronization code in the Bluetooth data frame transmitted between the Bluetooth receiving apparatus and the Bluetooth sending apparatus. It may be understood that, in this case, the method shown in FIG. 7 may not include S701.

The following describes a specific case in which the Bluetooth receiving apparatus sends the first information to the Bluetooth sending apparatus by using an example in which a user A enters an exhibition center for a visit, the Bluetooth sending apparatus is a mobile phone of the user A, the Bluetooth receiving apparatus is a Bluetooth headset of the user A, and the user A listens to music by using the Bluetooth headset. When the user A is outside the exhibition center, interference is weak, and the mobile phone and the Bluetooth headset may communicate with each other by using a frame format of the second Bluetooth data frame. When the user A enters the exhibition center, a quantity of surrounding users suddenly increases, and various interference exists. When detecting that a CRC success rate is reduced and is less than the preset third threshold, the Bluetooth headset sends the first information to the mobile phone, to increase a length of a synchronization code. When the user A walks into a booth, the quantity of surrounding users further increases, and interference strength increases. When detecting that a frame synchronization success rate is significantly reduced and is less than the preset third threshold, the Bluetooth headset sends the first information to the mobile phone, to increase the length of the synchronization code. When the user A walks into a conference hall, strong wireless fidelity (wireless-fidelity, Wi-Fi) signal interference occurs. When detecting that a throughput rate is reduced and is less than the preset third threshold, and detecting the strong interference, to be specific, interference strength is greater than or equal to the preset seventh threshold, the Bluetooth headset sends the first information to the mobile phone, to increase the length of the synchronization code. The user A goes out of the exhibition center after the visit. When detecting that the surrounding interference disappears, to be specific, the interference strength is less than the preset seventh threshold, the Bluetooth headset sends the first information to the mobile phone, to reduce the length of the synchronization code.

In a possible implementation, the Bluetooth receiving apparatus sends the first information to the Bluetooth sending apparatus within a transmission interval between the second Bluetooth data frame and the first Bluetooth data frame.

In a possible implementation, the Bluetooth receiving apparatus sends the first information to the Bluetooth sending apparatus through Bluetooth.

Correspondingly, the Bluetooth sending apparatus receives the first information from the Bluetooth receiving apparatus.

S703: The Bluetooth sending apparatus sends second information to the Bluetooth receiving apparatus.

The second information indicates to switch the frame format of the Bluetooth data frame transmitted between the Bluetooth receiving apparatus and the Bluetooth sending apparatus to the frame format of the first Bluetooth data frame. For example, the second information includes an identifier of the frame format of the first Bluetooth data frame.

In a possible implementation, the Bluetooth sending apparatus sends the second information to the Bluetooth receiving apparatus through Bluetooth.

Correspondingly, the Bluetooth receiving apparatus receives the second information from the Bluetooth sending apparatus.

It may be understood that, after S703, the Bluetooth sending apparatus and the Bluetooth receiving apparatus may communicate with each other by using the negotiated frame format. Further, the first information or the second information may carry an identifier of a slot. Subsequently, the Bluetooth sending apparatus and the Bluetooth receiving apparatus may communicate with each other, by using the negotiated frame format, in the slot indicated by the identifier of the slot.

It may be understood that, in addition to the method shown in FIG. 7, the Bluetooth receiving apparatus may further negotiate a frame format with the Bluetooth sending apparatus by exchanging information for a plurality of times. For example, the Bluetooth receiving apparatus may send an identifier of a frame format to the Bluetooth sending apparatus each time, and the Bluetooth sending apparatus determines, by using one piece of indication information, whether to use the frame format indicated by the Bluetooth receiving apparatus for communication. If the Bluetooth sending apparatus determines to use the frame format indicated by the Bluetooth receiving apparatus for communication, negotiation is completed. If the Bluetooth sending apparatus determines not to use the frame format indicated by the Bluetooth receiving apparatus for communication, the Bluetooth receiving apparatus sends an identifier of a frame format to the Bluetooth sending apparatus again until the Bluetooth sending apparatus determines to use the frame format indicated by the Bluetooth receiving apparatus for communication.

According to the method shown in FIG. 7, the Bluetooth receiving apparatus may negotiate the frame format with the Bluetooth sending apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves a success rate of receiving data by the Bluetooth receiving apparatus, and reduces power consumption of the Bluetooth sending apparatus and the Bluetooth receiving apparatus, to prolong use duration of the Bluetooth sending apparatus and the Bluetooth receiving apparatus.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S701 to S703. This is not limited in this embodiment.

The method shown in FIG. 7 describes a process in which the Bluetooth receiving apparatus triggers the frame format negotiation. In a specific application, the Bluetooth sending apparatus may alternatively trigger the frame format negotiation. For details, refer to the method shown in FIG. 8.

Optionally, as shown in FIG. 8, in a possible implementation of the method shown in FIG. 4, the method shown in FIG. 4 may further include S801 and S802.

S801: The Bluetooth sending apparatus sends first information to the Bluetooth receiving apparatus.

For descriptions of the first information, refer to the corresponding descriptions in S701. A difference lies in that the first information in S801 may include an identifier of at least one frame format supported by the Bluetooth sending apparatus. Alternatively, the first information in S801 may include 1-bit indication information. The 1-bit indication information indicates to switch the frame format of the Bluetooth data frame transmitted between the Bluetooth receiving apparatus and the Bluetooth sending apparatus. Alternatively, the first information in S801 may include an identifier of at least one frame format to which the Bluetooth sending apparatus expects to switch. It may be understood that, in this embodiment of this application, the frame format supported by the Bluetooth sending apparatus includes a frame format of the first Bluetooth data frame, and the frame format to which the Bluetooth sending apparatus expects to switch also includes the frame format of the first Bluetooth data frame.

It may be understood that, if the Bluetooth sending apparatus determines that signal strength of an interference signal increases or decreases, the Bluetooth sending apparatus may trigger frame format switching, that is, the Bluetooth sending apparatus may send the first information to the Bluetooth receiving apparatus.

In a possible implementation, if the third parameter is greater than or equal to a preset fourth threshold, the Bluetooth sending apparatus sends the first information to the Bluetooth receiving apparatus, where the first information requests to increase a length of a synchronization code in the Bluetooth data frame transmitted between the Bluetooth receiving apparatus and the Bluetooth sending apparatus; or if the third parameter is less than a preset fourth threshold, the Bluetooth sending apparatus sends the first information to the Bluetooth receiving apparatus, where the first information requests to reduce a length of a synchronization code in the Bluetooth data frame transmitted between the Bluetooth receiving apparatus and the Bluetooth sending apparatus. The third parameter may indicate signal strength of an interference signal.

In a possible implementation, the Bluetooth sending apparatus sends the first information to the Bluetooth receiving apparatus through Bluetooth.

Correspondingly, the Bluetooth receiving apparatus receives the first information from the Bluetooth sending apparatus.

S802: The Bluetooth receiving apparatus sends second information to the Bluetooth sending apparatus.

For a specific process of S802, refer to the corresponding descriptions in S703. Details are not described herein again.

It may be understood that, after S802, the Bluetooth sending apparatus and the Bluetooth receiving apparatus may communicate with each other by using the negotiated frame format. Further, the first information or the second information may carry an identifier of a slot. Subsequently, the Bluetooth sending apparatus and the Bluetooth receiving apparatus may communicate with each other, by using the negotiated frame format, in the slot indicated by the identifier of the slot.

It may be understood that, in addition to the method shown in FIG. 8, the Bluetooth sending apparatus may further negotiate a frame format with the Bluetooth receiving apparatus by exchanging information for a plurality of times. For example, the Bluetooth sending apparatus may send an identifier of a frame format to the Bluetooth receiving apparatus each time, and the Bluetooth receiving apparatus determines, by using one piece of indication information, whether to use the frame format indicated by the Bluetooth sending apparatus for communication. If the Bluetooth receiving apparatus determines to use the frame format indicated by the Bluetooth sending apparatus for communication, negotiation is completed. If the Bluetooth receiving apparatus determines not to use the frame format indicated by the Bluetooth sending apparatus for communication, the Bluetooth sending apparatus sends an identifier of a frame format to the Bluetooth receiving apparatus again until the Bluetooth receiving apparatus determines to use the frame format indicated by the Bluetooth sending apparatus for communication.

According to the method shown in FIG. 8, the Bluetooth sending apparatus may negotiate the frame format with the Bluetooth receiving apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves a success rate of receiving data by the Bluetooth receiving apparatus, and reduces power consumption of the Bluetooth sending apparatus and the Bluetooth receiving apparatus, to prolong use duration of the Bluetooth sending apparatus and the Bluetooth receiving apparatus.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S801 and S802. This is not limited in this embodiment.

Optionally, in a possible implementation of the method shown in FIG. 4, the synchronization code in the Bluetooth data frame transmitted between the Bluetooth receiving apparatus and the Bluetooth sending apparatus may be included in a first synchronization code set, to be specific, both the first synchronization code and a second synchronization code are included in the first synchronization code set. The first synchronization code set may include at least one synchronization code. The at least one synchronization code is any sequence with excellent correlation performance, for example, a pseudo-random sequence. In a possible implementation, the at least one synchronization code may include at least one of an m-sequence, a gold sequence, or a kasami sequence.

It may be understood that the first synchronization code set may be a subset of a second synchronization code set. The second synchronization code set may include all synchronization codes that may be used in a Bluetooth data frame transmitted between the Bluetooth receiving apparatus and the Bluetooth sending apparatus. During normal use, the Bluetooth sending apparatus and the Bluetooth receiving apparatus determine a synchronization code in the first synchronization code set, so that a size of a used synchronization code set can be reduced, and a requirement on hardware resources of the Bluetooth sending apparatus and the Bluetooth receiving apparatus can be reduced. However, if there are a large quantity of Bluetooth apparatuses around the Bluetooth sending apparatus and/or the Bluetooth receiving apparatus, a synchronization code used by the Bluetooth sending apparatus and the Bluetooth receiving apparatus may be the same as synchronization codes used by surrounding Bluetooth apparatuses. In this case, the Bluetooth sending apparatus, the Bluetooth receiving apparatus, or the surrounding Bluetooth apparatus may be incorrectly synchronized, to be specific, receive information that is not sent to the Bluetooth sending apparatus, the Bluetooth receiving apparatus, or the surrounding Bluetooth apparatus. This increases power consumption and signaling overheads of the Bluetooth sending apparatus, the Bluetooth receiving apparatus, and the surrounding Bluetooth apparatus.

To avoid the foregoing problem, in a multi-user scenario (a scenario in which a quantity of Bluetooth apparatuses around the Bluetooth sending apparatus and/or the Bluetooth receiving apparatus is greater than or equal to a preset first value), the Bluetooth sending apparatus and the Bluetooth receiving apparatus may dynamically adjust a used synchronization code set. For example, when there are a large quantity of Bluetooth apparatuses around the Bluetooth sending apparatus and/or the Bluetooth receiving apparatus, the Bluetooth sending apparatus and the Bluetooth receiving apparatus use a synchronization code set including a large quantity of synchronization codes, so that power consumption and signaling overheads are reduced while a success rate of synchronization detection is ensured. When there are a small quantity of Bluetooth apparatuses around the Bluetooth sending apparatus and/or the Bluetooth receiving apparatus, the Bluetooth sending apparatus and the Bluetooth receiving apparatus use a synchronization code set including a small quantity of synchronization codes, to reduce a requirement on hardware resources of the Bluetooth sending apparatus and the Bluetooth receiving apparatus. A specific process in which the Bluetooth sending apparatus and the Bluetooth receiving apparatus dynamically adjust the used synchronization code set may include but is not limited to the following two possible implementations.

In a possible implementation, the Bluetooth sending apparatus and the Bluetooth receiving apparatus may dynamically adjust a size of the first synchronization code set based on a quantity of Bluetooth apparatuses around the Bluetooth sending apparatus and/or the Bluetooth receiving apparatus. Specifically, if the quantity of Bluetooth apparatuses around the Bluetooth receiving apparatus and/or the Bluetooth sending apparatus is greater than or equal to the preset first value, a quantity of synchronization codes in the first synchronization code set is greater than or equal to a preset second value; or if the quantity of Bluetooth apparatuses around the Bluetooth receiving apparatus and/or the Bluetooth sending apparatus is less than the preset first value, a quantity of synchronization codes in the first synchronization code set is less than a preset second value. For example, when it is detected that the quantity of Bluetooth apparatuses around the Bluetooth receiving apparatus and/or the Bluetooth sending apparatus is greater than or equal to the preset first value, the Bluetooth sending apparatus and the Bluetooth receiving apparatus may negotiate to increase the quantity of synchronization codes in the first synchronization code, to make the quantity of synchronization codes in the first synchronization code set be greater than or equal to the preset second value. Similarly, when it is detected that the quantity of Bluetooth apparatuses around the Bluetooth receiving apparatus and/or the Bluetooth sending apparatus is less than the preset first value, the Bluetooth sending apparatus and the Bluetooth receiving apparatus may alternatively negotiate to reduce the quantity of synchronization codes in the first synchronization code, to make the quantity of synchronization codes in the first synchronization code set be less than the preset second value.

In another possible implementation, in addition to the first synchronization code set, the Bluetooth sending apparatus and the Bluetooth receiving apparatus may further maintain a plurality of other synchronization code sets, for example, a third synchronization code set and a fourth synchronization code set. The synchronization code sets are all subsets of the second synchronization code set, and a difference lies in that in the synchronization code sets, each synchronization code set includes a different quantity of synchronization codes. For example, the first synchronization code set includes 50 synchronization codes, the third synchronization code set includes 100 synchronization codes, and the fourth synchronization code set includes 150 synchronization codes. During normal use, the Bluetooth sending apparatus and the Bluetooth receiving apparatus determine a synchronization code in the first synchronization code set, so that a requirement on hardware resources of the Bluetooth sending apparatus and the Bluetooth receiving apparatus can be reduced. When the quantity of Bluetooth apparatuses around the Bluetooth sending apparatus and/or the Bluetooth receiving apparatus is greater than or equal to the preset first value, the Bluetooth sending apparatus and the Bluetooth receiving apparatus may determine a synchronization code in the third synchronization code set or the fourth synchronization code set.

It may be understood that, if a synchronization code in a Bluetooth data frame transmitted between the Bluetooth receiving apparatus and the Bluetooth sending apparatus is included in the first synchronization code set, the Bluetooth receiving apparatus and the Bluetooth sending apparatus may perform negotiation before data sending, and determine the synchronization code in the first synchronization code set. For example, the Bluetooth receiving apparatus and the Bluetooth sending apparatus negotiate a first random number. The first random number may be used for determining the first synchronization code in the first synchronization code set. The Bluetooth receiving apparatus and the Bluetooth sending apparatus may further negotiate a second random number. The second random number is used for determining a first time interval, and the first time interval is a time interval for updating a synchronization code in a Bluetooth data frame transmitted between the Bluetooth receiving apparatus and the Bluetooth sending apparatus.

Further, negotiation of the first random number and/or the second random number may be triggered by the Bluetooth receiving apparatus, or may be triggered by the Bluetooth sending apparatus. The following separately describes specific processes in which the Bluetooth receiving apparatus triggers negotiation of the first random number and/or the second random number, and the Bluetooth sending apparatus triggers negotiation of the first random number and/or the second random number.

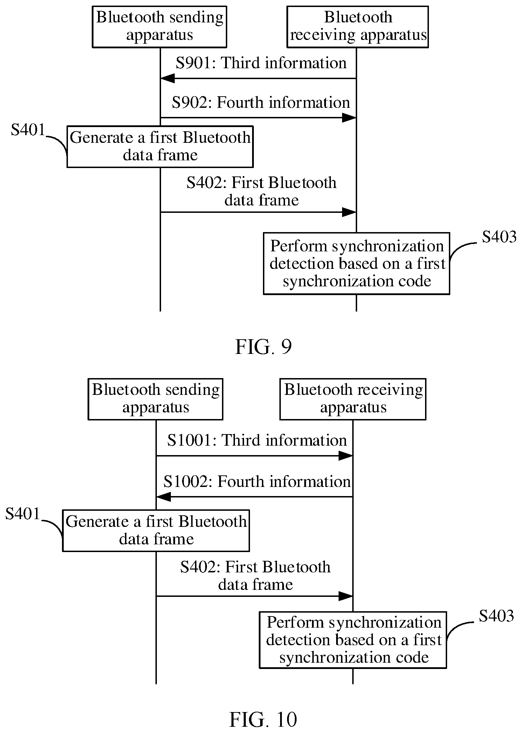

Optionally, in a possible implementation of the method shown in FIG. 4, the Bluetooth receiving apparatus may trigger negotiation of the first random number and/or the second random number. For details, refer to a method shown in FIG. 9. The method shown in FIG. 4 may further include S901 and S902.

S901: The Bluetooth receiving apparatus sends third information to the Bluetooth sending apparatus.

The third information may be used for negotiating the first random number. For example, the third information includes at least one random number. The at least one random number includes the first random number. The first random number may be used for determining the first synchronization code in the first synchronization code set. For example, the first random number may be used for determining an identifier, in the first synchronization code set, of the synchronization code in the Bluetooth data frame transmitted between the Bluetooth receiving apparatus and the Bluetooth sending apparatus. For example, the identifier, in the first synchronization code set, of the synchronization code in the Bluetooth data frame transmitted between the Bluetooth receiving apparatus and the Bluetooth sending apparatus may be output by inputting the first random number into a pseudo-random generator.

It may be understood that, in a multi-user scenario, to avoid incorrect synchronization, improve a success rate of synchronization detection, and reduce power consumption and signaling overheads, the synchronization code in the Bluetooth data frame transmitted between the Bluetooth receiving apparatus and the Bluetooth sending apparatus may be further periodically updated. In this case, the Bluetooth receiving apparatus needs to trigger synchronization code negotiation again. To prevent the Bluetooth receiving apparatus from frequently triggering synchronization code negotiation, the Bluetooth sending apparatus and the Bluetooth receiving apparatus may determine a time interval for updating a synchronization code in a Bluetooth data frame transmitted between the Bluetooth receiving apparatus and the Bluetooth sending apparatus, namely, the first time interval. Subsequently, the Bluetooth sending apparatus and the Bluetooth receiving apparatus may update, at each first time interval, the synchronization code in the Bluetooth data frame transmitted between the Bluetooth receiving apparatus and the Bluetooth sending apparatus.

Methods for determining the first time interval by the Bluetooth sending apparatus and the Bluetooth receiving apparatus may include but are not limited to the following three manners:

Manner 1: The first time interval is predefined. To be specific, the first time interval is defined in a protocol, or is stored in the Bluetooth sending apparatus and the Bluetooth receiving apparatus at delivery.

Manner 2: The first random number may alternatively be used for determining the first time interval. For example, the first time interval may be output by inputting the first random number into a pseudo-random generator.

Manner 3: The third information may be further used for negotiating the second random number. The second random number may be used for determining the first time interval. For example, the first time interval may be output by inputting the second random number into a pseudo-random generator.

In a possible implementation, the Bluetooth receiving apparatus sends the third information to the Bluetooth sending apparatus through Bluetooth.

Correspondingly, the Bluetooth sending apparatus receives the third information from the Bluetooth receiving apparatus.

S902: The Bluetooth sending apparatus sends fourth information to the Bluetooth receiving apparatus.

The fourth information may indicate the first random number. For example, the fourth information includes the first random number.

In a possible implementation, the Bluetooth sending apparatus sends the fourth information to the Bluetooth receiving apparatus through Bluetooth.

It may be understood that, for the foregoing manner 1, after S902, the Bluetooth sending apparatus and the Bluetooth receiving apparatus may determine, based on the first random number, the synchronization code in the Bluetooth data frame transmitted between the Bluetooth receiving apparatus and the Bluetooth sending apparatus, and communicate with each other by using the synchronization code. The Bluetooth sending apparatus and the Bluetooth receiving apparatus may further obtain the first time interval. Subsequently, the Bluetooth sending apparatus and the Bluetooth receiving apparatus may update, at each first time interval, the synchronization code in the Bluetooth data frame transmitted between the Bluetooth receiving apparatus and the Bluetooth sending apparatus, and communicate with each other by using an updated synchronization code.

For the foregoing manner 2, after S902, the Bluetooth sending apparatus and the Bluetooth receiving apparatus may determine, based on the first random number, the synchronization code in the Bluetooth data frame transmitted between the Bluetooth receiving apparatus and the Bluetooth sending apparatus, and communicate with each other by using the synchronization code. The Bluetooth sending apparatus and the Bluetooth receiving apparatus may further determine the first time interval based on the first random number. Subsequently, the Bluetooth sending apparatus and the Bluetooth receiving apparatus may update, at each first time interval, the synchronization code in the Bluetooth data frame transmitted between the Bluetooth receiving apparatus and the Bluetooth sending apparatus, and communicate with each other by using an updated synchronization code.

For the foregoing manner 3, after S902, the Bluetooth sending apparatus and the Bluetooth receiving apparatus may determine, based on the first random number, the synchronization code in the Bluetooth data frame transmitted between the Bluetooth receiving apparatus and the Bluetooth sending apparatus, and communicate with each other by using the synchronization code. The Bluetooth sending apparatus and the Bluetooth receiving apparatus may further determine the first time interval based on the second random number. Subsequently, the Bluetooth sending apparatus and the Bluetooth receiving apparatus may update, at each first time interval, the synchronization code in the Bluetooth data frame transmitted between the Bluetooth receiving apparatus and the Bluetooth sending apparatus, and communicate with each other by using an updated synchronization code.

It may be understood that, in addition to the method shown in FIG. 9, the Bluetooth sending apparatus may further negotiate a synchronization code with the Bluetooth receiving apparatus by exchanging information for a plurality of times. For example, the Bluetooth receiving apparatus may send a random number to the Bluetooth sending apparatus each time, and the Bluetooth sending apparatus determines, by using one piece of indication information, whether to use the random number indicated by the Bluetooth receiving apparatus to determine a synchronization code in a Bluetooth data frame transmitted between the Bluetooth receiving apparatus and the Bluetooth sending apparatus. If the Bluetooth sending apparatus determines to use the random number indicated by the Bluetooth receiving apparatus to determine the synchronization code in the Bluetooth data frame transmitted between the Bluetooth receiving apparatus and the Bluetooth sending apparatus, the negotiation is completed. If the Bluetooth sending apparatus determines not to use the random number indicated by the Bluetooth receiving apparatus to determine the synchronization code in the Bluetooth data frame transmitted between the Bluetooth receiving apparatus and the Bluetooth sending apparatus, the Bluetooth receiving apparatus sends a random number to the Bluetooth sending apparatus again, until the Bluetooth sending apparatus determines to use the random number indicated by the Bluetooth receiving apparatus to determine the synchronization code in the Bluetooth data frame transmitted between the Bluetooth receiving apparatus and the Bluetooth sending apparatus.

Correspondingly, the Bluetooth receiving apparatus receives the fourth information from the Bluetooth sending apparatus.

It may be understood that S901 and S902 may be further applied to the embodiments shown in FIG. 7 and FIG. 8. For example, S901 and S902 may be performed before S401 or after S403 in the embodiment shown in FIG. 7. S901 and S902 may alternatively be performed before S401 or after S403 in the embodiment shown in FIG. 8.

According to the method shown in FIG. 9, the Bluetooth receiving apparatus may negotiate the synchronization code with the Bluetooth sending apparatus, and dynamically adjust the synchronization code in the Bluetooth data frame transmitted between the Bluetooth receiving apparatus and the Bluetooth sending apparatus. In a multi-user scenario, incorrect synchronization is avoided, a success rate of synchronization detection is improved, and power consumption and signaling overheads are reduced.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S901 and S902. This is not limited in this embodiment.

The method shown in FIG. 9 describes a process in which the Bluetooth receiving apparatus triggers the synchronization code negotiation. In a specific application, the Bluetooth sending apparatus may alternatively trigger the synchronization code negotiation. For details, refer to the method shown in FIG. 10.

Optionally, as shown in FIG. 10, in a possible implementation of the method shown in FIG. 4, the method shown in FIG. 4 may further include S1001 and S1002.

S1001: The Bluetooth sending apparatus sends third information to the Bluetooth receiving apparatus.

S1002: The Bluetooth receiving apparatus sends fourth information to the Bluetooth sending apparatus.

For a specific process of S1001 and S1002, refer to the corresponding descriptions in S901 and S902. Details are not described herein again.

According to the method shown in FIG. 10, the Bluetooth sending apparatus may negotiate the synchronization code with the Bluetooth receiving apparatus, and dynamically adjust the synchronization code in the Bluetooth data frame transmitted between the Bluetooth receiving apparatus and the Bluetooth sending apparatus. In a multi-user scenario, incorrect synchronization is avoided, a success rate of synchronization detection is improved, and power consumption and signaling overheads are reduced.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S1001 and S1002. This is not limited in this embodiment.

It may be understood that, in a process in which the Bluetooth sending apparatus sends the first Bluetooth data frame to the Bluetooth receiving apparatus, the first Bluetooth data frame needs to be modulated to a to-be-sent signal. After being transmitted through a channel, the sent signal arrives at the Bluetooth receiving apparatus. The sent signal is affected by a plurality of distortions in a process in which the sent signal is transmitted through the channel. As a result, a signal received by the Bluetooth receiving apparatus is different from the sent signal. Therefore, in a process in which the Bluetooth receiving apparatus receives a received signal, the Bluetooth receiving apparatus detects channel information, and compensates for and demodulates the received signal by using the channel information, to obtain demodulation information. However, a current method for detecting channel information has a large defect. As a result, an error between the first Bluetooth data frame and demodulation information that is obtained by the Bluetooth receiving apparatus by compensating for and demodulating a received signal by using channel information is also large. This affects receiving performance of the Bluetooth receiving apparatus. To improve receiving performance of the Bluetooth receiving apparatus, an embodiment of this application provides another Bluetooth communication method. As shown in FIG. 11, the Bluetooth communication method includes S1101 to S1103.

S1101: A Bluetooth sending apparatus generates a first Bluetooth data frame.

The first Bluetooth data frame may include a first AC, a first data field, and N first pilots. The first Bluetooth data frame may further include a first preamble. The first pilot is a pilot with a known phase, and N is a positive integer. In other words, when the Bluetooth sending apparatus sends the first Bluetooth data frame, a Bluetooth receiving apparatus, or the Bluetooth sending apparatus and the Bluetooth receiving apparatus learns of a phase of the first pilot. In embodiments of this application, the pilot may also be referred to as a phase symbol, a pilot symbol, a symbol, a pilot, or the like. This is not limited. For descriptions of the Bluetooth sending apparatus, the Bluetooth receiving apparatus, the first preamble, the first AC, and the first data field, refer to the corresponding descriptions in S401. Details are not described herein again.

It may be understood that the N first pilots may be the same or may be different. For example, the N first pilots may be pilots that are completely the same, or the N first pilots may be pilots that occupy a same quantity of bits but have different values or phases; or the N first pilots may be pilots that occupy different quantities of bits. It should be understood that the first pilot is not specifically limited in this application. The first pilot may be a pilot with a known phase; or the first pilot may be a pseudo-random number or the like.

Further, in the first Bluetooth data frame, the first pilot is inserted into at least one of the following: the first preamble, the first AC, or the first data field.

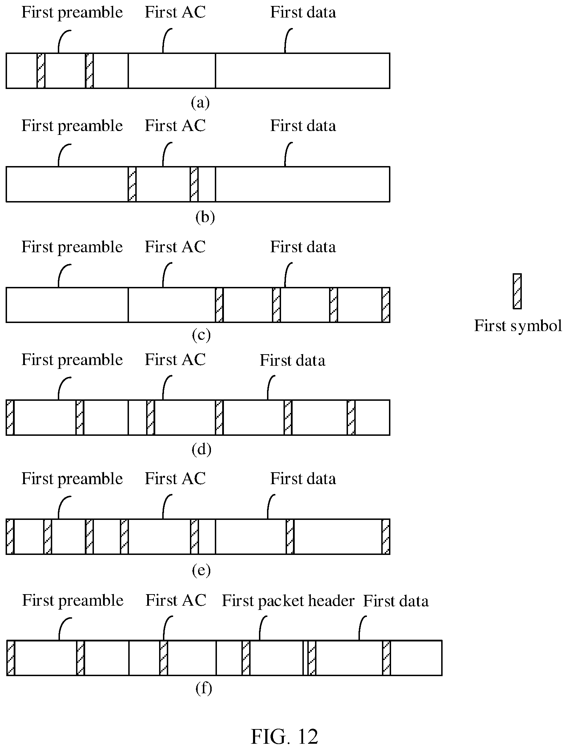

For example, a frame format of the first Bluetooth data frame may be shown in FIG. 12. In (a) in FIG. 12, the first pilot is inserted into the first preamble. In (b) in FIG. 12, the first pilot is inserted into the first AC. In (c) in FIG. 12, the first pilot is inserted into the first data field.

In a possible implementation, the first pilot is inserted into the first Bluetooth data frame in proportion. For example, the first pilot is inserted into at least one of the following in an equal proportion: the first preamble, the first AC, or the first data field. In other words, in the first Bluetooth data frame, two adjacent first pilot intervals have a same quantity of bits. In (d) in FIG. 12, the first pilot is inserted into the first preamble, the first AC, and the first data field in an equal proportion. The first pilot may be alternatively inserted into at least one of the following in an unequal proportion: the first preamble, the first AC, or the first data field. In other words, in the first Bluetooth data frame, two adjacent first pilot intervals have different quantities of bits. In (e) in FIG. 12, the first pilot is inserted into the first preamble, the first AC, and the first data field in an unequal proportion.

It may be understood that the first Bluetooth data frame may further include other content. For example, in (f) in FIG. 12, the first Bluetooth data frame further includes a first packet header. The first pilot is inserted into the first preamble, the first AC, and the first data field in an equal proportion.

It may be understood that, for a part that affects receiving of a subsequent Bluetooth data frame, for example, the first packet header, a proportion of the first pilot may be increased. For a part that has small impact on receiving of a subsequent Bluetooth data frame, for example, the first data field, a proportion of the first pilot may be reduced.

It may be understood that the format of the Bluetooth data frame shown in FIG. 12 is merely an example of the format of the first Bluetooth data frame. In a specific application, the first Bluetooth data frame may include more or less content than the Bluetooth data frame shown in FIG. 12. This is not limited in embodiments of this application.

In a possible implementation, before S1101, the Bluetooth sending apparatus obtains a first parameter, and determines a proportion of the first pilot in the first Bluetooth data frame based on the first parameter. The first parameter may indicate a requirement of a Bluetooth service and/or a communication parameter of Bluetooth communication. Further, the requirement of the Bluetooth service may indicate one of the following parameters: data reliability required by the service, a data delay required by the service, or another parameter or requirement for measuring signal quality. The communication parameter of the Bluetooth communication may indicate one of the following parameters: a channel phase change speed of a channel for transmitting the first Bluetooth data frame, a data retransmission rate, a transmission distance of the first Bluetooth data frame, signal strength of an interference signal received by the Bluetooth receiving apparatus, a transmit power used by the Bluetooth sending apparatus to send the first Bluetooth data frame, a signal-to-noise ratio of the channel for transmitting the first Bluetooth data frame, an error correction capability of a coding scheme of the first Bluetooth data frame, or another parameter or requirement for measuring signal quality. In this case, the proportion of the first pilot in the first Bluetooth data frame may be dynamically adjusted based on the first parameter. Flexibility is high.

The following describes in detail a process in which the Bluetooth sending apparatus determines the proportion of the first pilot in the first Bluetooth data frame based on the first parameter. That the Bluetooth sending apparatus determines the proportion of the first pilot in the first Bluetooth data frame based on the first parameter may include but is not limited to the following two cases.

Case 3: The first parameter indicates the channel phase change speed of the channel for transmitting the first Bluetooth data frame, the data retransmission rate, the data reliability required by the service, the transmission distance of the first Bluetooth data frame, the signal strength of the interference signal received by the Bluetooth receiving apparatus. If the first parameter is greater than or equal to a first threshold, the proportion of the first pilot in the first Bluetooth data frame is greater than or equal to a first proportion. If the first parameter is less than or equal to a preset second threshold, the proportion of the first pilot in the first Bluetooth data frame is less than or equal to a second proportion. The first threshold and the preset second threshold may be the same or different, and the first proportion and the second proportion may be the same or different.

To be specific, when a channel phase of the channel for transmitting the first Bluetooth data frame changes quickly (for example, the channel phase changes rapidly or has a large amplitude with time), the data retransmission rate is high, the Bluetooth service requires high reliability (for example, in a scenario in which a Bluetooth headset listens to high-definition music), the transmission distance of the first Bluetooth data frame is long (for example, in a scenario in which a vehicle location is searched for through Bluetooth positioning in a garage, a long distance needs to be covered), or the signal strength of the interference signal received by the Bluetooth receiving apparatus is strong (for example, when Bluetooth communication is performed in a place with dense people and devices such as an airport or a railway station, strength of an interference signal is generally strong), the proportion of the first pilot in the first Bluetooth data frame may be appropriately increased, to improve receiving performance of the Bluetooth receiving apparatus. When a channel phase of the channel for transmitting the first Bluetooth data frame changes slowly (for example, the channel phase changes slowly or has a small amplitude with time), the data retransmission rate is low, there is no high requirement on the reliability of the Bluetooth service (for example, in a scenario in which a Bluetooth headset performs a common voice call), the transmission distance of the first Bluetooth data frame is short (for example, in a scenario in which Bluetooth apparatuses in a bedroom communicate with each other), or the signal strength of the interference signal received by the Bluetooth receiving apparatus is weak (for example, when Bluetooth communication is performed at home, there is a small quantity of interference sources and signal strength of an interference signal is also weak), the proportion of the first pilot in the first Bluetooth data frame may be appropriately reduced, so that signaling overheads are reduced while receiving performance of the Bluetooth receiving apparatus is ensured.

For example, the first parameter includes a rotation angle of the channel phase of the channel for transmitting the first Bluetooth data frame within one second, the first threshold is 100 times of 360 degrees, the preset second threshold is 30 times of 360 degrees, the first proportion is 20%, and the second proportion is 5%. If the rotation angle of the channel phase of the channel for transmitting the first Bluetooth data frame within one second is 150 times of 360 degrees, the proportion of the first pilot in the first Bluetooth data frame needs to be greater than or equal to 20%, for example, 25%. If the rotation angle of the channel phase of the channel for transmitting the first Bluetooth data frame within one second is 25 times of 360 degrees, the proportion of the first pilot in the first Bluetooth data frame needs to be less than or equal to 5%, for example, 5%; or the first Bluetooth data frame may not include the first pilot.

For example, the first parameter includes the data retransmission rate, the first threshold is 20%, the preset second threshold is 40%, the first proportion is 30%, and the second proportion is 15%. If the data retransmission rate is 50%, the proportion of the first pilot in the first Bluetooth data frame needs to be greater than or equal to 30%, for example, 31%. If the data retransmission rate is 15%, the proportion of the first pilot in the first Bluetooth data frame needs to be less than or equal to 15%, for example, 10%; or the first Bluetooth data frame may not include the first pilot.

For example, the first parameter includes a level of a data reliability requirement, where a higher level of the data reliability requirement indicates higher data reliability required by the service, and a lower level of the data reliability requirement indicates lower data reliability required by the service; the first threshold is 5; the preset second threshold is 2; the first proportion is 25%; and the second proportion is 5%. If the level of the data reliability requirement is 5, the proportion of the first pilot in the first Bluetooth data frame needs to be greater than or equal to 25%, for example, 30%. In this case, a modulation scheme with a higher rate may be further used. If the level of the data reliability requirement is 2, the proportion of the first pilot in the first Bluetooth data frame needs to be less than or equal to 5%, for example, 4%; or the first Bluetooth data frame may not include the first pilot. In this case, a modulation scheme with a lower rate may be further used.

For example, the first parameter includes the transmission distance of the first Bluetooth data frame, both the first threshold and the preset second threshold are 15 meters, the first proportion is 20%, and the second proportion is 8%. If the transmission distance of the first Bluetooth data frame is 25 meters, the proportion of the first pilot in the first Bluetooth data frame needs to be greater than or equal to 20%, for example, 22%. If the transmission distance of the first Bluetooth data frame is 8 meters, the proportion of the first pilot in the first Bluetooth data frame needs to be less than or equal to 8%, for example, 5%; or the first Bluetooth data frame may not include the first pilot.

For example, the first parameter includes the signal strength of the interference signal received by the Bluetooth receiving apparatus, the first threshold is -50 dBm, the preset second threshold is -80 dBm, and both the first proportion and the second proportion are 15%. If the signal strength of the interference signal received by the Bluetooth receiving apparatus is -45 dBm, the proportion of the first pilot in the first Bluetooth data frame needs to be greater than or equal to 15%, for example, 20%. If the signal strength of the interference signal received by the Bluetooth receiving apparatus is -90 dBm, the proportion of the first pilot in the first Bluetooth data frame needs to be less than 15%, for example, 12%; or the first Bluetooth data frame may not include the first pilot.

It may be understood that the foregoing examples are merely examples of the first parameter. In a specific application, the first parameter may alternatively indicate another parameter, for example, complexity of a channel between the Bluetooth sending apparatus and the Bluetooth receiving apparatus. This is not limited.

Case 4: The first parameter indicates the data delay required by the service, the transmit power used by the Bluetooth sending apparatus to send the first Bluetooth data frame, the signal-to-noise ratio of the channel for transmitting the first Bluetooth data frame, or the error correction capability of the coding scheme of the first Bluetooth data frame. If the first parameter is less than or equal to a first threshold, the proportion of the first pilot in the first Bluetooth data frame is greater than or equal to a first proportion. If the first parameter is greater than or equal to a preset second threshold, the proportion of the first pilot in the first Bluetooth data frame is less than or equal to a second proportion. The first threshold and the preset second threshold may be the same or different, and the first proportion and the second proportion may be the same or different.

To be specific, when the data delay required by the service is short (for example, in a scenario in which a Bluetooth headset is connected to a mobile phone to play a game), the transmit power used by the Bluetooth sending apparatus to send the first Bluetooth data frame is low (for example, in a scenario in which a wearable Bluetooth apparatus needs to reduce the transmit power to reduce power consumption), the signal-to-noise ratio of the channel for transmitting the first Bluetooth data frame is low, or the error correction capability of the coding scheme of the first Bluetooth data frame is weak (for example, the error correction capability needs to be reduced to obtain another performance indicator), the proportion of the first pilot in the first Bluetooth data frame may be appropriately increased, so as to improve receiving performance of the Bluetooth receiving apparatus. When a long delay can be tolerated (for example, in a scenario in which a common file is transmitted between two Bluetooth mobile phones), the transmit power used by the Bluetooth sending apparatus to send the first Bluetooth data frame is high (for example, in a scenario in which Bluetooth communication between desktop computers is insensitive to power consumption), the signal-to-noise ratio of the channel for transmitting the first Bluetooth data frame is high, or the error correction capability of the coding scheme of the first Bluetooth data frame is strong, the proportion of the first pilot in the first Bluetooth data frame may be appropriately reduced, so that receiving performance of the Bluetooth receiving apparatus is ensured, and signaling overheads are reduced.

For example, the first parameter includes the data delay required by the service, the first threshold is 5 ms, the preset second threshold is 10 ms, the first proportion is 25%, and the second proportion is 10%. If the data delay required by the service is 1 ms, the proportion of the first pilot in the first Bluetooth data frame needs to be greater than or equal to 25%, for example, 30%. If the data delay required by the service is 12 ms, the proportion of the first pilot in the first Bluetooth data frame needs to be less than or equal to 10%, for example, 10%; or the first Bluetooth data frame may not include the first pilot.

For example, the first parameter includes the transmit power used by the Bluetooth sending apparatus to send the first Bluetooth data frame, both the first threshold and the preset second threshold are -40 dBm, the first proportion is 20%, and the second proportion is 8%. If the transmit power used by the Bluetooth sending apparatus to send the first Bluetooth data frame is -60 dBm, the proportion of the first pilot in the first Bluetooth data frame needs to be greater than or equal to 20%, for example, 21%. If the transmit power used by the Bluetooth sending apparatus to send the first Bluetooth data frame is -25 dBm, the proportion of the first pilot in the first Bluetooth data frame needs to be less than or equal to 8%, for example, 8%; or the first Bluetooth data frame may not include the first pilot.

For example, the first parameter includes the signal-to-noise ratio of the channel for transmitting the first Bluetooth data frame, the first threshold is 20 decibels (dB), the preset second threshold is 30 dB, and both the first proportion and the second proportion are 15%. If the signal-to-noise ratio of the channel for transmitting the first Bluetooth data frame is 10 dB, the proportion of the first pilot in the first Bluetooth data frame needs to be greater than 15%, for example, 25%. If the signal-to-noise ratio of the channel for transmitting the first Bluetooth data frame is 40 dB, the proportion of the first pilot in the first Bluetooth data frame needs to be less than or equal to 15%, for example, 10%; or the first Bluetooth data frame may not include the first pilot.

For example, the first parameter includes the error correction capability level of the coding scheme of the first Bluetooth data frame, where a higher error correction capability level of the coding scheme of the first Bluetooth data frame indicates a stronger error correction capability of the coding scheme of the first Bluetooth data frame, and a lower error correction capability level of the coding scheme of the first Bluetooth data frame indicates a weaker error correction capability of the coding scheme of the first Bluetooth data frame; the first threshold is 2; the preset second threshold is 4; the first proportion is 25%; and the second proportion is 10%. If the error correction capability level of the coding scheme of the first Bluetooth data frame is 2, the proportion of the first pilot in the first Bluetooth data frame needs to be greater than or equal to 25%, for example, 28%. If the error correction capability level of the coding scheme of the first Bluetooth data frame is 5, the proportion of the first pilot in the first Bluetooth data frame needs to be less than or equal to 10%, for example, 9%; or the first Bluetooth data frame may not include the first pilot.

It may be understood that, in a specific application, the Bluetooth sending apparatus may alternatively determine the proportion of the first pilot in the first Bluetooth data frame by combining a plurality of parameters in the foregoing parameters.

S1102: The Bluetooth sending apparatus sends the first Bluetooth data frame to the Bluetooth receiving apparatus.

In a possible implementation, the Bluetooth sending apparatus sends the first Bluetooth data frame to the Bluetooth receiving apparatus through Bluetooth.

Correspondingly, the Bluetooth receiving apparatus receives the first Bluetooth data frame from the Bluetooth sending apparatus.

S1103: The Bluetooth receiving apparatus detects, based on the first pilot, a channel phase and/or a channel amplitude of the channel for transmitting the first Bluetooth data frame.

In a possible implementation, the Bluetooth receiving apparatus subtracts a phase of the first pilot when the Bluetooth sending apparatus sends the first Bluetooth data frame from a phase of the first pilot when the Bluetooth receiving apparatus receives the first Bluetooth data frame, to obtain the channel phase of the channel for transmitting the first Bluetooth data frame.

For example, when the Bluetooth sending apparatus sends the first Bluetooth data frame, the phase of the first pilot is $\theta(t)$, and when the Bluetooth receiving apparatus receives the first Bluetooth data frame, the phase of the first pilot is $\sigma(t)$. In this case, the channel phase of the channel for transmitting the first Bluetooth data frame is $\phi(t) = \sigma(t) - \theta(t)$.

It may be understood that, when the Bluetooth sending apparatus sends a signal, an amplitude of the signal is usually a fixed value. That is, an amplitude of the first Bluetooth data frame or the first pilot sent by the Bluetooth sending apparatus is known. In this case, the Bluetooth receiving apparatus divides the amplitude of the first pilot when the Bluetooth receiving apparatus receives the first Bluetooth data frame by the amplitude of the first pilot when the Bluetooth sending apparatus sends the first Bluetooth data frame, to obtain the channel amplitude of the channel for transmitting the first Bluetooth data frame.

For example, when the Bluetooth sending apparatus sends the first Bluetooth data frame, the amplitude of the first pilot is x(t), and when the Bluetooth receiving apparatus receives the first Bluetooth data frame, the amplitude of the first pilot is $y(t)$. In this case, the channel amplitude of the channel for transmitting the first Bluetooth data frame is

$$h(t) = \frac{y(t)}{x(t)}.$$

According to the method shown in FIG. 11, the N first pilots whose phases are known may be inserted into the first Bluetooth data frame, and the Bluetooth receiving apparatus may detect, based on the first pilot, the channel phase and/or the channel amplitude of the channel for transmitting the first Bluetooth data frame. Receiving performance of the Bluetooth receiving apparatus can be improved. In addition, a process of detecting the channel phase and/or the channel amplitude of the channel for transmitting the first Bluetooth data frame can be further simplified.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S1101 to S1103. This is not limited in this embodiment.

That the first pilot may be inserted into the first Bluetooth data frame is described in the method shown in FIG. 11. In a specific application, the Bluetooth sending apparatus and the Bluetooth receiving apparatus may further negotiate a frame format, and perform Bluetooth communication by using the negotiated frame format at a subsequent Bluetooth data frame transmission moment. For example, the Bluetooth sending apparatus may negotiate, with the Bluetooth receiving apparatus based on a third parameter, a frame format of the Bluetooth data frame transmitted between the Bluetooth receiving apparatus and the Bluetooth sending apparatus. The third parameter indicates signal quality of a second Bluetooth data frame or signal strength of an interference signal of the second Bluetooth data frame.

Further, the negotiating a frame format of the Bluetooth data frame transmitted between the Bluetooth receiving apparatus and the Bluetooth sending apparatus may be triggered by the Bluetooth receiving apparatus, or may be triggered by the Bluetooth sending apparatus. The following separately describes a specific process in which the Bluetooth receiving apparatus triggers the frame format negotiation and a specific process in which the Bluetooth sending apparatus triggers the frame format negotiation.

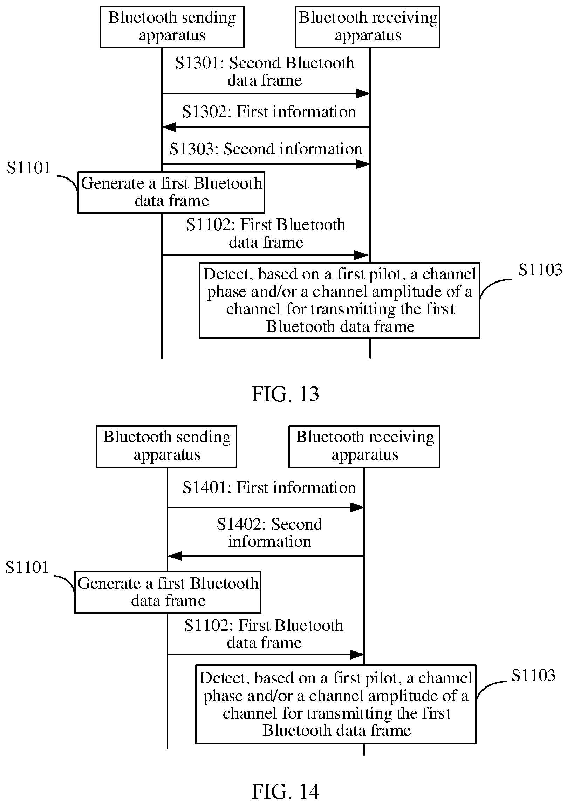

Optionally, in a possible implementation of the method shown in FIG. 11, the Bluetooth receiving apparatus may trigger the frame format negotiation. For details, refer to a method shown in FIG. 13. The method shown in FIG. 11 may further include S1301 to S1303.

S1301: The Bluetooth sending apparatus sends the second Bluetooth data frame to the Bluetooth receiving apparatus.

The second Bluetooth data frame is different from the first Bluetooth data frame. The second Bluetooth data frame includes a second AC, a second data field, and M first pilots; or the second Bluetooth data frame includes a second AC and a second data field. The second Bluetooth data frame may further include a second preamble. M is a positive integer. The first pilot in the second Bluetooth data frame may be the same as or different from the first pilot in the first Bluetooth data frame. For example, the first pilots in the second Bluetooth data frame and the first Bluetooth data frame are completely the same, or the first pilots in the second Bluetooth data frame and the first Bluetooth data frame may be pilots that occupy a same quantity of bits but have different values or phases. Alternatively, the first pilots in the second Bluetooth data frame and the first Bluetooth data frame may be pilots that occupy different quantities of bits, provided that phases of the first pilots in the second Bluetooth data frame and the first Bluetooth data frame are known. For descriptions of the second preamble, the second AC, and the second data field, refer to the descriptions corresponding to the first preamble, the first AC, and the first data field. Details are not described herein again.

In this embodiment of this application, that the second Bluetooth data frame is different from the first Bluetooth data frame may be understood as that content included in the second Bluetooth data frame is different from content included in the first Bluetooth data frame. For example, the second Bluetooth data frame does not include the first pilot, and the first Bluetooth data frame includes the first pilot. For another example, the first pilot included in the second Bluetooth data frame is different from the first pilot included in the first Bluetooth data frame.

In a possible implementation, the Bluetooth sending apparatus sends the second Bluetooth data frame to the Bluetooth receiving apparatus through Bluetooth.

Correspondingly, the Bluetooth receiving apparatus receives the second Bluetooth data frame from the Bluetooth sending apparatus.

S1302: The Bluetooth receiving apparatus sends first information to the Bluetooth sending apparatus.

The first information may request to switch the frame format of the Bluetooth data frame transmitted between the Bluetooth receiving apparatus and the Bluetooth sending apparatus. For example, the first information may request to reduce a proportion of a first pilot in the Bluetooth data frame transmitted between the Bluetooth receiving apparatus and the Bluetooth sending apparatus; or the first information may request to increase a proportion of a first pilot in the Bluetooth data frame transmitted between the Bluetooth receiving apparatus and the Bluetooth sending apparatus. It may be understood that, if the first information requests to reduce the proportion of the first pilot in the Bluetooth data frame transmitted between the Bluetooth receiving apparatus and the Bluetooth sending apparatus, the proportion of the first pilot in the first Bluetooth data frame is less than a proportion of the first pilot in the second Bluetooth data frame. If the first information requests to increase the proportion of the first pilot in the Bluetooth data frame transmitted between the Bluetooth receiving apparatus and the Bluetooth sending apparatus, the proportion of the first pilot in the first Bluetooth data frame is greater than a proportion of the first pilot in the second Bluetooth data frame.

For example, the first information may include an identifier of at least one frame format supported by the Bluetooth receiving apparatus. Alternatively, the first information may include 1-bit indication information, and the 1-bit indication information indicates to switch the frame format of the Bluetooth data frame transmitted between the Bluetooth receiving apparatus and the Bluetooth sending apparatus. Alternatively, the first information may include an identifier of at least one frame format to which the Bluetooth receiving apparatus expects to switch. It may be understood that, in this embodiment of this application, the frame format supported by the Bluetooth receiving apparatus includes a frame format of the first Bluetooth data frame, and the frame format to which the Bluetooth receiving apparatus expects to switch also includes the frame format of the first Bluetooth data frame.

It may be understood that, if the Bluetooth receiving apparatus determines that communication quality is deteriorated or improved, the Bluetooth receiving apparatus may trigger frame format switching, that is, the Bluetooth receiving apparatus may send the first information to the Bluetooth sending apparatus. Further, the Bluetooth receiving apparatus may determine the communication quality based on the third parameter. The third parameter may indicate the signal quality of the second Bluetooth data frame. For a process in which the Bluetooth receiving apparatus determines the communication quality based on the third parameter, refer to the following examples:

Example 3: For example, the third parameter is an RSSI, a CRC success rate, a frame synchronization success rate, a throughput rate, a signal-to-noise ratio, or the like. If the third parameter is greater than or equal to a preset third threshold, that is, the Bluetooth receiving apparatus determines that the communication quality is improved, the first information requests to reduce the proportion of the first pilot in the Bluetooth data frame transmitted between the Bluetooth receiving apparatus and the Bluetooth sending apparatus. If the third parameter is less than a preset third threshold, that is, the Bluetooth receiving apparatus determines that the communication quality is deteriorated, the first information requests to increase the proportion of the first pilot in the Bluetooth data frame transmitted between the Bluetooth receiving apparatus and the Bluetooth sending apparatus.

Example 4: For example, the third parameter is interference strength or the like. If the third parameter is greater than or equal to a preset seventh threshold, that is, the Bluetooth receiving apparatus determines that the communication quality is deteriorated, the first information requests to increase the proportion of the first pilot in the Bluetooth data frame transmitted between the Bluetooth receiving apparatus and the Bluetooth sending apparatus. If the third parameter is less than a preset seventh threshold, that is, the Bluetooth receiving apparatus determines that the communication quality is improved, the first information requests to decrease the proportion of the first pilot in the Bluetooth data frame transmitted between the Bluetooth receiving apparatus and the Bluetooth sending apparatus. It may be understood that, in this case, the method shown in FIG. 13 may not include S1301.

The following describes a specific case in which the Bluetooth receiving apparatus sends the first information to the Bluetooth sending apparatus by using an example in which a user A enters an exhibition center for a visit, the Bluetooth sending apparatus is a mobile phone of the user A, the Bluetooth receiving apparatus is a Bluetooth headset of the user A, and the user A listens to music by using the Bluetooth headset. When the user A is outside the exhibition center, interference is weak, and the mobile phone and the Bluetooth headset may communicate with each other by using a frame format of the second Bluetooth data frame. When the user A enters the exhibition center, a quantity of surrounding users suddenly increases, and various interference exists. When detecting that a CRC success rate is reduced and is less than the preset third threshold, the Bluetooth headset sends the first information to the mobile phone, to increase a proportion of a first pilot in a Bluetooth data frame transmitted between the Bluetooth receiving apparatus and the Bluetooth sending apparatus. When the user A walks into a booth, the quantity of surrounding users further increases, and interference strength increases. When detecting that a frame synchronization success rate is significantly reduced and is less than the preset third threshold, the Bluetooth headset sends the first information to the mobile phone, to increase the proportion of the first pilot in the Bluetooth data frame transmitted between the Bluetooth receiving apparatus and the Bluetooth sending apparatus. When the user A walks into a conference hall, strong Wi-Fi signal interference occurs. When detecting that a throughput rate is reduced and is less than the preset third threshold, and detecting the strong interference, to be specific, interference strength is greater than or equal to the preset seventh threshold, the Bluetooth headset sends the first information to the mobile phone, to increase the proportion of the first pilot in the Bluetooth data frame transmitted between the Bluetooth receiving apparatus and the Bluetooth sending apparatus. The user A goes out of the exhibition center after the visit. When detecting that the surrounding interference disappears, to be specific, the interference strength is less than the preset seventh threshold, the Bluetooth headset sends the first information to the mobile phone, to reduce the proportion of the first pilot in the Bluetooth data frame transmitted between the Bluetooth receiving apparatus and the Bluetooth sending apparatus.

In a possible implementation, the Bluetooth receiving apparatus sends the first information to the Bluetooth sending apparatus within a transmission interval between the second Bluetooth data frame and the first Bluetooth data frame.

In a possible implementation, the Bluetooth receiving apparatus sends the first information to the Bluetooth sending apparatus through Bluetooth.

Correspondingly, the Bluetooth sending apparatus receives the first information from the Bluetooth receiving apparatus.

S1303: The Bluetooth sending apparatus sends second information to the Bluetooth receiving apparatus.

For specific descriptions of S1303, refer to the corresponding descriptions in S703. Details are not described again.

According to the method shown in FIG. 13, the Bluetooth receiving apparatus may negotiate the frame format with the Bluetooth sending apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves receiving performance of the Bluetooth receiving apparatus and reduces communication overheads.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S1301 to S1303. This is not limited in this embodiment.

The method shown in FIG. 13 describes a process in which the Bluetooth receiving apparatus triggers the frame format negotiation. In a specific application, the Bluetooth sending apparatus may alternatively trigger the frame format negotiation. For details, refer to the method shown in FIG. 14.

Optionally, as shown in FIG. 14, in a possible implementation of the method shown in FIG. 11, the method shown in FIG. 11 may further include S1401 and S1402.

S1401: The Bluetooth sending apparatus sends first information to the Bluetooth receiving apparatus.

For descriptions of the first information, refer to the corresponding descriptions in S1301. A difference lies in that the first information in S1401 may include an identifier of at least one frame format supported by the Bluetooth sending apparatus. Alternatively, the first information in S1401 may include 1-bit indication information. The 1-bit indication information indicates to switch the frame format of the Bluetooth data frame transmitted between the Bluetooth receiving apparatus and the Bluetooth sending apparatus. Alternatively, the first information in S1401 may include an identifier of at least one frame format to which the Bluetooth sending apparatus expects to switch. It may be understood that, in this embodiment of this application, the frame format supported by the Bluetooth sending apparatus includes a frame format of the first Bluetooth data frame, and the frame format to which the Bluetooth sending apparatus expects to switch also includes the frame format of the first Bluetooth data frame.

It may be understood that, if the Bluetooth sending apparatus determines that signal strength of an interference signal increases or decreases, the Bluetooth sending apparatus may trigger frame format switching, that is, the Bluetooth sending apparatus may send the first information to the Bluetooth receiving apparatus.

In a possible implementation, if the signal strength of the interference signal is greater than or equal to a preset fourth threshold, the Bluetooth sending apparatus sends the first information to the Bluetooth receiving apparatus, where the first information requests to increase a proportion of a first pilot in the Bluetooth data frame transmitted between the Bluetooth receiving apparatus and the Bluetooth sending apparatus; or if the signal strength of the interference signal is less than a preset fourth threshold, the Bluetooth sending apparatus sends the first information to the Bluetooth receiving apparatus, where the first information requests to reduce a proportion of a first pilot in the Bluetooth data frame transmitted between the Bluetooth receiving apparatus and the Bluetooth sending apparatus.

In a possible implementation, the Bluetooth sending apparatus sends the first information to the Bluetooth receiving apparatus through Bluetooth.

Correspondingly, the Bluetooth receiving apparatus receives the first information from the Bluetooth sending apparatus.

S1402: The Bluetooth receiving apparatus sends second information to the Bluetooth sending apparatus.

For a specific process of S1402, refer to the corresponding descriptions in S1303. Details are not described herein again.

It may be understood that, after S1402, the Bluetooth sending apparatus and the Bluetooth receiving apparatus may communicate with each other by using the negotiated frame format. Further, the first information or the second information may carry an identifier of a slot. Subsequently, the Bluetooth sending apparatus and the Bluetooth receiving apparatus may communicate with each other, by using the negotiated frame format, in the slot indicated by the identifier of the slot.

It may be understood that, in addition to the method shown in FIG. 14, the Bluetooth sending apparatus may further negotiate a frame format with the Bluetooth receiving apparatus by exchanging information for a plurality of times. For example, the Bluetooth sending apparatus may send an identifier of a frame format to the Bluetooth receiving apparatus each time, and the Bluetooth receiving apparatus determines, by using one piece of indication information, whether to use the frame format indicated by the Bluetooth sending apparatus for communication. If the Bluetooth receiving apparatus determines to use the frame format indicated by the Bluetooth sending apparatus for communication, negotiation is completed. If the Bluetooth receiving apparatus determines not to use the frame format indicated by the Bluetooth sending apparatus for communication, the Bluetooth sending apparatus sends an identifier of a frame format to the Bluetooth receiving apparatus again until the Bluetooth receiving apparatus determines to use the frame format indicated by the Bluetooth sending apparatus for communication.

According to the method shown in FIG. 14, the Bluetooth sending apparatus may negotiate the frame format with the Bluetooth receiving apparatus, and dynamically adjust the frame format of the Bluetooth data frame transmitted between the Bluetooth receiving apparatus and the Bluetooth sending apparatus, so that the Bluetooth sending apparatus and the Bluetooth receiving apparatus communicate with each other by using a proper frame format. This improves receiving performance of the Bluetooth receiving apparatus and reduces communication overheads.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S1401 and S1402. This is not limited in this embodiment.

FIG. 4 and FIG. 7 to FIG. 10 specifically describe a case in which the first Bluetooth data frame includes the first synchronization code, and the Bluetooth receiving apparatus may perform synchronization detection based on the first synchronization code, to improve a success rate of performing synchronization detection by the Bluetooth receiving apparatus, so as to improve a success rate of receiving data by the Bluetooth receiving apparatus. FIG. 11, FIG. 13, and FIG. 14 specifically describe a case in which the first Bluetooth data frame includes the first pilot, and the Bluetooth receiving apparatus may detect, based on the first pilot, the channel phase and/or the channel amplitude of the channel for transmitting the first Bluetooth data frame, to improve receiving performance of the Bluetooth receiving apparatus. In a specific application, both the first synchronization code and the first pilot may be included in the first Bluetooth data frame. In this way, the Bluetooth receiving apparatus may perform synchronization detection based on the first synchronization code, to improve a success rate of performing synchronization detection by the Bluetooth receiving apparatus, so as to improve a success rate of receiving data by the Bluetooth receiving apparatus. The Bluetooth receiving apparatus may further detect, based on the first pilot, the channel phase and/or the channel amplitude of the channel for transmitting the first Bluetooth data frame, to improve receiving performance of the Bluetooth receiving apparatus. The following specifically describes a case in which both the first synchronization code and the first pilot are included in the first Bluetooth data frame.

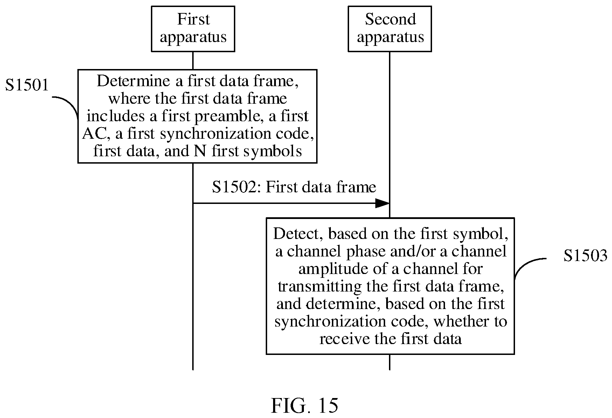

FIG. 15 shows another Bluetooth communication method according to an embodiment of this application. The Bluetooth communication method may include steps S1501 to S1503.

S1501: A Bluetooth sending apparatus generates a first Bluetooth data frame.

The first Bluetooth data frame may include a first AC, a first synchronization code, a first data field, and N first pilots. The first Bluetooth data frame may further include a first preamble. For descriptions of the Bluetooth sending apparatus, the first preamble, the first AC, the first synchronization code, and the first data field, refer to the corresponding descriptions in S401. For descriptions of the first pilot, refer to the corresponding descriptions in S1101. Details are not described herein again.

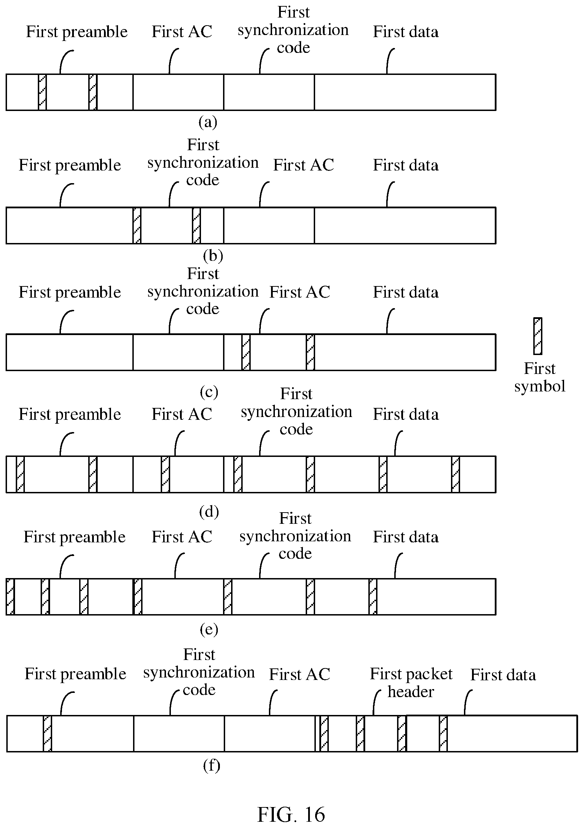

For example, a frame format of the first Bluetooth data frame may be shown in FIG. 16. In (a) in FIG. 16, the first synchronization code is located between the first AC and the first data field, and the first pilot is inserted into the first preamble. In (b) in FIG. 16, the first synchronization code is located between the first preamble and the first AC, and the first pilot is inserted into the first synchronization code. In (c) in FIG. 16, the first synchronization code is located between the first preamble and the first AC, and the first pilot is inserted into the first AC. In (d) in FIG. 16, the first synchronization code is located between the first AC and the first data field, and the first pilot is inserted into the first preamble, the first AC, the first synchronization code, and the first data field in an equal proportion. In (e) in FIG. 16, the first synchronization code is located between the first AC and the first data field, and the first pilot is inserted into the first preamble, the first AC, the first synchronization code, and the first data field in an unequal proportion.

It may be understood that the first Bluetooth data frame may further include other content. For example, in (f) in FIG. 16, the first Bluetooth data frame further includes a first packet header. The first synchronization code is located between the first preamble and the first AC, and the first pilot is inserted into the first preamble, the first packet header, and the first data field in an unequal proportion.

S1502: The Bluetooth sending apparatus sends the first Bluetooth data frame to a Bluetooth receiving apparatus.

In a possible implementation, the Bluetooth sending apparatus sends the first Bluetooth data frame to the Bluetooth receiving apparatus through Bluetooth.

Correspondingly, the Bluetooth receiving apparatus receives the first Bluetooth data frame from the Bluetooth sending apparatus.

S1503: The Bluetooth receiving apparatus detects, based on the first pilot, a channel phase and/or a channel amplitude of a channel for transmitting the first Bluetooth data frame, and performs synchronization detection based on the first synchronization code.

For descriptions of S1503, refer to the corresponding descriptions in S403 and S1103. Details are not described herein again.

According to the method shown in FIG. 15, the first synchronization code and the N first pilots whose phases are known may be inserted into the first Bluetooth data frame. The Bluetooth receiving apparatus may perform synchronization detection based on the first synchronization code, to improve a success rate of synchronization detection, so as to improve a success rate of data receiving. In addition, the Bluetooth receiving apparatus may detect, based on the first pilot, the channel phase and/or the channel amplitude of the channel for transmitting the first Bluetooth data frame, to improve receiving performance of the Bluetooth receiving apparatus, and further simplify a process of detecting the channel phase and/or the channel amplitude of the channel for transmitting the first Bluetooth data frame.

The Bluetooth sending apparatus may be indicated, by the processor 301 in the Bluetooth communication apparatus 30 shown in FIG. 3 by invoking the application program code stored in the memory 303, to perform the actions of the Bluetooth sending apparatus and/or the Bluetooth receiving apparatus in S1501 to S1503. This is not limited in this embodiment.

Optionally, in a possible implementation of the method shown in FIG. 15, the Bluetooth receiving apparatus may trigger frame format negotiation. For example, the Bluetooth receiving apparatus may trigger negotiation to reduce a length of a synchronization code in a Bluetooth data frame transmitted between the Bluetooth receiving apparatus and the Bluetooth sending apparatus, or increase the length of the synchronization code in the Bluetooth data frame transmitted between the Bluetooth receiving apparatus and the Bluetooth sending apparatus. For details, refer to the descriptions in the embodiment shown in FIG. 7. For another example, the Bluetooth receiving apparatus may alternatively trigger negotiation to reduce a proportion of a first pilot in a Bluetooth data frame transmitted between the Bluetooth receiving apparatus and the Bluetooth sending apparatus, or increase the proportion of the first pilot in the Bluetooth data frame transmitted between the Bluetooth receiving apparatus and the Bluetooth sending apparatus. For details, refer to the descriptions in the embodiment shown in FIG. 13. It may be understood that in a specific application, the method shown in FIG. 7 and the method shown in FIG. 13 may alternatively be combined. In other words, the Bluetooth receiving apparatus may trigger negotiation to change (reduce or increase) the length of the synchronization code in the Bluetooth data frame transmitted between the Bluetooth receiving apparatus and the Bluetooth sending apparatus, and change (reduce or increase) the proportion of the first pilot in the Bluetooth data frame transmitted between the Bluetooth receiving apparatus and the Bluetooth sending apparatus.

Optionally, in a possible implementation of the method shown in FIG. 15, the Bluetooth sending apparatus may trigger frame format negotiation. For example, the Bluetooth sending apparatus may trigger negotiation to reduce a length of a synchronization code in a Bluetooth data frame transmitted between the Bluetooth receiving apparatus and the Bluetooth sending apparatus, or increase the length of the synchronization code in the Bluetooth data frame transmitted between the Bluetooth receiving apparatus and the Bluetooth sending apparatus. For details, refer to the descriptions in the embodiment shown in FIG. 8. For another example, the Bluetooth sending apparatus may alternatively trigger negotiation to reduce a proportion of a first pilot in a Bluetooth data frame transmitted between the Bluetooth receiving apparatus and the Bluetooth sending apparatus, or increase the proportion of the first pilot in the Bluetooth data frame transmitted between the Bluetooth receiving apparatus and the Bluetooth sending apparatus. For details, refer to the descriptions in the embodiment shown in FIG. 14. It may be understood that in a specific application, the method shown in FIG. 8 and the method shown in FIG. 14 may alternatively be combined. In other words, the Bluetooth sending apparatus may trigger negotiation to change (reduce or increase) the length of the synchronization code in the Bluetooth data frame transmitted between the Bluetooth receiving apparatus and the Bluetooth sending apparatus, and change (reduce or increase) the proportion of the first pilot in the Bluetooth data frame transmitted between the Bluetooth receiving apparatus and the Bluetooth sending apparatus.

Optionally, in a possible implementation of the method shown in FIG. 15, the synchronization code in the Bluetooth data frame transmitted between the Bluetooth receiving apparatus and the Bluetooth sending apparatus may be included in a first synchronization code set, to be specific, both the first synchronization code and a second synchronization code are included in the first synchronization code set. The first synchronization code set may include at least one synchronization code. The at least one synchronization code is any sequence with excellent correlation performance, for example, a pseudo-random sequence. In a possible implementation, the at least one synchronization code may include at least one of an m-sequence, a gold sequence, or a kasami sequence.

It may be understood that the first synchronization code set may be a subset of a second synchronization code set. The second synchronization code set may include all synchronization codes that may be used in a Bluetooth data frame transmitted between the Bluetooth receiving apparatus and the Bluetooth sending apparatus. During normal use, the Bluetooth sending apparatus and the Bluetooth receiving apparatus determine a synchronization code in the first synchronization code set, so that a size of a used synchronization code set can be reduced, and a requirement on hardware resources of the Bluetooth sending apparatus and the Bluetooth receiving apparatus can be reduced. However, if there are a large quantity of Bluetooth apparatuses around the Bluetooth sending apparatus and/or the Bluetooth receiving apparatus, a synchronization code used by the Bluetooth sending apparatus and the Bluetooth receiving apparatus may be the same as synchronization codes used by surrounding Bluetooth apparatuses. In this case, the Bluetooth sending apparatus, the Bluetooth receiving apparatus, or the surrounding Bluetooth apparatus may be incorrectly synchronized, to be specific, receive information that is not sent to the Bluetooth sending apparatus, the Bluetooth receiving apparatus, or the surrounding Bluetooth apparatus. This increases power consumption and signaling overheads of the Bluetooth sending apparatus, the Bluetooth receiving apparatus, and the surrounding Bluetooth apparatus.

To avoid the foregoing problem, in a multi-user scenario (a scenario in which a quantity of Bluetooth apparatuses around the Bluetooth sending apparatus and/or the Bluetooth receiving apparatus is greater than or equal to a preset first value), the Bluetooth sending apparatus and the Bluetooth receiving apparatus may dynamically adjust a used synchronization code set. For example, when there are a large quantity of Bluetooth apparatuses around the Bluetooth sending apparatus and/or the Bluetooth receiving apparatus, the Bluetooth sending apparatus and the Bluetooth receiving apparatus use a synchronization code set including a large quantity of synchronization codes, so that power consumption and signaling overheads are reduced while a success rate of synchronization detection is ensured. When there are a small quantity of Bluetooth apparatuses around the Bluetooth sending apparatus and/or the Bluetooth receiving apparatus, the Bluetooth sending apparatus and the Bluetooth receiving apparatus use a synchronization code set including a small quantity of synchronization codes, to reduce a requirement on hardware resources of the Bluetooth sending apparatus and the Bluetooth receiving apparatus.

Optionally, in a possible implementation of the method shown in FIG. 15, if a synchronization code in a Bluetooth data frame transmitted between the Bluetooth receiving apparatus and the Bluetooth sending apparatus is included in the first synchronization code set, the Bluetooth receiving apparatus and the Bluetooth sending apparatus may negotiate the synchronization code before data sending. For a process in which the Bluetooth sending apparatus and the Bluetooth receiving apparatus negotiate the synchronization code, refer to the descriptions in the embodiments shown in FIG. 9 and FIG. 10.

The foregoing mainly describes the solutions provided in embodiments of this application from a perspective of interaction between the network elements. It can be understood that the Bluetooth sending apparatus, the Bluetooth receiving apparatus, or the like includes hardware structures and/or software modules for executing corresponding functions, to implement the foregoing functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the Bluetooth sending apparatus or the Bluetooth receiving apparatus may be divided into functional modules based on the foregoing method examples. For example, functional modules corresponding to the functions may be obtained through division, or two or more functions may be integrated into one processing module. The integrated module may be implemented in a form of hardware, or may be implemented in a form of a software functional module. It should be noted that, in embodiments of this application, division into the modules is an example, and is merely logical function division. In an actual implementation, another division manner may be used.

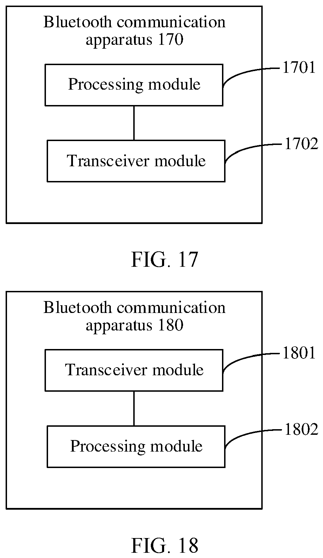

For example, when each functional module is obtained through division in an integrated manner, FIG. 17 is a schematic diagram of a structure of a Bluetooth communication apparatus 170. The Bluetooth communication apparatus 170 includes a processing module 1701 and a transceiver module 1702.

For example, the Bluetooth communication apparatus 170 is configured to implement a function of a Bluetooth sending apparatus. The Bluetooth communication apparatus 170 is, for example, the Bluetooth sending apparatus in the embodiment shown in FIG. 4, the embodiment shown in FIG. 7, the embodiment shown in FIG. 8, the embodiment shown in FIG. 9, the embodiment shown in FIG. 10, the embodiment shown in FIG. 11, the embodiment shown in FIG. 13, or the embodiment shown in FIG. 14.

In this embodiment of this application, the Bluetooth communication apparatus 170 may be a Bluetooth sending apparatus; or may be a chip used in a Bluetooth sending apparatus, or another combined device or component that has the function of the Bluetooth sending apparatus. When the Bluetooth communication apparatus 170 is a Bluetooth sending apparatus, the processing module 1701 may be a processor (or a processing circuit), for example, a baseband processor, where the baseband processor may include one or more CPUs; and the transceiver module 1702 may be a transceiver, where the transceiver may include an antenna, a radio frequency circuit, and the like. When the Bluetooth communication apparatus 170 is a component having the function of the foregoing Bluetooth sending apparatus, the processing module 1701 may be a processor (or a processing circuit), for example, a baseband processor, and the transceiver module 1702 may be a radio frequency unit. When the Bluetooth communication apparatus 170 is a chip system, the processing module 1701 may be a processor (or a processing circuit) of the chip system, and may include one or more central processing units; and the transceiver module 1702 may be an input/output interface of a chip (for example, a baseband chip). It should be understood that in this embodiment of this application, the processing module 1701 may be implemented by a processor or a processor-related circuit component (which is also referred to as a processing circuit), and the transceiver module 1702 may be implemented by a transceiver or a transceiver-related circuit component.

For example, the processing module 1701 may be configured to perform all operations performed by the Bluetooth sending apparatus in the embodiment shown in FIG. 4 except sending and receiving operations, for example, S401, and/or configured to support another process of the technology described in this specification. The transceiver module 1702 may be configured to perform all sending and receiving operations performed by the Bluetooth sending apparatus in the embodiment shown in FIG. 4, for example, S402, and/or configured to support another process of the technology described in this specification.

For another example, the processing module 1701 may be configured to perform all operations performed by the Bluetooth sending apparatus in the embodiment shown in FIG. 7 except sending and receiving operations, for example, S401, and/or configured to support another process of the technology described in this specification. The transceiver module 1702 may be configured to perform all sending and receiving operations performed by the Bluetooth sending apparatus in the embodiment shown in FIG. 7, for example, S701 to S703 and S402, and/or configured to support another process of the technology described in this specification.

For another example, the processing module 1701 may be configured to perform all operations performed by the Bluetooth sending apparatus in the embodiment shown in FIG. 8 except sending and receiving operations, for example, S401, and/or configured to support another process of the technology described in this specification. The transceiver module 1702 may be configured to perform all sending and receiving operations performed by the Bluetooth sending apparatus in the embodiment shown in FIG. 8, for example, S801, S802, and S402, and/or configured to support another process of the technology described in this specification.

For another example, the processing module 1701 may be configured to perform all operations performed by the Bluetooth sending apparatus in the embodiment shown in FIG. 9 except sending and receiving operations, for example, S401, and/or configured to support another process of the technology described in this specification. The transceiver module 1702 may be configured to perform all sending and receiving operations performed by the Bluetooth sending apparatus in the embodiment shown in FIG. 9, for example, S901, S902, and S402, and/or configured to support another process of the technology described in this specification.

For another example, the processing module 1701 may be configured to perform all operations performed by the Bluetooth sending apparatus in the embodiment shown in FIG. 10 except sending and receiving operations, for example, S401, and/or configured to support another process of the technology described in this specification. The transceiver module 1702 may be configured to perform all sending and receiving operations performed by the Bluetooth sending apparatus in the embodiment shown in FIG. 10, for example, S1001, S1002, and S402, and/or configured to support another process of the technology described in this specification.

For another example, the processing module 1701 may be configured to perform all operations performed by the Bluetooth sending apparatus in the embodiment shown in FIG. 11 except sending and receiving operations, for example, S1101, and/or configured to support another process of the technology described in this specification. The transceiver module 1702 may be configured to perform all sending and receiving operations performed by the Bluetooth sending apparatus in the embodiment shown in FIG. 11, for example, S1102, and/or configured to support another process of the technology described in this specification.

For another example, the processing module 1701 may be configured to perform all operations performed by the Bluetooth sending apparatus in the embodiment shown in FIG. 13 except sending and receiving operations, for example, S1101, and/or configured to support another process of the technology described in this specification. The transceiver module 1702 may be configured to perform all sending and receiving operations performed by the Bluetooth sending apparatus in the embodiment shown in FIG. 13, for example, S1301 to S1303 and S 1102, and/or configured to support another process of the technology described in this specification.

For another example, the processing module 1701 may be configured to perform all operations performed by the Bluetooth sending apparatus in the embodiment shown in FIG. 14 except sending and receiving operations, for example, S 1101, and/or configured to support another process of the technology described in this specification. The transceiver module 1702 may be configured to perform all sending and receiving operations performed by the Bluetooth sending apparatus in the embodiment shown in FIG. 14, for example, S1401, S1402, and S 1102, and/or configured to support another process of the technology described in this specification.

In a case in which the Bluetooth communication apparatus 170 is the Bluetooth sending apparatus in the embodiment shown in FIG. 4, the embodiment shown in FIG. 7, the embodiment shown in FIG. 8, the embodiment shown in FIG. 9, or the embodiment shown in FIG. 10:
The processing module 1701 is configured to generate a first Bluetooth data frame, where the first Bluetooth data frame includes a first access code, a first synchronization code, and a first data field, where the first synchronization code is located before the first data field, and at least one of autocorrelation or cross-correlation of the first synchronization code is better than that of the first access code.

The transceiver module 1702 is configured to send the first Bluetooth data frame to a Bluetooth receiving apparatus.

In a possible implementation, the first synchronization code is a pseudo-random sequence.

In a possible implementation, the first synchronization code is an m-sequence, a gold sequence, or a kasami sequence.

In a possible implementation, the processing module 1701 is further configured to obtain a first parameter, where the first parameter indicates a requirement of a Bluetooth service and/or a communication parameter of Bluetooth communication; and the processing module 1701 is further configured to determine a length of the first synchronization code based on the first parameter, where the length of the first synchronization code is related to the autocorrelation or the cross-correlation of the first synchronization code.

In a possible implementation, if the first parameter is greater than or equal to a first threshold, the length of the first synchronization code is greater than or equal to a first length; and if the first parameter is less than or equal to a preset second threshold, the length of the first synchronization code is less than or equal to a second proportion, where the first parameter indicates one of the following parameters: a data retransmission rate, data reliability required by the service, a transmission distance of the first Bluetooth data frame, or signal strength of an interference signal received by the Bluetooth receiving apparatus.

In a possible implementation, if the first parameter is less than or equal to a first threshold, the length of the first synchronization code is greater than or equal to a first length; and if the first parameter is greater than or equal to a preset second threshold, the length of the first synchronization code is less than or equal to a second proportion, where the first parameter indicates one of the following parameters: a data delay required by the service, a transmit power used by the Bluetooth communication apparatus 170 to send the first Bluetooth data frame, or a signal-to-noise ratio of a channel for transmitting the first Bluetooth data frame.

In a possible implementation, the processing module 1701 is further configured to negotiate a first random number with the Bluetooth receiving apparatus, where the first random number is used for determining the first synchronization code in a first synchronization code set, and the first synchronization code set includes at least one synchronization code.

In a possible implementation, a quantity of Bluetooth apparatuses around the Bluetooth receiving apparatus and/or the Bluetooth communication apparatus 170 is greater than or equal to a preset first value, and a quantity of synchronization codes in the first synchronization code set is greater than or equal to a preset second value.

In a possible implementation, the processing module 1701 is further configured to negotiate a second random number with the Bluetooth receiving apparatus, where the second random number is used for determining a first time interval, and the first time interval is a time interval for updating a synchronization code in a Bluetooth data frame transmitted between the Bluetooth receiving apparatus and the Bluetooth communication apparatus 170.

In a possible implementation, the first Bluetooth data frame further includes N first pilots, the first pilot is a pilot with a known phase, and N is a positive integer.

In a possible implementation, in the first Bluetooth data frame, the first pilot is inserted into at least one of the following: the first access code, the first synchronization code, or the first data field.

In a possible implementation, the processing module 1701 is further configured to obtain a second parameter, where the second parameter indicates at least one of a requirement of the Bluetooth service or a communication parameter of the Bluetooth communication; and the processing module 1701 is further configured to determine a proportion of the first pilot in the first Bluetooth data frame based on the second parameter.

In a possible implementation, if the second parameter is greater than or equal to a preset fifth threshold, the proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the third parameter is less than or equal to a preset fifth threshold, the proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth communication apparatus 170 to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

In a possible implementation, the transceiver module 1702 is further configured to send a second Bluetooth data frame to the Bluetooth receiving apparatus, where the second Bluetooth data frame is different from the first Bluetooth data frame; and the processing module 1702 is further configured to negotiate, with the Bluetooth receiving apparatus based on a third parameter, a frame format of the Bluetooth data frame transmitted between the Bluetooth receiving apparatus and the Bluetooth communication apparatus 170, where the third parameter indicates signal quality of the second Bluetooth data frame or signal strength of an interference signal of the second Bluetooth data frame.

In a case in which the Bluetooth communication apparatus 170 is the Bluetooth sending apparatus in the embodiment shown in FIG. 11, the embodiment shown in FIG. 13, or the embodiment shown in FIG. 14:

The processing module 1701 is configured to generate a first Bluetooth data frame, where the first Bluetooth data frame includes a first access code, a first data field, and N first pilots, the first pilot is a pilot with a known phase, N is a positive integer, and the first pilot is used for detecting at least one of a channel phase or a channel amplitude of a channel for transmitting the first Bluetooth data frame.

The transceiver module 1702 is configured to send the first Bluetooth data frame to a Bluetooth receiving apparatus.

In a possible implementation, in the first Bluetooth data frame, the first pilot is inserted into at least one of the following: the first access code or the first data field.

In a possible implementation, the processing module 1701 is further configured to obtain a first parameter, where the first parameter indicates at least one of a requirement of a Bluetooth service or a communication parameter of Bluetooth communication; and the processing module 1701 is further configured to determine a proportion of the first pilot in the first Bluetooth data frame based on the first parameter.

In a possible implementation, if the first parameter is greater than or equal to a first threshold, the proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

In a possible implementation, if the first parameter is less than or equal to a first threshold, the proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth communication apparatus 170 to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

When the Bluetooth communication apparatus 170 is configured to implement the function of the Bluetooth sending apparatus, for other functions that can be implemented by the Bluetooth communication apparatus 170, refer to the related descriptions of the embodiment shown in FIG. 4, the embodiment shown in FIG. 7, the embodiment shown in FIG. 8, the embodiment shown in FIG. 9, the embodiment shown in FIG. 10, the embodiment shown in FIG. 11, the embodiment shown in FIG. 13, or the embodiment shown in FIG. 14. Details are not described again.

For example, when each functional module is obtained through division in an integrated manner, FIG. 18 is a schematic diagram of a structure of a Bluetooth communication apparatus 180. The Bluetooth communication apparatus 180 includes a transceiver module 1801 and a processing module 1802.

For example, the Bluetooth communication apparatus 180 is configured to implement a function of a Bluetooth receiving apparatus. The Bluetooth communication apparatus 180 is, for example, the Bluetooth receiving apparatus in the embodiment shown in FIG. 4, the embodiment shown in FIG. 7, the embodiment shown in FIG. 8, the embodiment shown in FIG. 9, the embodiment shown in FIG. 10, the embodiment shown in FIG. 11, the embodiment shown in FIG. 13, or the embodiment shown in FIG. 14.

In this embodiment of this application, the Bluetooth communication apparatus 180 may be a Bluetooth receiving apparatus; or may be a chip used in a Bluetooth receiving apparatus, or another combined device or component that has the function of the Bluetooth receiving apparatus. When the Bluetooth communication apparatus 180 is a Bluetooth receiving apparatus, the transceiver module 1801 may be a transceiver, where the transceiver may include an antenna, a radio frequency circuit, and the like; and the processing module 1802 may be a processor, for example, a baseband processor, where the baseband processor may include one or more CPUs. When the Bluetooth communication apparatus 180 is a component having the function of the Bluetooth receiving apparatus, the transceiver module 1801 may be a radio frequency unit, and the processing module 1802 may be a processor (or a processing circuit), for example, a baseband processor. When the Bluetooth communication apparatus 180 is a chip system, the transceiver module 1801 may be an input/output interface of a chip (for example, a baseband chip), and the processing module 1802 may be a processor (or a processing circuit) in the chip system, and may include one or more central processing units. It should be understood that in this embodiment of this application, the transceiver module 1801 may be implemented by a transceiver or a transceiver-related circuit component, and the processing module 1802 may be implemented by a processor or a processor-related circuit component (or referred to as a processing circuit).

For example, the transceiver module 1801 may be configured to perform all sending and receiving operations performed by the Bluetooth receiving apparatus in the embodiment shown in FIG. 4, for example, S402, and/or configured to support another process of the technology described in this specification. The processing module 1802 may be configured to perform all operations performed by the Bluetooth receiving apparatus in the embodiment shown in FIG. 4 except sending and receiving operations, for example, S403, and/or configured to support another process of the technology described in this specification.

For another example, the transceiver module 1801 may be configured to perform all sending and receiving operations performed by the Bluetooth receiving apparatus in the embodiment shown in FIG. 7, for example, S701 to S703 and S402, and/or configured to support another process of the technology described in this specification. The processing module 1802 may be configured to perform all operations performed by the Bluetooth receiving apparatus in the embodiment shown in FIG. 7 except sending and receiving operations, for example, S403, and/or configured to support another process of the technology described in this specification.

For another example, the transceiver module 1801 may be configured to perform all sending and receiving operations performed by the Bluetooth receiving apparatus in the embodiment shown in FIG. 8, for example, S801, S802, and S402, and/or configured to support another process of the technology described in this specification. The processing module 1802 may be configured to perform all operations performed by the Bluetooth receiving apparatus in the embodiment shown in FIG. 8 except sending and receiving operations, for example, S403, and/or configured to support another process of the technology described in this specification.

For another example, the transceiver module 1801 may be configured to perform all sending and receiving operations performed by the Bluetooth receiving apparatus in the embodiment shown in FIG. 9, for example, S901, S902, and S402, and/or configured to support another process of the technology described in this specification. The processing module 1802 may be configured to perform all operations performed by the Bluetooth receiving apparatus in the embodiment shown in FIG. 9 except sending and receiving operations, for example, S403, and/or configured to support another process of the technology described in this specification.

For another example, the transceiver module 1801 may be configured to perform all sending and receiving operations performed by the Bluetooth receiving apparatus in the embodiment shown in FIG. 10, for example, S1001, S1002, and S402, and/or configured to support another process of the technology described in this specification. The processing module 1802 may be configured to perform all operations performed by the Bluetooth receiving apparatus in the embodiment shown in FIG. 10 except sending and receiving operations, for example, S403, and/or configured to support another process of the technology described in this specification.

For another example, the transceiver module 1801 may be configured to perform all sending and receiving operations performed by the Bluetooth receiving apparatus in the embodiment shown in FIG. 11, for example, S1102, and/or configured to support another process of the technology described in this specification. The processing module 1802 may be configured to perform all operations performed by the Bluetooth receiving apparatus in the embodiment shown in FIG. 11 except sending and receiving operations, for example, S1103, and/or configured to support another process of the technology described in this specification.

For another example, the transceiver module 1801 may be configured to perform all sending and receiving operations performed by the Bluetooth receiving apparatus in the embodiment shown in FIG. 13, for example, S1301 to S1303 and S1102, and/or configured to support another process of the technology described in this specification. The processing module 1802 may be configured to perform all operations performed by the Bluetooth receiving apparatus in the embodiment shown in FIG. 13 except sending and receiving operations, for example, S1103, and/or configured to support another process of the technology described in this specification.

For another example, the transceiver module 1801 may be configured to perform all sending and receiving operations performed by the Bluetooth receiving apparatus in the embodiment shown in FIG. 14, for example, S1401, S1402, and S1102, and/or configured to support another process of the technology described in this specification. The processing module 1802 may be configured to perform all operations performed by the Bluetooth receiving apparatus in the embodiment shown in FIG. 14 except sending and receiving operations, for example, S 1103, and/or configured to support another process of the technology described in this specification.

In a case in which the Bluetooth communication apparatus 180 is the Bluetooth receiving apparatus in the embodiment shown in FIG. 4, the embodiment shown in FIG. 7, the embodiment shown in FIG. 8, the embodiment shown in FIG. 9, or the embodiment shown in FIG. 10:

The transceiver module 1801 is configured to receive a first Bluetooth data frame from a Bluetooth sending apparatus, where the first Bluetooth data frame includes a first access code, a first synchronization code, and a first data field, where the first synchronization code is located before the first data field, and at least one of autocorrelation or cross-correlation of the first synchronization code is better than that of the first access code.

The processing module 1802 is configured to perform synchronization detection based on the first synchronization code.

In a possible implementation, the first synchronization code is a pseudo-random sequence.

In a possible implementation, the first synchronization code is an m-sequence, a gold sequence, or a kasami sequence.

In a possible implementation, if the first parameter is greater than or equal to a first threshold, a length of the first synchronization code is greater than or equal to a first length; and if the first parameter is less than or equal to a preset second threshold, the length of the first synchronization code is less than or equal to a second length, where the first parameter indicates one of the following parameters: a data retransmission rate, data reliability required by a service, a transmission distance of the first Bluetooth data frame, or signal strength of an interference signal received by the Bluetooth communication apparatus 180.

In a possible implementation, if the first parameter is less than or equal to a first threshold, a length of the first synchronization code is greater than or equal to a first length; and if the first parameter is greater than or equal to a preset second threshold, the length of the first synchronization code is less than or equal to a second length, where the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame.

In a possible implementation, the processing module 1802 is further configured to negotiate a first random number with the Bluetooth sending apparatus, where the first random number is used for determining the first synchronization code in a first synchronization code set, and the first synchronization code set includes at least one synchronization code.

In a possible implementation, a quantity of Bluetooth apparatuses around the Bluetooth communication apparatus 180 and/or the Bluetooth sending apparatus is greater than or equal to a preset first value, and a quantity of synchronization codes in the first synchronization code set is greater than or equal to a preset second value.

In a possible implementation, the processing module 1802 is further configured to negotiate a second random number with the Bluetooth sending apparatus, where the second random number is used for determining a first time interval, and the first time interval is a time interval for updating a synchronization code in a Bluetooth data frame transmitted between the Bluetooth communication apparatus 180 and the Bluetooth sending apparatus.

In a possible implementation, the first Bluetooth data frame further includes N first pilots, the first pilot is a pilot with a known phase, and N is a positive integer.

In a possible implementation, in the first Bluetooth data frame, the first pilot is inserted into at least one of the following: the first access code, the first synchronization code, or the first data field.

In a possible implementation, if the second parameter is greater than or equal to a preset fifth threshold, a proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, where the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth communication apparatus 180.

In a possible implementation, if the second parameter is less than or equal to a preset fifth threshold, a proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, where the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

In a possible implementation, the transceiver module 1801 is further configured to receive a second Bluetooth data frame from the Bluetooth sending apparatus, where the second Bluetooth data frame is different from the first Bluetooth data frame; and the processing module 1802 is further configured to negotiate, with the Bluetooth sending apparatus based on a third parameter, a frame format of the Bluetooth data frame between the Bluetooth communication apparatus 180 and the Bluetooth sending apparatus, where the third parameter indicates signal quality of the second Bluetooth data frame or signal strength of an interference signal of the second Bluetooth data frame.

The Bluetooth communication apparatus 180 is the Bluetooth receiving apparatus in the embodiment shown in FIG. 11, the embodiment shown in FIG. 13, or the embodiment shown in FIG. 14,

The transceiver module 1801 is configured to receive a first Bluetooth data frame from a Bluetooth sending apparatus, where the first Bluetooth data frame includes a first access code, a first data field, and N first pilots, the first pilot is a pilot with a known phase, and N is a positive integer.

The processing module 1802 is configured to detect, based on the first pilot, at least one of a channel phase or a channel amplitude of a channel for transmitting the first Bluetooth data frame.

In a possible implementation, in the first Bluetooth data frame, the first pilot is inserted into at least one of the following: the first access code or the first data field.

In a possible implementation, if the first parameter is greater than or equal to a first threshold, a proportion of the first pilot in the first Bluetooth data frame is greater than or equal to a first proportion; and if the first parameter is less than or equal to a preset second threshold, the proportion of the first pilot in the first Bluetooth data frame is less than or equal to a second proportion, where the first parameter indicates one of the following parameters: a channel phase change speed of the channel for transmitting the first Bluetooth data frame, a data retransmission rate, data reliability required by a service, a transmission distance of the first Bluetooth data frame, or signal strength of an interference signal received by the Bluetooth communication apparatus 180.

In a possible implementation, if the first parameter is less than or equal to a first threshold, a proportion of the first pilot in the first Bluetooth data frame is greater than or equal to a first proportion; and if the first parameter is greater than or equal to a preset second threshold, the proportion of the first pilot in the first Bluetooth data frame is less than or equal to a second proportion, where the first parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

In a possible implementation, the N first pilots are the same or different.

When the Bluetooth communication apparatus 180 is configured to implement the function of the Bluetooth receiving apparatus, for other functions that can be implemented by the Bluetooth communication apparatus 180, refer to the related descriptions of the embodiment shown in FIG. 4, the embodiment shown in FIG. 7, the embodiment shown in FIG. 8, the embodiment shown in FIG. 9, the embodiment shown in FIG. 10, the embodiment shown in FIG. 11, the embodiment shown in FIG. 13, or the embodiment shown in FIG. 14. Details are not described again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A Bluetooth communication method, comprising:

generating, by a Bluetooth sending apparatus, a first Bluetooth data frame, wherein the first Bluetooth data frame comprises a first access code, a first synchronization code, and a first data field, wherein the first synchronization code is located before the first data field, and at least one of autocorrelation or cross-correlation of the first synchronization code is better than that of the first access code; and
sending, by the Bluetooth sending apparatus, the first Bluetooth data frame to a Bluetooth receiving apparatus.

2. The method according to claim 1, wherein the first synchronization code is a pseudo-random sequence.

3. The method according to claim 1 or 2, wherein the first synchronization code is an m-sequence, a gold sequence, or a kasami sequence.

4. The method according to any one of claims 1 to 3, wherein the method further comprises:

   obtaining, by the Bluetooth sending apparatus, a first parameter, wherein the first parameter indicates at least one of a requirement of a Bluetooth service or a parameter of Bluetooth communication; and
   determining, by the Bluetooth sending apparatus, a length of the first synchronization code based on the first parameter, wherein the length of the first synchronization code is related to the autocorrelation or the cross-correlation of the first synchronization code.

5. The method according to claim 4, wherein

   if the first parameter is greater than or equal to a preset first threshold, the length of the first synchronization code is greater than or equal to a first length; and
   if the first parameter is less than or equal to a preset second threshold, the length of the first synchronization code is less than or equal to a second length, wherein
   the first parameter indicates one of the following parameters: a data retransmission rate, data reliability required by the service, a transmission distance of the first Bluetooth data frame, or signal strength of an interference signal received by the Bluetooth receiving apparatus.

6. The method according to claim 4, wherein

   if the first parameter is less than or equal to a first threshold, the length of the first synchronization code is greater than or equal to a first length; and
   if the first parameter is greater than or equal to a preset second threshold, the length of the first synchronization code is less than or equal to a second length, wherein
   the first parameter indicates one of the following parameters: a data delay required by the service, a transmit power used by the Bluetooth sending apparatus to send the first Bluetooth data frame, or a signal-to-noise ratio of a channel for transmitting the first Bluetooth data frame.

7. The method according to any one of claims 1 to 6, wherein before the generating, by a Bluetooth sending apparatus, a first Bluetooth data frame, the method further comprises:
   negotiating, by the Bluetooth sending apparatus, a first random number with the Bluetooth receiving apparatus, wherein the first random number is used for determining the first synchronization code in a first synchronization code set, and the first synchronization code set comprises at least one synchronization code.

8. The method according to claim 7, wherein a quantity of Bluetooth apparatuses around the Bluetooth sending apparatus is greater than or equal to a preset first value, and a quantity of synchronization codes in the first synchronization code set is greater than or equal to a preset second value.

9. The method according to any one of claims 1 to 8, wherein before the generating, by a Bluetooth sending apparatus, a first Bluetooth data frame, the method further comprises:
   negotiating, by the Bluetooth sending apparatus, a second random number with the Bluetooth receiving apparatus, wherein the second random number is used for determining a first time interval, and the first time interval is a time interval for updating a synchronization code in a Bluetooth data frame transmitted between the Bluetooth receiving apparatus and the Bluetooth sending apparatus.

10. The method according to any one of claims 1 to 9, wherein the first Bluetooth data frame further comprises N first pilots, the first pilot is a pilot with a known phase, and N is a positive integer.

11. The method according to claim 10, wherein in the first Bluetooth data frame, the first pilot is inserted into at least one of the following:
    the first access code, the first synchronization code, or the first data field.

12. The method according to claim 10 or 11, wherein the method further comprises:

    obtaining, by the Bluetooth sending apparatus, a second parameter, wherein the second parameter indicates at least one of a requirement of the Bluetooth service or a parameter of the Bluetooth communication; and
    determining, by the Bluetooth sending apparatus, a proportion of the first pilot in the first Bluetooth data frame based on the second parameter.

**13.** The method according to claim 12, wherein

if the second parameter is greater than or equal to a preset fifth threshold, the proportion of the first pilot in the first Bluetooth data frame is greater than or equal to a third proportion; and if the second parameter is less than or equal to a preset sixth threshold, the proportion of the first pilot in the first Bluetooth data frame is less than or equal to a fourth proportion, wherein the second parameter indicates one of the following parameters: a channel phase change speed of the channel for transmitting the first Bluetooth data frame, a data retransmission rate, data reliability required by the service, a transmission distance of the first Bluetooth data frame, or signal strength of an interference signal received by the Bluetooth receiving apparatus.

**14.** The method according to claim 12, wherein

if the second parameter is less than or equal to a preset fifth threshold, the proportion of the first pilot in the first Bluetooth data frame is greater than or equal to a third proportion; and if the second parameter is greater than or equal to a preset sixth threshold, the proportion of the first pilot in the first Bluetooth data frame is less than or equal to a fourth proportion, wherein the second parameter indicates one of the following parameters: a data delay required by the service, a transmit power used by the Bluetooth sending apparatus to send the first Bluetooth data frame, a signal-to-noise ratio of the channel for transmitting the first Bluetooth data frame, or an error correction capability of a coding scheme of the first Bluetooth data frame.

**15.** The method according to any one of claims 1 to 14, wherein before the generating, by a Bluetooth sending apparatus, a first Bluetooth data frame, the method further comprises:

sending, by the Bluetooth sending apparatus, a second Bluetooth data frame to the Bluetooth receiving apparatus, wherein the second Bluetooth data frame is different from the first Bluetooth data frame; and negotiating, by the Bluetooth sending apparatus with the Bluetooth receiving apparatus based on a third parameter, a frame format of the Bluetooth data frame transmitted between the Bluetooth receiving apparatus and the Bluetooth sending apparatus, wherein the third parameter indicates signal quality of the second Bluetooth data frame or signal strength of an interference signal of the second Bluetooth data frame.

**16.** A Bluetooth communication method, comprising:

receiving, by a Bluetooth receiving apparatus, a first Bluetooth data frame from a Bluetooth sending apparatus, wherein the first Bluetooth data frame comprises a first access code, a first synchronization code, and a first data field, wherein the first synchronization code is located before the first data field, and at least one of autocorrelation or cross-correlation of the first synchronization code is better than that of the first access code; and performing, by the Bluetooth receiving apparatus, synchronization detection based on the first synchronization code.

**17.** The method according to claim 16, wherein before the receiving, by a Bluetooth receiving apparatus, a first Bluetooth data frame from a Bluetooth sending apparatus, the method further comprises: negotiating, by the Bluetooth receiving apparatus, a second random number with the Bluetooth sending apparatus, wherein the second random number is used for determining a first time interval, and the first time interval is a time interval for updating a synchronization code in a Bluetooth data frame transmitted between the Bluetooth receiving apparatus and the Bluetooth sending apparatus.

**18.** The method according to claim 16 or 17, wherein the first Bluetooth data frame further comprises N first pilots, the first pilot is a pilot with a known phase, and N is a positive integer.

**19.** The method according to claim 18, wherein in the first Bluetooth data frame, the first pilot is inserted into at least one of the first access code, the first synchronization code, or the first data field.

**20.** The method according to any one of claims 16 to 19, wherein before the receiving, by a Bluetooth receiving apparatus, a first Bluetooth data frame from a Bluetooth sending apparatus, the method further comprises:

receiving, by the Bluetooth receiving apparatus, a second Bluetooth data frame from the Bluetooth sending apparatus, wherein the second Bluetooth data frame is different from the first Bluetooth data frame; and negotiating, by the Bluetooth receiving apparatus with the Bluetooth sending apparatus based on a third parameter, a frame format of a Bluetooth data frame between the Bluetooth receiving apparatus and the Bluetooth sending apparatus, wherein the third parameter indicates signal quality of the second Bluetooth data frame or signal strength of an interference signal of the second Bluetooth data frame.

21. A Bluetooth sending apparatus, comprising:

   a processor, configured to generate a first Bluetooth data frame, wherein the first Bluetooth data frame comprises a first access code, a first synchronization code, and a first data field, wherein the first synchronization code is located before the first data field, and at least one of autocorrelation or cross-correlation of the first synchronization code is better than that of the first access code; and
   a transceiver, coupled to the processor and configured to send the first Bluetooth data frame to a Bluetooth receiving apparatus.

22. The Bluetooth sending apparatus according to claim 21, wherein the first synchronization code is a pseudo-random sequence.

23. The Bluetooth sending apparatus according to claim 21 or 22, wherein the first synchronization code is an m-sequence, a gold sequence, or a kasami sequence.

24. The Bluetooth sending apparatus according to any one of claims 21 to 23, wherein

   the processor is further configured to obtain a first parameter, wherein the first parameter indicates at least one of a requirement of a Bluetooth service or a communication parameter of Bluetooth communication; and
   the processor is further configured to determine a length of the first synchronization code based on the first parameter, wherein the length of the first synchronization code is related to the autocorrelation or the cross-correlation of the first synchronization code.

25. The Bluetooth sending apparatus according to any one of claims 21 to 24, wherein
   the processor is further configured to negotiate a first random number with the Bluetooth receiving apparatus, wherein the first random number is used for determining the first synchronization code in a first synchronization code set, and the first synchronization code set comprises at least one synchronization code.

26. The Bluetooth sending apparatus according to any one of claims 21 to 25, wherein
   the processor is further configured to negotiate a second random number with the Bluetooth receiving apparatus, wherein the second random number is used for determining a first time interval, and the first time interval is a time interval for updating a synchronization code in a Bluetooth data frame transmitted between the Bluetooth receiving apparatus and the Bluetooth sending apparatus.

27. The Bluetooth sending apparatus according to any one of claims 21 to 26, wherein the first Bluetooth data frame further comprises N first pilots, the first pilot is a pilot with a known phase, and N is a positive integer.

28. The Bluetooth sending apparatus according to claim 27, wherein
   in the first Bluetooth data frame, the first pilot is inserted into at least one of the following:
   the first access code, the first synchronization code, or the first data field.

29. The Bluetooth sending apparatus according to claim 27 or 28, wherein

   the processor is further configured to obtain a second parameter, wherein the second parameter indicates at least one of a requirement of the Bluetooth service or a communication parameter of the Bluetooth communication; and
   the processor is further configured to determine a proportion of the first pilot in the first Bluetooth data frame based on the second parameter.

30. The Bluetooth sending apparatus according to any one of claims 27 to 29, wherein

   the transceiver is further configured to send a second Bluetooth data frame to the Bluetooth receiving apparatus, wherein the second Bluetooth data frame is different from the first Bluetooth data frame; and
   the processor is further configured to negotiate, with the Bluetooth receiving apparatus based on a third parameter, a frame format of the Bluetooth data frame transmitted between the Bluetooth receiving apparatus and the Bluetooth sending apparatus, wherein the third parameter indicates signal quality of the second Bluetooth data frame or signal strength of an interference signal of the second Bluetooth data frame.

31. A Bluetooth receiving apparatus, wherein the apparatus comprises a transceiver and a processor, wherein

   the transceiver is configured to receive a first Bluetooth data frame from a Bluetooth sending apparatus, wherein the first Bluetooth data frame comprises a first access code, a first synchronization code, and a first data field, wherein the first synchronization code is located before the first data field, and at least one of autocorrelation or cross-correlation of the first synchronization code is better than that of the first access code; and

the processor is configured to perform synchronization detection based on the first synchronization code.

**32.** The Bluetooth receiving apparatus according to claim 31, wherein

the processor is further configured to negotiate a first random number with the Bluetooth sending apparatus, wherein the first random number is used for determining the first synchronization code in a first synchronization code set, and the first synchronization code set comprises at least one synchronization code.

**33.** The Bluetooth receiving apparatus according to claim 31 or 32, wherein

the processor is further configured to negotiate a second random number with the Bluetooth sending apparatus, wherein the second random number is used for determining a first time interval, and the first time interval is a time interval for updating a synchronization code in a Bluetooth data frame transmitted between the Bluetooth receiving apparatus and the Bluetooth sending apparatus.

**34.** The Bluetooth receiving apparatus according to any one of claims 31 to 33, wherein the first Bluetooth data frame further comprises N first pilots, the first pilot is a pilot with a known phase, and N is a positive integer.

**35.** The Bluetooth receiving apparatus according to claim 34, wherein

in the first Bluetooth data frame, the first pilot is inserted into at least one of the following:

the first access code, the first synchronization code, or the first data field.

**36.** The Bluetooth receiving apparatus according to claim 34 or 35, wherein

the transceiver is further configured to receive a second Bluetooth data frame from the Bluetooth sending apparatus, wherein the second Bluetooth data frame is different from the first Bluetooth data frame; and

the processor is further configured to negotiate, with the Bluetooth sending apparatus based on a third parameter, a frame format of a Bluetooth data frame between the Bluetooth receiving apparatus and the Bluetooth sending apparatus, wherein the third parameter indicates signal quality of the second Bluetooth data frame or signal strength of an interference signal of the second Bluetooth data frame.

10

| 101 | Bluetooth communication apparatus | | Bluetooth communication apparatus | 102 |

FIG. 1

Power
(normalized)

201

202

203

204

Correlation

FIG. 2

30

301    307    303

Processor    Processor    Memory
CPU 0    CPU 0
CPU 1    CPU 1

Communication
line 302

304    305    306

Communication
interface    Output
device    Input
device

FIG. 3

Bluetooth sending
apparatus    Bluetooth receiving
apparatus

S401    Generate a first Bluetooth
data frame

S402: First
Bluetooth data frame

Perform synchronization
detection based on a first
synchronization code    S403

FIG. 4

| First preamble | First synchronization code | First AC | First data |
|---|---|---|---|

(a)

| First preamble | First AC | First synchronization code | First data |
|---|---|---|---|

(b)

| First preamble | First AC | First synchronization code | First packet header | First data |
|---|---|---|---|---|

(c)

FIG. 5

Bluetooth sending apparatus | Bluetooth receiving apparatus

S701: Second Bluetooth data frame

S702: First information

S703: Second information

S401 — Generate a first Bluetooth data frame

S402: First Bluetooth data frame

Perform synchronization detection based on a first synchronization code — S403

FIG. 7

Bluetooth sending apparatus | Bluetooth receiving apparatus

S801: First information

S802: Second information

S401 — Generate a first Bluetooth data frame

S402: First Bluetooth data frame

Perform synchronization detection based on a first synchronization code — S403

FIG. 8

Bluetooth sending apparatus    Bluetooth receiving apparatus

S901: Third information

S902: Fourth information

S401 — Generate a first Bluetooth data frame

S402: First Bluetooth data frame

Perform synchronization detection based on a first synchronization code — S403

FIG. 9

Bluetooth sending apparatus    Bluetooth receiving apparatus

S1001: Third information

S1002: Fourth information

S401 — Generate a first Bluetooth data frame

S402: First Bluetooth data frame

Perform synchronization detection based on a first synchronization code — S403

FIG. 10

```
          ┌──────────────┐        ┌──────────────┐
          │Bluetooth sending│     │Bluetooth receiving│
          │  apparatus   │        │   apparatus   │
          └──────────────┘        └──────────────┘
```

S1101 — Generate a first Bluetooth data frame

S1102: First Bluetooth data frame

Detect, based on a first pilot, a channel phase and/or a channel amplitude of a channel for transmitting the first Bluetooth data frame — S1103

FIG. 11

First preamble First AC First data

(a)

First preamble First AC First data

(b)

First preamble First AC First data

First symbol

(c)

First preamble First AC First data

(d)

First preamble First AC First data

(e)

First preamble First AC First packet header First data

(f)

FIG. 12

| Bluetooth sending apparatus | | Bluetooth receiving apparatus |
|---|---|---|

S1301: Second Bluetooth data frame →

S1302: First information ←

S1303: Second information →

S1101 — Generate a first Bluetooth data frame

S1102: First Bluetooth data frame →

Detect, based on a first pilot, a channel phase and/or a channel amplitude of a channel for transmitting the first Bluetooth data frame — S1103

FIG. 13

| Bluetooth sending apparatus | | Bluetooth receiving apparatus |
|---|---|---|

S1401: First information →

S1402: Second information ←

S1101 — Generate a first Bluetooth data frame

S1102: First Bluetooth data frame →

Detect, based on a first pilot, a channel phase and/or a channel amplitude of a channel for transmitting the first Bluetooth data frame — S1103

FIG. 14

First
apparatus

Second
apparatus

S1501

Determine a first data frame,
where the first data frame
includes a first preamble, a first
AC, a first synchronization code,
first data, and N first symbols

S1502: First data frame

Detect, based on the first symbol,
a channel phase and/or a channel
amplitude of a channel for
transmitting the first data frame,
and determine, based on the first
synchronization code, whether to
receive the first data

S1503

FIG. 15

First preamble　　First AC　　First synchronization code　　First data

(a)

First preamble　　First synchronization code　　First AC　　First data

(b)

First preamble　　First synchronization code　　First AC　　First data

First symbol

(c)

First preamble　　First AC　　First synchronization code　　First data

(d)

First preamble　　First AC　　First synchronization code　　First data

(e)

First preamble　　First synchronization code　　First AC　　First packet header　　First data

(f)

FIG. 16

Bluetooth communication
apparatus 170

Processing module ──── 1701

Transceiver module ──── 1702

FIG. 17

Bluetooth communication
apparatus 180

Transceiver module ──── 1801

Processing module ──── 1802

FIG. 18

## INTERNATIONAL SEARCH REPORT

| International application No. |
|---|
| **PCT/CN2020/142532** |

| A. | CLASSIFICATION OF SUBJECT MATTER |
|---|---|

H04L 1/00(2006.01)i

According to International Patent Classification (IPC) or to both national classification and IPC

| B. | FIELDS SEARCHED |
|---|---|

Minimum documentation searched (classification system followed by classification symbols)

H04L; H04W; H04B

Documentation searched other than minimum documentation to the extent that such documents are included in the fields searched

Electronic data base consulted during the international search (name of data base and, where practicable, search terms used)

CNPAT, CNKI, WPI, EPODOC: 蓝牙, BT, bluetooth, BLE, 同步, 码, 序列, 域, 字, Synchronized, SYNC, 伪随机, PN, m, gold, kasami, De Brujin, 接入码, access code, AC, 自相关, 互相关, 优, 好, auto-correlation, cross-correlation, better

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111065083 A (RDA MICROELECTRONICS TECHNOLOGIES (SHANGHAI) CO., LTD.) 24 April 2020 (2020-04-24) <br> description, paragraphs 41-72, figure 4 | 1-36 |
| A | US 2009086711 A1 (STMICROELECTRONICS BELGIUM NV) 02 April 2009 (2009-04-02) <br> entire document | 1-36 |
| A | CN 111385779 A (HUAWEI DEVICE CO., LTD.) 07 July 2020 (2020-07-07) <br> entire document | 1-36 |
| A | US 2018212669 A1 (APPLE INC.) 26 July 2018 (2018-07-26) <br> entire document | 1-36 |
| A | US 2009180464 A1 (WALLEY, John et al.) 16 July 2009 (2009-07-16) <br> entire document | 1-36 |
| A | CN 109067428 A (GUANGDONG UNIVERSITY OF TECHNOLOGY) 21 December 2018 (2018-12-21) <br> entire document | 1-36 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 September 2021** | **28 September 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | | | International application No. |
| --- | --- | --- | --- |
| | | | **PCT/CN2020/142532** |

| Patent document cited in search report | | | Publication date (day/month/year) | Patent family member(s) | | | Publication date (day/month/year) |
| --- | --- | --- | --- | --- | --- | --- | --- |
| CN | 111065083 | A | 24 April 2020 | None | | | |
| US | 2009086711 | A1 | 02 April 2009 | US | 8014379 | B2 | 06 September 2011 |
| CN | 111385779 | A | 07 July 2020 | None | | | |
| US | 2018212669 | A1 | 26 July 2018 | US | 10862567 | B2 | 08 December 2020 |
| US | 2009180464 | A1 | 16 July 2009 | US | 8599824 | B2 | 03 December 2013 |
| CN | 109067428 | A | 21 December 2018 | CN | 109067428 | B | 11 December 2020 |

Form PCT/ISA/210 (patent family annex) (January 2015)